# EUROPEAN PATENT APPLICATION

(11) **EP 2 958 374 A1**
(43) Date of publication of application: **23.12.2015**
(21) Application number: 14751257.8
(22) Date of filing: 13.02.2014
(51) Int. Cl.: H04W 48/16, H04W 52/02, H04W 88/06

(54) **MOBILE-STATION DEVICE, INTEGRATED CIRCUIT, COMMUNICATION METHOD, AND COMMUNICATION PROGRAM**

(30) Priority: 15.02.2013 JP 2013028189; 25.02.2013 JP 2013035025
(71) Applicant: Sharp Kabushiki Kaisha, Osaka-shi, Osaka 545-8522 (JP)
(72) Inventor: SAWADA Shinichi, Osaka-shi, Osaka 545-8522 (JP)
(74) Representative: Müller Hoffmann & Partner
(86) International application number: PCT/JP2014/053308
(87) International publication number: WO 2014/126142

(57) **Abstract**

A mobile station apparatus includes a use environment information receiving unit configured to receive use environment information that represents a use environment of the mobile station apparatus, and a synchronization processing unit configured to perform a synchronization process on a reception wave from a base station apparatus. In a state where the mobile station apparatus is unable to receive a radio wave from the base station apparatus, a time taken by the synchronization processing unit when attempting the synchronization process is reduced on the basis of the use environment information previously received by the use environment information receiving unit.

## Description

### Technical Field

The present invention relates to a mobile station apparatus, an integrated circuit, a communication method, and a communication program.

This application claims priority of Patent Application No. 2013-028189 filed in Japan on February 15, 2013 and Patent Application No. 2013-035025 filed in Japan on February 25, 2013, the entire contents of which are incorporated herein by reference.

### Background Art

Due to the widespread use of wireless communication with mobile phones or the like, it is desired that the finite frequency resources be utilized by as many users as possible. In wireless communication systems for mobile phones, a plurality of base station apparatuses are connected to one another mainly by wires. Also, each of the base station apparatuses is wirelessly connected to mobile station apparatuses used by users. Although an area in which communication can be performed in wireless communication systems is limited to a range (cell) over which a radio wave reaches from each base station apparatus, arranging a plurality of base station apparatuses at different locations makes it possible to perform communication at locations within a wide range. Also, wireless communication systems of different cell arrangements or different frequency bands may be used depending on countries in which the systems are operated, carriers, communication services, or the like.

On the other hand, a mobile station apparatus may be moved to outside of a range of an area (cell) over which a radio wave reaches from a base station apparatus (to an out-of-service area). The mobile station apparatus performs processing (cell search) for searching for a base station apparatus which the mobile station apparatus can communicate with in order to become able to perform communication in the out-of-service area. The cell search is mainly composed of measurement of a reception strength and a synchronization process. After a successful cell search, the mobile station apparatus becomes able to communicate with other mobile station apparatuses and the base station apparatus.

During a cell search performed in an out-of-service area (for example, a cell search performed in response to movement from Japan to Europe), the mobile station apparatus measures the reception strength on all receivable channels in an available communication system and then performs a synchronization process in general. For this reason, the cell search has drawbacks in that it requires a long time and increases the power consumption.

Accordingly, in a communication method described in PTL 1, (1) in the case where a mobile station apparatus capable of utilizing communication systems A and B is in an out-of-service area of the communication systems, a conventional cell search (cell search for all channels) is performed as planned; (2) upon discovering, for example, a base station of the system A during the cell search, the mobile station apparatus obtains a country code (MCC: Mobile Country Code) from broadcast information, and searches lists stored in a main body storage section and an external storage section for whether or not a frequency that meets a combination of the country information and an operator is stored in the lists; and (3) if such a frequency is stored, for example, for the system B, the mobile station apparatus performs a cell search for the search-target frequency. In the case where the system B is not stored, the mobile station apparatus does not perform a cell search. As described above, the search-target frequency is limited to the frequency used by an operator that provides a communication service in that country prior to the cell search, whereby an unnecessary cell search for obtaining broadcast information of an operator that does not provide a communication service is omitted.

### Citation List

### Patent Literature

PTL 1: Japanese Unexamined Patent Application Publication No. 2004-23391

### Summary of Invention

### Technical Problem

In the communication method according to PTL 1, a cell search may be restricted even in a frequency band that is made available to a mobile station apparatus, such as a mobile phone. For example, there is a problem in that, in the case where a frequency band that is in operation is changed to a cell-search restricted frequency band at a certain time point, a cell search is not performed and consequently communication is disabled. The communication method according to PTL 1 also involves a problem in that, in the case where it is determined that a cell search is to be performed using stored history information, many reception waves due to noise or weak interfering waves of frequency bands that are not in operation are detected and an unnecessary synchronization process is performed.

The present invention has been made in view of the above-described problems, and one aspect of the present invention provides a mobile station apparatus, an integrated circuit, a communication method, and a communication program that reduce the processing time and power consumption related to a cell search.

### Solution to Problem

The present invention has been made in order to solve the above-described problems, and one aspect of the present invention is a mobile station apparatus including a use environment information receiving unit configured to receive use environment information that represents a use environment of the mobile station apparatus, and a synchronization processing unit configured to perform a synchronization process on a reception wave from a base station apparatus, wherein in a state where the mobile station apparatus is unable to receive a radio wave from the base station apparatus, a time taken by the synchronization processing unit when attempting the synchronization process is reduced on the basis of the use environment information previously received by the use environment information receiving unit.

### Advantageous Effects of Invention

According to one aspect of the present invention, the processing time and power consumption related to a cell search can be reduced.

### Brief Description of Drawings

[Fig. 1] Fig. 1 is a conceptual diagram illustrating a communication system according to a first embodiment of the present invention.
[Fig. 2] Fig. 2 is a schematic block diagram illustrating a configuration of a mobile station apparatus according to the present embodiment.
[Fig. 3] Fig. 3 is a schematic block diagram illustrating a configuration of a control unit according to the present embodiment.
[Fig. 4] Fig. 4 is a diagram illustrating an example of detection-threshold correspondence information according to the present embodiment.
[Fig. 5] Fig. 5 is a diagram illustrating an example of located area history information according to the present embodiment.
[Fig. 6] Fig. 6 is a diagram illustrating an example of received signal strength information.
[Fig. 7] Fig. 7 is a flowchart illustrating a channel selection process according to the present embodiment.
[Fig. 8] Fig. 8 is a flowchart illustrating a synchronization process according to the present embodiment.
[Fig. 9] Fig. 9 is a diagram illustrating an example of detection-threshold correspondence information according to a modification 1-1 of the present embodiment.
[Fig. 10] Fig. 10 is a flowchart illustrating a channel selection process according to the present modification.
[Fig. 11] Fig. 11 is a diagram illustrating an example of detection-threshold correspondence information according to a modification 1-2 of the present embodiment.
[Fig. 12] Fig. 12 is a flowchart illustrating a channel selection process according to the present modification.
[Fig. 13] Fig. 13 is a diagram illustrating an example of detection threshold information according to the present modification.
[Fig. 14] Fig. 14 is a diagram illustrating an example of detection-threshold correspondence information according to a modification 1-3 of the present embodiment.
[Fig. 15] Fig. 15 is a flowchart illustrating a channel selection process according to the present modification.
[Fig. 16] Fig. 16 is a diagram illustrating an example of detection threshold information according to the present modification.
[Fig. 17] Fig. 17 is a schematic block diagram illustrating a configuration of a mobile station apparatus according to a second embodiment of the present invention.
[Fig. 18] Fig. 18 is a schematic block diagram illustrating a configuration of a control unit according to the present embodiment.
[Fig. 19] Fig. 19 is a diagram illustrating an example of detection-threshold correspondence information according to the present embodiment.
[Fig. 20] Fig. 20 is a flowchart illustrating a channel selection process according to the present embodiment.
[Fig. 21] Fig. 21 is a diagram illustrating an example of received signal strength information.
[Fig. 22] Fig. 22 is a conceptual diagram illustrating an example of timings of individual processes of a cell search.
[Fig. 23] Fig. 23 is a flowchart illustrating an example of a channel selection process according to a modification 2-1 of the present embodiment.
[Fig. 24] Fig. 24 is a diagram illustrating an example of detection-threshold correspondence information according to a modification 2-2 of the present embodiment.
[Fig. 25] Fig. 25 is a diagram illustrating an example of detection threshold information according to the present modification.
[Fig. 26] Fig. 26 is a schematic block diagram illustrating a configuration of a mobile station apparatus according to a third embodiment of the present invention.
[Fig. 27] Fig. 27 is a schematic block diagram illustrating a configuration of a control unit according to the present embodiment.
[Fig. 28] Fig. 28 is a diagram illustrating an example of detection-threshold correspondence information according to the present embodiment.
[Fig. 29] Fig. 29 is a flowchart illustrating a channel selection process according to the present embodiment.
[Fig. 30] Fig. 30 is a diagram illustrating another example of detection-threshold correspondence information according to the present embodiment.
[Fig. 31] Fig. 31 is a schematic block diagram illustrating a configuration of a mobile station apparatus according to a fourth embodiment of the present invention.
[Fig. 32] Fig. 32 is a schematic block diagram illustrating a configuration of a control unit according to the present embodiment.
[Fig. 33] Fig. 33 is a diagram illustrating an example of received signal strength information.
[Fig. 34] Fig. 34 is a diagram illustrating an example of how detection threshold information according to the present embodiment changes.
[Fig. 35] Fig. 35 is a conceptual diagram illustrating a communication system according to a fifth embodiment of the present invention.
[Fig. 36] Fig. 36 is a schematic block diagram illustrating a configuration of a mobile station apparatus according to the present embodiment.
[Fig. 37] Fig. 37 is a schematic block diagram illustrating a configuration of a control unit according to the present embodiment.
[Fig. 38] Fig. 38 is a diagram illustrating an example of received signal strength information.
[Fig. 39] Fig. 39 is a flowchart illustrating a channel selection process according to the present embodiment.
[Fig. 40] Fig. 40 is a flowchart illustrating a synchronization process according to the present embodiment.
[Fig. 41] Fig. 41 is a schematic block diagram illustrating a configuration of a mobile station apparatus according to a sixth embodiment of the present invention.
[Fig. 42] Fig. 42 is a schematic block diagram illustrating a configuration of a control unit according to the present embodiment.
[Fig. 43] Fig. 43 is a diagram illustrating an example of located area history information according to the present embodiment.
[Fig. 44] Fig. 44 is a diagram illustrating an example of number-of-channels correspondence information according to the present embodiment.
[Fig. 45] Fig. 45 is a flowchart illustrating an example of a channel selection process according to the present embodiment.
[Fig. 46] Fig. 46 is a diagram illustrating an example of number-of-channels correspondence information according to a modification 6-1 of the present embodiment.
[Fig. 47] Fig. 47 is a flowchart illustrating a channel selection process according to the present modification.
[Fig. 48] Fig. 48 is a diagram illustrating an example of number-of-channels correspondence information according to a modification 6-2 of the present embodiment.
[Fig. 49] Fig. 49 is a flowchart illustrating a channel selection process according to the present modification.
[Fig. 50] Fig. 50 is a diagram illustrating an example of number-of-channels correspondence information according to a modification 6-3 of the present embodiment.
[Fig. 51] Fig. 51 is a flowchart illustrating a channel selection process according to the present modification.
[Fig. 52] Fig. 52 is a schematic block diagram illustrating a configuration of a mobile station apparatus according to a seventh embodiment of the present invention.
[Fig. 53] Fig. 53 is a schematic block diagram illustrating a configuration of a control unit according to the present embodiment.
[Fig. 54] Fig. 54 is a diagram illustrating an example of number-of-channels correspondence information according to the present embodiment.
[Fig. 55] Fig. 55 is a flowchart illustrating a channel selection process according to the present embodiment.
[Fig. 56] Fig. 56 is a conceptual diagram illustrating an example of timings of individual processes of a cell search.
[Fig. 57] Fig. 57 is a flowchart illustrating an example of a channel selection process according to a modification 7-1 of the present embodiment.
[Fig. 58] Fig. 58 is a diagram illustrating an example of number-of-channels correspondence information according to a modification 7-2 of the present embodiment.
[Fig. 59] Fig. 59 is a schematic block diagram illustrating a configuration of a mobile station apparatus 2025 according to an eighth embodiment of the present invention.
[Fig. 60] Fig. 60 is a schematic block diagram illustrating a configuration of a control unit according to the present embodiment.
[Fig. 61] Fig. 61 is a diagram illustrating an example of number-of-channels correspondence information according to the present embodiment.
[Fig. 62] Fig. 62 is a flowchart illustrating an example of a channel selection process according to the present embodiment.
[Fig. 63] Fig. 63 is a diagram illustrating another example of number-of-channels correspondence information according to the present embodiment.
[Fig. 64] Fig. 64 is a schematic block diagram illustrating a configuration of a mobile station apparatus according to a ninth embodiment of the present invention.
[Fig. 65] Fig. 65 is a schematic block diagram illustrating a configuration of a control unit according to the present embodiment.
[Fig. 66] Fig. 66 is a diagram illustrating an example of how number-of-channels information according to the present embodiment changes.

### Description of Embodiments

### (First Embodiment)

Embodiments of the present invention will be described below with reference to the drawings.

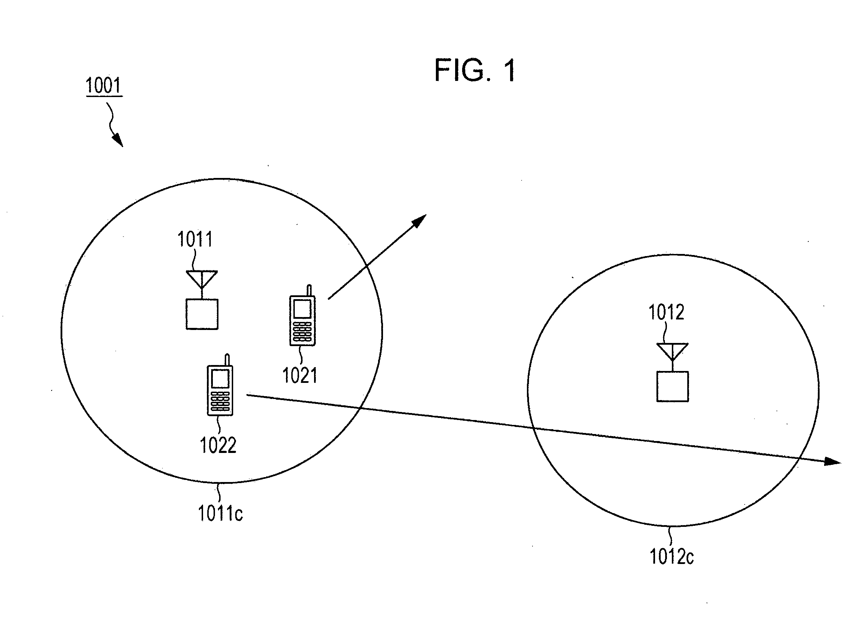

Fig. 1 is a conceptual diagram illustrating a communication system 1001 according to the present embodiment.

The communication system 1001 includes a plurality of (two in an example illustrated in Fig. 1) base station apparatuses 1011 and 1012 and a plurality of (two in the example illustrated in Fig. 1) mobile station apparatuses 1021 and 1022.

The base station apparatuses 1011 and 1012 are apparatuses that transmit and receive signals using radio waves between a core network (CN, not illustrated) and the mobile station apparatuses 1021 and 1022 located within cells 1011c and 1012c. The base station apparatuses 1011 and 1012 each may be simply referred to as an eNB (evolved Node B). The cells 1011c and 1012c are areas in which the base station apparatuses 1011 and 1012, respectively, are capable of transmitting and receiving signals to and from the mobile station apparatuses 1021 and 1022 using radio waves. The base station apparatuses 1011 and 1012 are arranged at different locations.

The base station apparatuses 1011 and 1012 may be either large-scale base station apparatuses (macrocells) or small-scale base station apparatuses (for example, microcells, picocells, or femtocells). A macrocell refers to the cell 1011c or 1012c having a radius of approximately several hundreds of meters to approximately several kilometers, or a base station apparatus having such a cell. A microcell refers to the cell 1011c or 1012c having a radius of approximately several tens of meters to approximately several hundreds of meters, or a base station apparatus having such a cell. A picocell refers to the cell 1011c or 1012c having a radius of approximately several meters to approximately several tens of meters, or a base station apparatus having such a cell. A femtocell refers to the cell 1011c or 1012c having a radius of approximately several meters or smaller, or a base station apparatus having such a cell. The femtocell is also referred to as a home base station apparatus (HeNB: Home eNodeB). Accordingly, the cells 1011c and 1012c and the like connected to one network form a service area in which communication can be performed using the network.

A network connected to the base station apparatuses 1011 and 1012 and the like is, for example, a PLMN (Public Land Mobile Network, public wireless communication network). A PLMN is a network in which a communication carrier provides communication services to users (subscribers). The adopted communication scheme and frequency band, the connected base station apparatuses 1011 and 1012, and so forth may differ from country to country in which or from carrier to carrier by which the network is operated. The communication scheme is, for example, LTE (Long Term Evolution), LTE-A (LTE-Advanced), W-CDMA (Wideband Code Division Multiple Access), GSM (registered trademark) (Global System for Mobile Communications), or the like.

Each of the mobile station apparatuses 1021 and 1022 is an apparatus that realizes communication with its communication partner by transmitting and receiving signals using radio waves via the base station apparatus 1011 or 1012. The mobile station apparatuses 1021 and 1022 are also referred to as terminal apparatuses or user equipments (UEs). The mobile station apparatuses 1021 and 1022 are, for example, mobile phones, multifunction mobile phones (including so-called smartphones), tablet terminal apparatuses, or the like.

A service area does not necessarily occupy the entire space, as illustrated in Fig. 1. The mobile station apparatuses 1021 and 1022 may be unable to receive signals from the base station apparatuses 1011 and 1012 because of arrangement of the base station apparatuses 1011 and 1012, output of radio waves thereof, arrangement of buildings and other obstacles, noise sources, or the like.
An arrow originating from the mobile station apparatus 1021 indicates that the mobile station apparatus 1021 is originally located at a location belonging to the cell 1011c, and then is moved to outside of the service area including the cell 1011c (to an out-of-service area). On the other hand, an arrow originating from the mobile station apparatus 1022 indicates that the mobile station apparatus 1022 is originally located at a location belonging to the cell 1011c, and then is moved sequentially to the out-of-service area, the cell 1012c, and the out-of-service area. The mobile station apparatuses 1021 and 1022 search (perform a cell search) for the base station apparatus 1011 or 1012 related to a cell to which the mobile station apparatuses 1021 and 1022 belong (in which they are located) during booting or in a state in which the mobile station apparatuses 1021 and 1022 are once located in the out-of-service area and become unable to perform communication. As a result of a successful search, the mobile station apparatuses 1021 and 1022 become able to communicate with the base station apparatus 1011 or 1012.

### (Configuration of Mobile Station Apparatus)

Next, a configuration of the mobile station apparatus 1021 according to the present embodiment will be described. The mobile station apparatus 1022 has a configuration similar to that of the mobile station apparatus 1021, and thus a description regarding the mobile station apparatus 1021 is incorporated herein by reference. In the following description, a case where the mobile station apparatus 1021 performs communication mainly using the base station apparatus 1011 is used as an example; however, the present embodiment is not limited to this example, and the mobile station apparatus 1021 may use another base station apparatus, for example, the base station apparatus 1012.

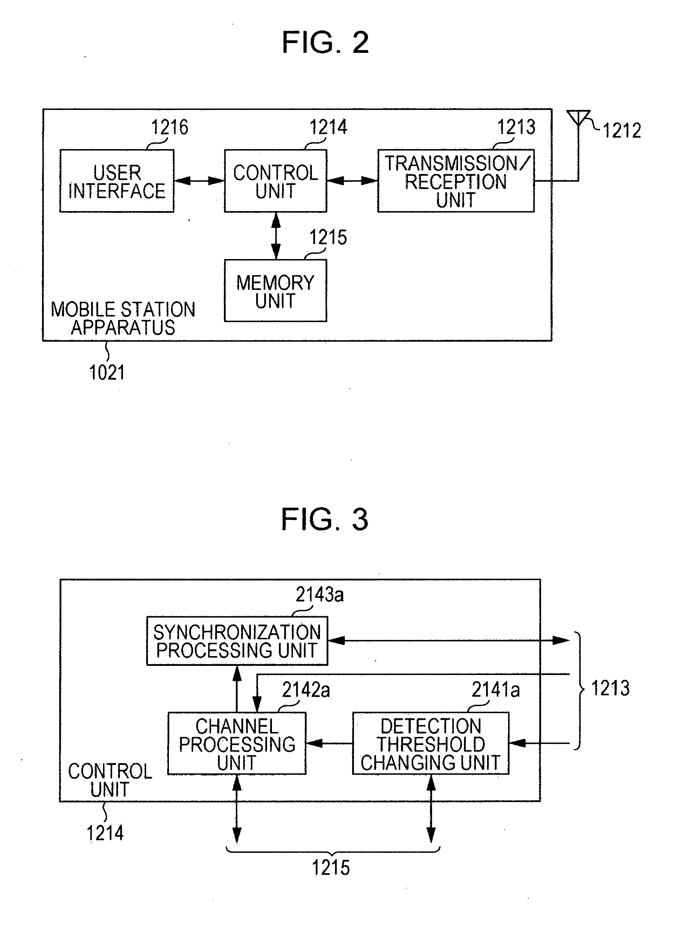

Fig. 2 is a schematic block diagram illustrating a configuration of the mobile station apparatus 1021 according to the present embodiment.

The mobile station apparatus 1021 includes an antenna 1212, a transmission/reception unit 1213, a control unit 1214, a memory unit (storage unit) 1215, and a user interface 1216.

The antenna 1212 receives a reception wave from the base station apparatus 1011, that is, a receive signal of a radio frequency band that has reached it in a form of a radio wave, and outputs the received signal to the transmission/reception unit 1213. The antenna 1212 transmits a transmit signal of a radio frequency band input thereto from the transmission/reception unit 1213 to the base station apparatus 1011 in a form of a radio wave.

The transmission/reception unit 1213 converts the received signal of the radio frequency band input thereto from the antenna 1212 into a received signal of a base frequency band, and outputs the resulting received signal to the control unit 1214. The transmission/reception unit 1213 converts a transmit signal of a base frequency band input thereto from the control unit 1214 into a radio frequency band, and outputs the resulting transmit signal to the antenna 1212.

Also, the transmission/reception unit 1213 measures, for each channel, a reception level (received signal strength, RSSI: Received Signal Strength Indicator) received from the base station apparatus 1011. The transmission/reception unit 1213 outputs received signal strength information representing the received signal strength measured for each channel to the control unit 1214. Here, a channel indicates a frequency or frequency band that constitutes a radio wave used for communication, and a frequency or frequency band serving as units of data allocation. For example, in the GSM (registered trademark) scheme, individual channels are allocated at intervals of 200 kHz. Also, in the LTE scheme, channels are also referred to as subcarriers, and a bandwidth of one channel is 15 kHz. In the LTE scheme, a plurality of (for example, approximately 600 in the case where the bandwidth is 10 MHz) channels are used for communication between the mobile station apparatus 1021 and the base station apparatus 1011.

The following description employs the case of mainly using the received signal strength (RSSI) as an index of the reception level as an example; however, in the present embodiment, an index of the reception level such as RSRP (Reference Signal Received Power) or RSRQ (Reference Signal Received Quality) may be used.

The control unit 1214 controls processes performed by the mobile station apparatus 1021. The control unit 1214 controls, for example, inputting of a received signal from the transmission/reception unit 1213 and outputting of a transmit signal to the transmission/reception unit 1213.

The control unit 1214 outputs, to the user interface 1216, user data among the received signal input thereto from the transmission/reception unit 1213; and outputs, to the transmission/reception unit 1213, user data input thereto from the user interface 1216 as a transmit signal. Here, user data is a signal that is transmitted or received by the mobile station apparatus 1022 serving as a communication partner, and is, for example, an audio signal, a video signal, or text data.

The control unit 1214 controls starting or stopping of a process, changing of a mode, or the like in accordance with an operation input signal input thereto from the user interface 1216; and outputs the obtained image signal, text signal, or the like to the user interface 1216. The control unit 1214 sometimes uses data read from the memory unit 1215 when it processes the data. Also, the control unit 1214 stores data generated through a process in the memory unit 1215. The control unit 1214 determines that the mobile station apparatus is located in an out-of-service area in the case where the received signal strength is equal to a predetermined detection threshold (for example, -120 (dBm)) or lower than the detection threshold in all the receivable frequency bands, for example. The control unit 1214 determines that the mobile station apparatus is located within the area of the cell 1011c in the case where the received signal strength exceeds the detection threshold. A more detailed configuration of the control unit 1214 will be described later.

The memory unit 1215 pre-stores data used in processes performed by the control unit 1214, for example, detection threshold information representing a detection threshold used for detecting a frequency band of a received signal. Also, the memory unit 1215 stores data obtained by the control unit 1214. In the following description, the detection threshold information may be simply referred to as a detection threshold.

The user interface 1216 presents, to the user, information based on the received signal input thereto from the control unit 1214; and outputs, to the control unit 1214, information accepted from the user.

For example, the user interface 1216 causes a sound reproduction unit (for example, a speaker, not illustrated) to reproduce sound based on an audio signal input thereto from the control unit 1214; and outputs an audio signal of sound recorded by a sound collecting unit (for example, a microphone, not illustrated) to the control unit 1214.

Also, the user interface 1216 causes an image display unit (for example, a display, not illustrated) to display an image represented by an image signal input thereto from the control unit 1214; and outputs an image signal representing an image captured by an image capturing unit (for example, a camera, not illustrated) to the control unit 1214.

The user interface 1216 outputs an operation input signal corresponding to a user input operation detected by an operation input unit (for example, a touch sensor, not illustrated) to the control unit 1214. The operation input unit and the image display unit may be integrated into a touchscreen. Also, some or all of the sound reproduction unit, the sound collecting unit, the image display unit, the image capturing unit, and the operation input unit may be integrally formed in the mobile station apparatus 1021 or may be provided separately from the mobile station apparatus 1021.

### (Configuration of Control Unit)

Next, a configuration of the control unit 1214 according to the present embodiment will be described.

Fig. 3 is a schematic block diagram illustrating a configuration of the control unit 1214 according to the present embodiment.

The control unit 1214 includes a detection threshold changing unit 2141a, a channel processing unit (channel selecting unit) 2142a, and a synchronization processing unit 2143a. Illustration of the user interface 1216 is omitted in Fig. 3.

The detection threshold changing unit 2141a determines a detection threshold used for detecting a frequency band (channel) of a received signal received from the base station apparatus 1011, on the basis of use environment information representing a use environment of the mobile station apparatus 1021. Here, the detection threshold changing unit 2141a reads, for example, located area history information from the memory unit 1215, and extracts country information from the latest located area history information entry of the read located area history information.
The located area history information is information representing a history regarding the base station apparatus 1011 related to a cell to which the mobile station apparatus 1021 belongs or regarding a network connected to the base station apparatus 1011. The located area history information includes communication operator information and frequency band information as well as the country information. The located area history information is information included in broadcast information (described later).

The detection threshold changing unit 2141a reads detection threshold information corresponding to the extracted country information from detection-threshold correspondence information stored in the memory unit 1215, and outputs the read detection threshold information to the channel processing unit 2142a. In this way, the detection threshold set in the channel processing unit 2142a is changed. The detection-threshold correspondence information is information in which the country information serving as the use environment information is associated with the detection threshold. An example of the detection-threshold correspondence information will be described later.

The channel processing unit 2142a selects, from the received signal received from the base station apparatus 1011, a channel having a strength that is higher than the detection threshold represented by the detection threshold information input thereto from the detection threshold changing unit 2141a. Here, the received signal strength information for each channel is input to the channel processing unit 2142a from the transmission/reception unit 1213, and the channel processing unit 2142a compares the received signal strength with the detection threshold represented by the detection threshold information input thereto from the detection threshold changing unit 2141a. The channel processing unit 2142a selects a channel having a received signal strength represented by the input received signal strength information that is larger than the detection threshold represented by the input detection threshold information. The channel processing unit 2142a outputs channel selection information representing the selected channel to the synchronization processing unit 2143a. Examples of the channel selection process will be described later.

Also, immediately after a cell search (described later) has ended, broadcast information is input to the channel processing unit 2142a from the transmission/reception unit 1213 as a received signal from the base station apparatus, and the channel processing unit 2142a extracts located area history information from the input broadcast information. The channel processing unit 2142a may store the extracted located area history information in the memory unit 1215. Alternatively, the channel processing unit 2142a may extract the located area history information from demodulated broadcast information obtained through a synchronization process (described later) by the synchronization processing unit 2143a, and may store the extracted located area history information in the memory unit 1215.

The synchronization processing unit 2143a performs a synchronization process on a reception wave of a channel represented by the channel selection information input thereto from the channel processing unit 2142a. Here, the channel selection information is input to the synchronization processing unit 2143a from the channel processing unit 2142a, and broadcast information which has been modulated for each channel is input to the synchronization processing unit 2143a from the transmission/reception unit 1213 as a received signal received from the base station apparatus 1011. The synchronization processing unit 2143a detects a synchronization signal included in the broadcast information input for each channel represented by the input channel selection information. The synchronization processing unit 2143a identifies data that configures the broadcast information using the detected synchronization signal, and decodes the identified data to obtain the broadcast information. The synchronization processing unit 2143a attempts such a process until a channel (usable channel) for which both detection of a synchronization signal and demodulation of broadcast information are successful is detected. The synchronization processing unit 2143a outputs a location registration request signal to the transmission/reception unit 1213 as a transmit signal that uses the usable channel intended for the base station apparatus 1011 (camp-on). A location registration request signal is a signal used to make a request for registration of the mobile station apparatus as the one used for communication. Thereafter, the transmission/reception unit 1213 receives a location registration completion signal and located area history information from the base station apparatus 1011. In this way, the mobile station apparatus 1021 becomes able to perform communication. Examples of the synchronization process will be described later. The channel selection process performed by the channel processing unit 2142a and the synchronization process performed by the synchronization processing unit 2143a, which are described above, are collectively referred to as a cell search.

### (Example of Detection-Threshold Correspondence Information)

Next, an example of the detection-threshold correspondence information according to the present embodiment will be described.

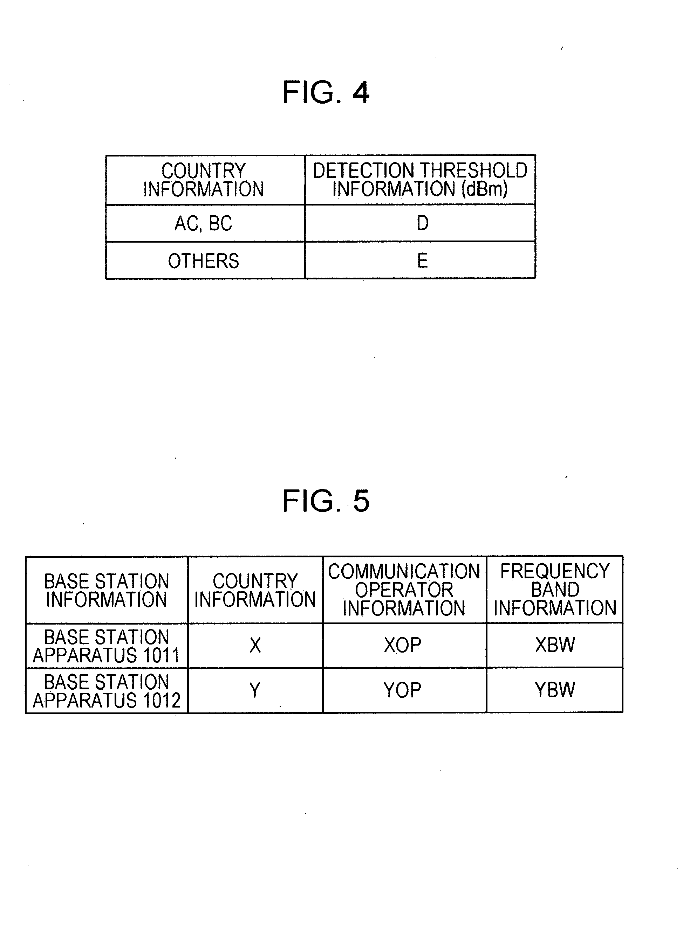

Fig. 4 is a diagram illustrating an example of the detection-threshold correspondence information according to the present embodiment.

In Fig. 4, the left column shows the country information serving as the use environment information, and the right column shows detection threshold information.

The second row indicates that pieces of country information AC and BC are associated with a detection threshold D. The third row indicates that country information other than AC and BC is associated with a detection threshold E. Accordingly, in the case where the country information AC is extracted from the located area history information, the detection threshold changing unit 2141a sets the detection threshold D. In the case where the country information other than AC and BC (for example, country information CC) is extracted from the located area history information, the detection threshold changing unit 2141a sets the detection threshold E. In the case where no located area history information is stored such as immediately after the mobile station apparatus 1021 has been shipped, the detection threshold changing unit 2141a also sets the detection threshold E.

Now, the pieces of country information AC and BC represent countries in which a network that can be used by the mobile station apparatus 1021 is operated, and the detection threshold D (for example, -105 (dBm)) is smaller than the detection threshold E (for example, -90 (dBm)).

When the mobile station apparatus 1021 is moved to the out-of-service area after being located in the country in which the usable network is operated, the detection threshold D lower than the detection threshold E is selected.

With this configuration, even when the mobile station apparatus 1021 is located at a location where a radio wave does not reach from the base station apparatus 1011 or a location where a radio wave is difficult to reach (for example, a remote location), channel selection can be made more successful using a weak received signal.

On the other hand, when the mobile station apparatus 1021 is operating in a country in which the usable network is not operated, such as in a country represented by the country information CC, the detection threshold E higher than the detection threshold D is selected. This can prevent the mobile station apparatus 1021 from erroneously selecting noise, for example, ambient noise or white noise, or a weak received signal from another system.

Note that, in the present embodiment, the country information and country's frequency band information which represents a frequency band used in the country may be associated with each other in the detection-threshold correspondence information stored in the memory unit 1215. In such a case, the detection threshold changing unit 2141a selects the detection threshold information (for example, the detection threshold D) for the country's frequency band (for example, 800-MHz band or 900-MHz band) corresponding to the country information extracted from the located area history information. For another frequency band (for example, 1800-MHz band or 1900-MHz band) that can be used by the mobile station apparatus 1021, the detection threshold changing unit 2141a determines a detection threshold (for example, the detection threshold E) that is higher than the detection threshold information for the country's frequency band by a predetermined value.

This can make channel detection more successful in a frequency band used in the country. Also, this can prevent erroneous detection of a received signal such as noise in the other frequency bands.

### (Example of Located Area History Information)

Next, an example of the located area history information according to the present embodiment will be described.

Fig. 5 is a diagram illustrating an example of the located area history information according to the present embodiment.

The located area history information illustrated in Fig. 5 is obtained when the mobile station apparatus 1022 (Fig. 1) is moved from a location belonging to the cell 1011c of the base station apparatus 1011 to the area of the cell 1012c through the out-of-service area.

Fig. 5 shows, sequentially from the leftmost column to the right side, base station information, country information, communication operator information, and frequency band information. The base station information is information representing a base station apparatus that covers an area in which the mobile station apparatus 1022 is located. The country information is information (MCC: Mobile Country Code) representing a country which is an area in which a network connected to the base station apparatus is operated. The communication operator information is information (MNC: Mobile Network Code) representing an operator (carrier) that operates the network connected to the base station apparatus. A combination of MCC and MNC serves as PLMN identification information (PLMN Identify). The frequency band information is information representing a frequency band on which the network connected to the base station apparatus is operated, that is, a frequency band that can be used by the base station apparatus. These pieces of information are included in broadcast information (BCCH broadcast information) that has been mapped to and received on a BCCH (Broadcast Control Channel). The memory unit 1215 may store, as the located area history information, not only the latest information but also information obtained when the mobile station apparatus has been located in areas before. In such a case, after the number of pieces of located area history information stored in the memory unit 1215 has reached a predetermined upper limit (for example, 10), the channel processing unit 2142a may delete the oldest information.

In the second row of Fig. 5, country information X, communication operator information XOP, and frequency band information XBW are associated with the base station apparatus 1011. In the third row, country information Y, communication operator information YOP, and frequency band information YBW are associated with the base station apparatus 1012.

The pieces of country information X and Y belong to "OTHERS" of the third row of Fig. 4. Thus, the detection threshold changing unit 2141a selects the detection threshold E during a cell search performed before starting communication with the base station apparatuses 1011 and 1012. Note that, in the case where the country information AC or BC is extracted from the located area history information, the detection threshold changing unit 2141a selects the detection threshold D. In the case where no located area history information is stored such as immediately after the mobile station apparatus 1021 has been shipped, the detection threshold changing unit 2141a also sets the detection threshold E.

### (Example of Received Signal Strength Information)

Next, an example of the received signal strength information will be described.

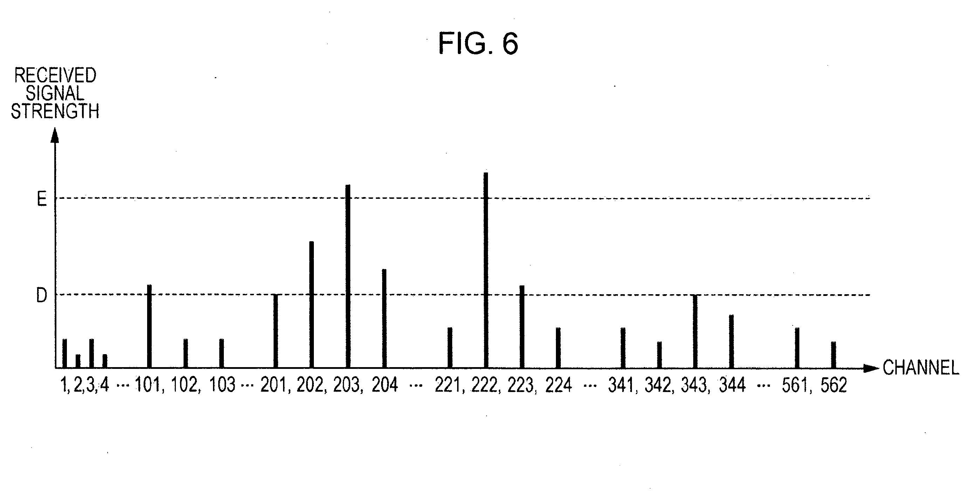

Fig. 6 is a diagram illustrating an example of the received signal strength information.

In Fig. 6, the horizontal axis represents the channel, and the vertical axis represents the received signal strength. Fig. 6 illustrates the detection thresholds D and E illustrated in Fig. 4, and the unit of the vertical axis is omitted. In this example, channels that can be received by the mobile station apparatus 1021 are channels 1-104, 201-224, and 341-564. In Fig. 6, the height of the vertical line for each channel represents the received signal strength of the channel.

In the case where the detection threshold E (for example, -90 (dBm)) is selected by the detection threshold changing unit 2141a, the channel processing unit 2142a selects channels having a received signal strength higher than the detection threshold E from among all the receivable channels. In this case, combinations of the selected channel and the received signal distance are those of two channels, i.e., (203, -88 (dBm)) and (222, -85 (dBm)).

In the case where the detection threshold D (for example, -105 (dBm)) is selected by the detection threshold changing unit 2141a, the channel processing unit 2142a selects channels having a received signal strength higher than the detection threshold D. In this case, combinations of the selected channel and the received signal strength are those of six channels, i.e., (101, -104 (dBm)), (202, -98 (dBm)), (203, -93 (dBm)), (204, -99 (dBm)), (222, -85 (dBm)), and (223, -94 (dBm)). By limiting channels to be handled by the synchronization processing unit 2143a to channels for which the synchronization process is more likely to be successful in this way, an unnecessary synchronization process can be reduced. Also, in the case where a use environment (for example, country information) that is not in use is obtained, the detection threshold changing unit 2141a gives a higher detection threshold, whereby channels selected by the channel processing unit 2142a can be limited and an unnecessary synchronization process performed thereafter can be reduced. On the other hand, even in the case where the use environment has changed in a state where the mobile station apparatus is unable to perform communication as a result of movement to the out-of-service area, the synchronization process is not completely eliminated and a possibility of the mobile station apparatus entering a state in which communication can be performed using a channel having a strong reception wave is left.

It is assumed here that the mobile station apparatus 1021 can use a network that employs the GSM (registered trademark) scheme. The GSM (registered trademark) scheme is not used in Japan but is used in Europe and China. Accordingly, in the case where the country information included in the located area history information represents Japan, the detection threshold E giving a higher value is selected. At this time, a cell search is performed by making the detection threshold higher to lower the sensitivity. In the case where the user is actually located in Japan, noise having a reception strength lower than the detection threshold is no longer erroneously detected as a result of increasing of the detection threshold and limiting of the number of to-be-selected channels, and thus a processing amount of the synchronization process performed thereafter is reduced.

However, there may be cases where the user has moved to the out-of-service area or moved to Europe or China after terminating the operation even if the country information represents Japan. In such cases, even in the state where the detection threshold is made higher, a received signal having a high reception strength is detected, and thus a synchronization process is performed and the user becomes able to perform communication by using a network in which the received signal has been detected.

On the other hand, in the case where the country information included in the located area history information represents Europe, the detection threshold D giving a lower value is selected. At this time, a cell search is performed by making the detection threshold lower to increase the sensitivity.

### (Channel Selection Process)

Next, a channel selection process of a communication process according to the present embodiment will be described.

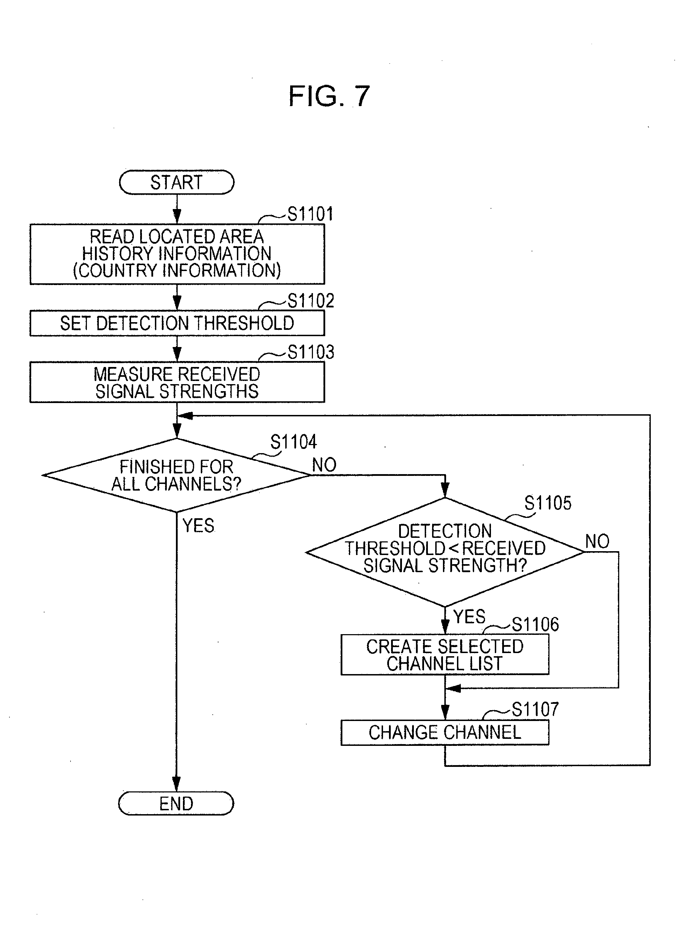

Fig. 7 is a flowchart illustrating a channel selection process according to the present embodiment.
(Step S1101) The detection threshold changing unit 2141a reads the located area history information stored in the memory unit 1215, and extracts the country information from the latest located area history information entry of the read located area history information. Then, the process proceeds to step S1102.
(Step S1102) The detection threshold changing unit 2141a reads the detection threshold information based on the extracted country information from the detection-threshold correspondence information stored in the memory unit 1215, and sets the read detection threshold information in the channel processing unit 2142a. Then, the process proceeds to step S1103.

(Step S1103) The transmission/reception unit 1213 measures, for all receivable channels, received signal strengths of a received signal received from the base station apparatus 1011. Then, the process proceeds to step S1104.
(Step S1104) The channel processing unit 2142a determines whether or not processing of steps S1105 to S1107 has been finished for all receivable channels. If it is determined that the processing has been finished (YES in step S1104), the process of this flowchart ends. If it is determined that the processing has not been finished (NO in step S1104), the process proceeds to step S1105.

(Step S1105) The channel processing unit 2142a determines whether or not the received signal strength measured for a processing target channel (target channel) is larger than the set detection threshold. If it is determined that the received signal strength is larger (YES in step S1105), the process proceeds to step S1106. If it is determined that the received signal strength is not larger (NO in step S1105), the process proceeds to step S1107.
(Step S1106) The channel processing unit 2142a stores the number assigned to the target channel and the received signal strength thereof in the memory unit 1215 in association with each other, and creates a selected channel list. Then, the process proceeds to step S1107.
(Step S1107) The channel processing unit 2142a changes the target channel to another unprocessed channel. Here, the channel processing unit 2142a may change the target channel to the adjacent channel in ascending order of channel number. Then, the process returns to step S1104.

In this way, the selected channel list is generated in which the channel number of each channel having a received signal strength higher than the detection threshold and the received signal strength of the channel are associated with each other.

### (Synchronization Process)

Next, a synchronization process of the communication process according to the present embodiment will be described.

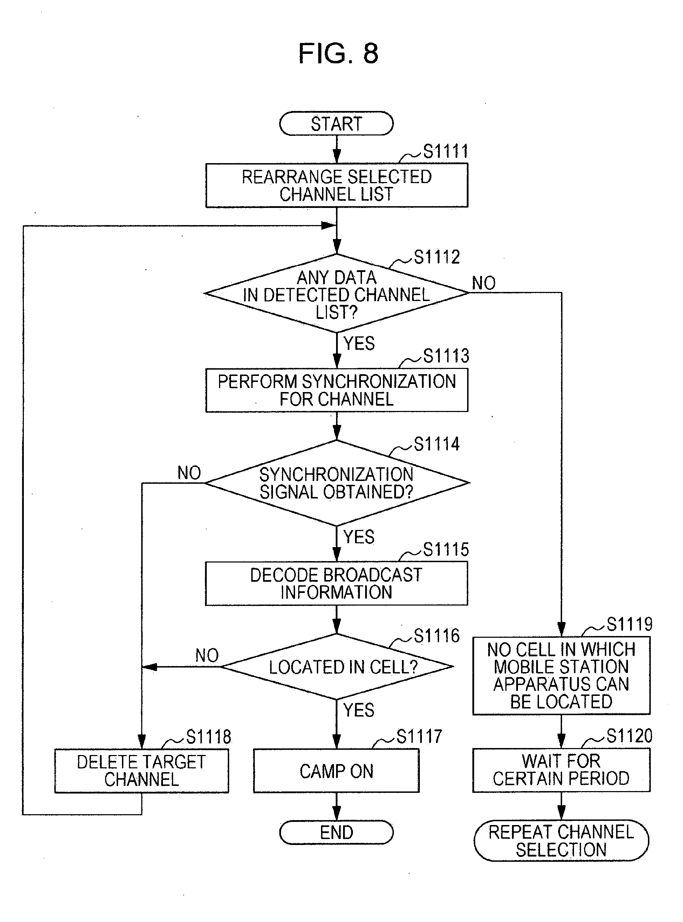

Fig. 8 is a flowchart illustrating a synchronization process according to the present embodiment.
(Step S1111) The channel processing unit 2142a rearranges combinations which are included in the generated selected channel list and in which the channel number and the received signal strength are associated each other, in descending order of the received signal strength, and generates a detected channel list as channel selection information. Then, the process proceeds to step S1112.
(Step S1112) The synchronization processing unit 2143a determines whether or not data is included in the detected channel list. If it is determined that data is included in the detected channel list (YES in step S1112), the process proceeds to step S1113. If it is determined that data is not included in the detected channel list (NO in step S1112), the process proceeds to step S1119.

(Step S1113) The synchronization processing unit 2143a sets the first channel included in the detected channel list as the target channel, and performs a known synchronization process. Here, the synchronization processing unit 2143a detects a synchronization signal assigned to the target channel among the received signal received from the base station apparatus 1011. The synchronization signal is, for example, an SCH synchronization signal mapped to the synchronization channel (SCH). The synchronization signal includes a cell ID for identifying the base station apparatus 1011. Based on the received SCH synchronization signal, the synchronization processing unit 2143a identifies ranges of individual frames in the received signal, that is, frame timings. Then, the process proceeds to step S1114.

(Step S1114) The synchronization processing unit 2143a determines whether or not the SCH synchronization signal has been successfully obtained. In this way, whether or not the synchronization process is successful is determined. If it is determined that the SCH synchronization signal has been successfully obtained (YES in step S1114), the process proceeds to step S1115. If it is determined that the SCH synchronization signal has not been successfully obtained (NO in step S1114), the process proceeds to step S1118.
(Step S1115) The synchronization processing unit 2143a decodes BCCH broadcast information included in the received signal. Then, the process proceeds to step S1116.
(Step S1116) The synchronization processing unit 2143a determines whether or not the mobile station apparatus is located within the cell 1011c of the base station apparatus 1011, that is, whether or not the base station apparatus 1011 is an appropriate base station apparatus, on the basis of the BCCH broadcast information obtained from decoding. For example, the synchronization processing unit 2143a determines whether or not there is PLMN represented by the BCCH broadcast information that matches PLMN represented by preset subscriber information (SIM: Subscriber Identity Module). If it is determined that the mobile station apparatus is located within the cell (YES in step S1116), the process proceeds to step S1117. If it is determined that the mobile station apparatus is not located within the cell (NO in step S1116), the process proceeds to step S1118.

(Step S1117) The synchronization processing unit 2143a transmits a location registration request signal to the base station apparatus 1011 so as to perform location registration (camp-on), and becomes able to perform communication. Thereafter, the process of this flowchart, consequently, the cell search ends.
(Step S1118) The synchronization processing unit 2143a deletes the first channel number and received signal strength of the target channel included in the detected channel list, and updates the target channel to a channel having the next highest received signal strength. Then, the process returns to step S1112.
(Step S1119) The synchronization processing unit 2143a determines that there is no cell in which the mobile station apparatus can be located. Then, the process proceeds to step S1120.
(Step S1120) The mobile station apparatus waits for a certain period (for example, 10 minutes). Thereafter, the channel selection process (Fig. 7) is repeated.

In this way, in the above-described example, by setting the detection threshold on the basis of the country information, a possibility that the minimum number of channels to be subjected to the synchronization process is to be selected is left and the number of to-be-selected channels is reduced. An amount of power consumption for the synchronization process is much (for example, approximately 50-100 times) larger than that of the case where the synchronization process is not performed, that is, that of the channel selection process. Accordingly, by reducing the time and power consumption for the synchronization process of a cell search, the entire power consumption for the cell search can be reduced.

### (Modification 1-1)

Next, a modification 1-1 of the present embodiment will be described. In the present modification, the detection threshold changing unit 2141a may use the communication operator information as the use environment information, instead of the country information. The other points are similar to those of the above-described example.

Here, the detection threshold changing unit 2141a extracts the communication operator information from the latest located area history information entry of the located area history information read from the memory unit 1215. The detection threshold changing unit 2141a reads the detection threshold information corresponding to the extracted communication operator information from the detection-threshold correspondence information stored in the memory unit 1215.

Next, an example of the detection-threshold correspondence information according to the present modification will be described.

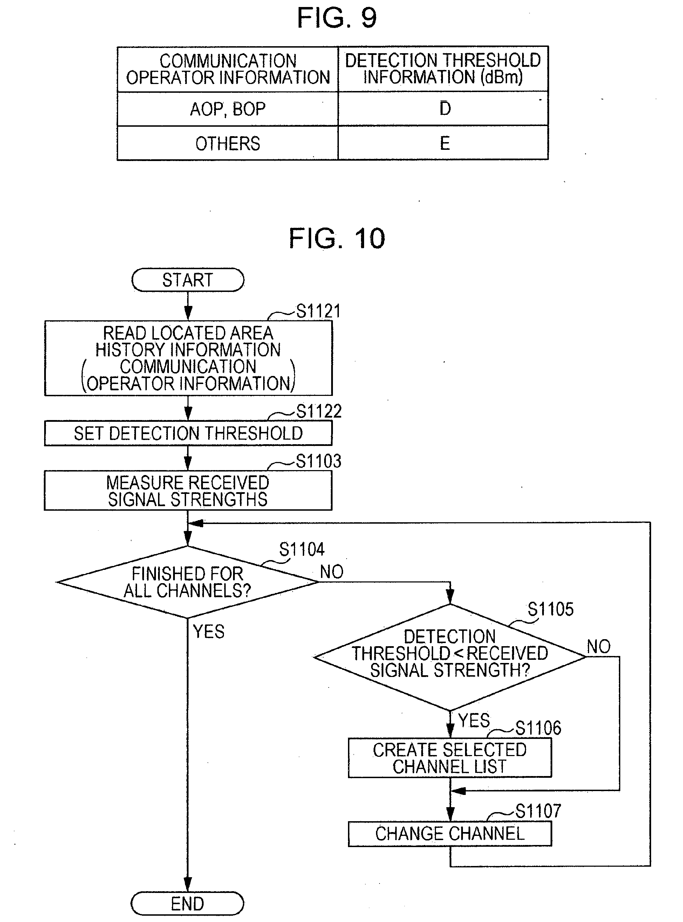

Fig. 9 is a diagram illustrating an example of the detection-threshold correspondence information according to the present modification.

In Fig. 9, the left column shows the communication operator information serving as the use environment information, and the right column shows the detection threshold information.

The second row indicates that pieces of communication operator information AOP and BOP are associated with the detection threshold D. The third row indicates that communication operator information other than AOP and BOP is associated with the detection threshold E. For example, in the case where the communication operator information AOP is extracted from the located area history information, the detection threshold changing unit 2141a sets the detection threshold D. In the case where communication operator information other than AOP and BOP (for example, COP) is extracted from the located area history information, the detection threshold changing unit 2141a sets the detection threshold E. In the case where no located area history information is stored, the detection threshold changing unit 2141a also sets the detection threshold E.

Next, a channel selection process according to the present modification will be described.

Fig. 10 is a flowchart illustrating a channel selection process according to the present modification.

The channel selection process according to the present modification includes steps S1121 and S1122 instead of steps S1101 and S1102 of the channel selection process illustrated in Fig. 7.
(Step S1121) The detection threshold changing unit 2141a reads the located area history information stored in the memory unit 1215, and extracts the communication operator information from the latest located area history information entry from the read located area history information. Then, the process proceeds to step S1122.
(Step S1122) The detection threshold changing unit 2141a reads the detection threshold information based on the extracted communication operator information from the detection-threshold correspondence information stored in the memory unit 1215, and sets the read detection threshold information in the channel processing unit 2142a. Then, the process proceeds to step S1103.

By setting the detection threshold on the basis of the communication operator information in this way, a possibility that the minimum number of channels to be subjected to the synchronization process is to be selected is left and the number of to-be-selected channels is reduced in the present modification. Thus, the time and power consumption for the synchronization process can be reduced.

### (Modification 1-2)

Next, a modification 1-2 of the present embodiment will be described. In the present modification, the detection threshold changing unit 2141a may use the frequency band information (band information) as the use environment information, instead of the country information. A frequency band represented by the frequency band information is composed of a plurality of channels (for example, 72 channels in the case where the bandwidth is 1.4 MHz), and serves as an allocation unit for transmission or reception of data between this apparatus (the mobile station apparatus 1021) and the base station apparatus 1011. The other points are similar to those of the above-described example.

Here, the detection threshold changing unit 2141a extracts the frequency band information from the latest located area history information entry of the located area history information read from the memory unit 1215. The detection threshold changing unit 2141a reads the detection threshold information corresponding to the extracted frequency band information from the detection-threshold correspondence information stored in the memory unit 1215. For frequency bands except for the frequency band represented by the extracted frequency band information among frequency bands that can be used by the mobile station apparatus 1021, the detection threshold changing unit 2141a reads the detection threshold information corresponding to other frequency band information from the memory unit 1215.

Next, an example of the detection-threshold correspondence information according to the present modification will be described.

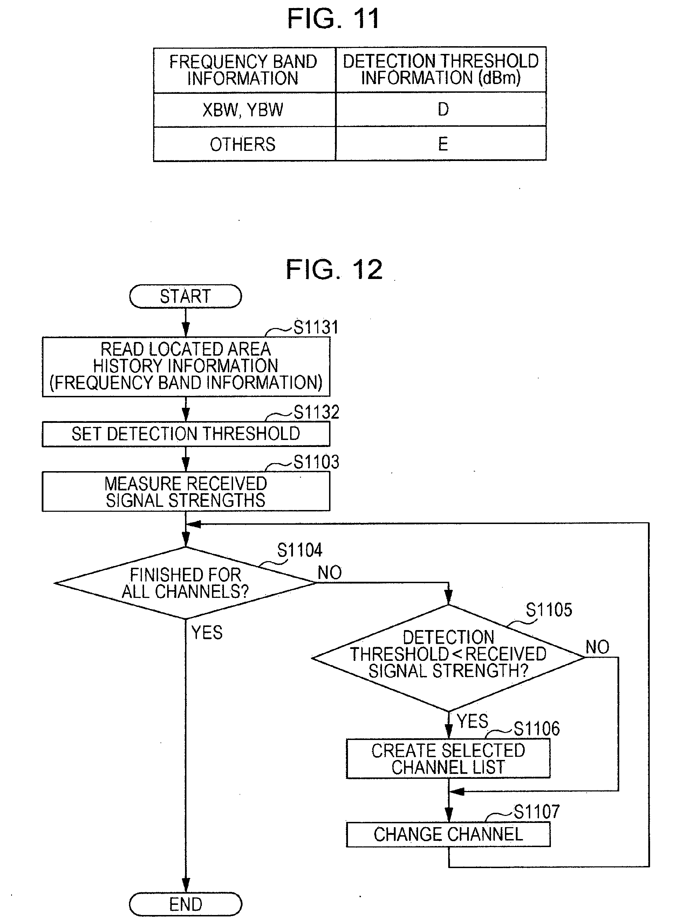

Fig. 11 is a diagram illustrating an example of the detection-threshold correspondence information according to the present modification.

In Fig. 11, the left column shows the frequency band information serving as the use environment information, and the right column shows the detection threshold information.

The second row indicates that pieces of frequency band information XBW and YBW are associated with the detection threshold D. The third row indicates that frequency band information other than XBW and YBW is associated with the detection threshold E.
For example, in the case where the frequency band information XBW is extracted from the located area history information, the detection threshold changing unit 2141a determines the detection threshold D for the frequency band represented by the frequency band information XBW and determines the detection threshold E for the other usable frequency bands. In the case where the frequency band information other than XBW and YBW (for example, ZBW) is extracted from the located area history information, the detection threshold changing unit 2141a determines the detection threshold E for all the frequency bands that can be used by the mobile station apparatus 1021 including frequencies represented by the frequency band information ZBW.

Next, a channel selection process according to the present modification will be described.

Fig. 12 is a flowchart illustrating a channel selection process according to the present modification.

The channel selection process according to the present modification includes steps S1131 and S1132 instead of steps S1101 and S1102 of the channel selection process illustrated in Fig. 7.
(Step S1131) The detection threshold changing unit 2141a reads the located area history information stored in the memory unit 1215, and extracts the frequency band information from the latest located area history information entry of the read located area history information. Then, the process proceeds to step S1132.
(Step S1132) The detection threshold changing unit 2141a reads the detection threshold information corresponding to the extracted frequency band information from the detection-threshold correspondence information stored in the memory unit 1215, among the frequency bands that can be used by the mobile station apparatus 1021. For the frequency bands except for the frequency band represented by the extracted frequency band information among the frequency bands that can be used by the mobile station apparatus 1021, the detection threshold changing unit 2141a reads the detection threshold information corresponding to the other frequency band information from the memory unit 1215. The detection threshold changing unit 2141a sets the individual pieces of detection threshold information for the usable frequency bands in the channel processing unit 2142a. Then, the process proceeds to step S1103.

Next, an example of the detection threshold information according to the present modification will be described.

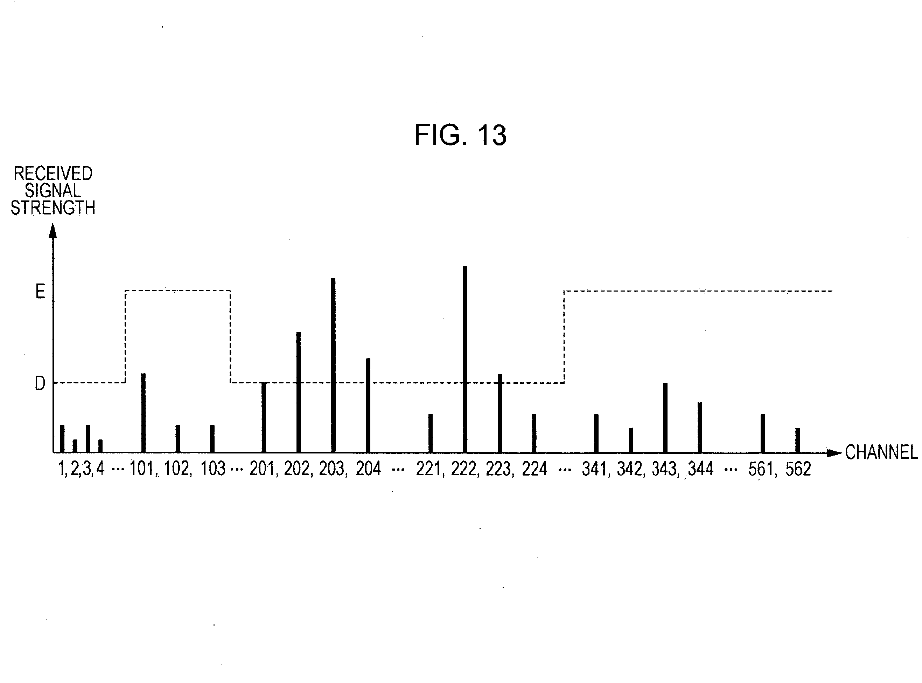

Fig. 13 is a diagram illustrating an example of the detection threshold information according to the present modification.

In Fig. 13, the horizontal axis represents the channel, and the vertical axis represents the received signal strength. In this example, frequency bands that can be used by the mobile station apparatus 1021 are five frequency bands of band0, band100, band200, band300, and band500. Ranges of channels included in band0, band100, band200, band300, and 500 are 0-99, 100-199, 200-200, 300-399, and 500-599, respectively. In this example, the frequency band information extracted by the detection threshold changing unit 2141a represents band0 and band200. A dashed line indicates that the detection threshold for band0 including channels 0-99 and band200 including channels 200-299 is D and that the detection threshold for the other channels is E.

The received signal strength of each channel illustrated in Fig. 13 is the same as the corresponding received signal strength illustrated in Fig. 6.
In the case where the detection threshold D is -105 (dBm) and the detection threshold E is -90 (dBm), the channel processing unit 2142a selects the following five channels. Combinations of the selected channel and the received signal distance are (202, -98 (dBm)), (203, -93 (dBm)), (204, -99 (dBm)), (222, - 85 (dBm)), and (223, -94 (dBm)).

Note that the case where the detection threshold changing unit 2141a determines the detection threshold for each frequency band has been described above as an example; however, in the present modification, the detection threshold changing unit 2141a may determine the detection threshold for each channel.

By setting the detection threshold on the basis of the frequency band information in this way, a possibility that the minimum number of channels to be subjected to the synchronization process is to be selected is left and the number of to-be-selected channels is reduced in the present modification. Consequently, the time and power consumption for the synchronization process can be reduced.

### (Modification 1-3)

Next, a modification 1-3 of the present embodiment will be described. In the present modification, the detection threshold changing unit 2141a determines, for each piece of the use environment information, a priority in accordance with a use state of the use environment information, and determines the detection threshold such that the detection threshold becomes lower as the determined priority becomes higher so as to detect a reception wave of a channel having a low received signal strength. Also, the detection threshold changing unit 2141a determines the detection threshold such that the detection threshold becomes higher as the priority becomes lower so as not to detect a reception wave of a channel having a low received signal strength.

The detection threshold changing unit 2141a extracts, for example, pieces of frequency band information as the use environment information from the located area history information read from the memory unit 1215, and counts, for each frequency band represented by the corresponding one of the extracted pieces of frequency band information, the number of times the frequency band has been stored. Then, the detection threshold changing unit 2141a determines, for each frequency band, a priority such that the priority becomes higher for the frequency band having a larger count.

For example, in the case where the pieces of frequency band information XBW and YBW are included in the located area history information four times and twice, respectively, the detection threshold changing unit 2141a determines the priority such that the priority for the frequency band information XBW becomes higher than the priority for the frequency band information YBW. Here, the priorities for the pieces of frequency band information XBW and YBW are referred to as priorities 1 and 2, respectively.

The detection threshold changing unit 2141a reads the detection threshold information corresponding to the determined priority from the memory unit 1215. For frequency bands except for the frequency band represented by the extracted frequency band information among the frequency bands that can be used by the mobile station apparatus 1021, the detection threshold changing unit 2141a reads the detection threshold information corresponding to the other frequency band information from the memory unit 1215. Here, in the detection-threshold correspondence information pre-stored in the memory unit 1215, detection threshold information representing a lower detection threshold is associated with a higher priority. Also, for the other frequency band information, detection threshold information representing the highest detection threshold is associated by setting the priority low.

Next, an example of the detection-threshold correspondence information selected in the present modification will be described.

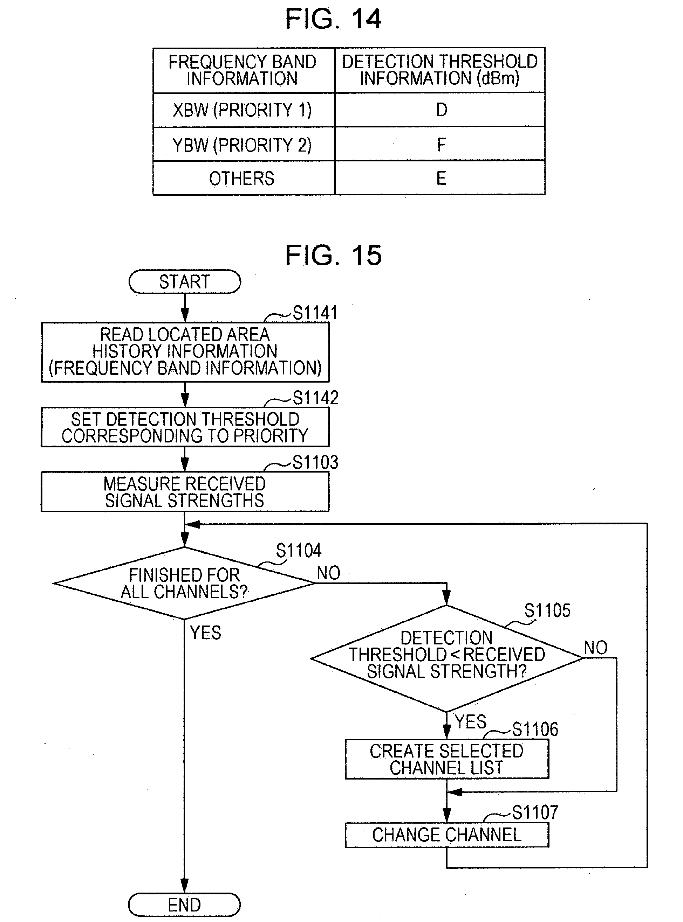

Fig. 14 is a diagram illustrating an example of the detection-threshold correspondence information according to the present modification.

In Fig. 14, the left column shows the frequency band information serving as the use environment information, and the right column shows the detection threshold information.

The second row indicates that the detection threshold D assigned the highest priority 1 is associated with the frequency band information XBW. The third row indicates that a detection threshold F assigned the next highest priority 2 is associated with the frequency band information YBW. The fourth row indicates that the detection threshold E is associated with priority information other than those for XBW and YBW. Also, as in the above-described modifications, in the case where the frequency band information is unknown, the detection threshold E is given. In this example, the detection threshold is in the order of D < F < E. With this configuration, even if a channel included in a frequency band assigned a high priority is weak, the channel is easily detected; detection of noise or the like is avoided for a channel assigned the lowest priority, and a possibility of detecting a channel having a strong received signal strength from the base station apparatus is left.

Next, a channel selection process according to the present modification will be described.

Fig. 15 is a flowchart illustrating a channel selection process according to the present modification.

The channel selection process according to the present modification includes steps S1141 and S1142 instead of steps S1101 and S1102 of the channel selection process illustrated in Fig. 7.
(Step S1141) The detection threshold changing unit 2141a reads the located area history information stored in the memory unit 1215, and extracts pieces of frequency band information on the basis of the read located area history information. The detection threshold changing unit 2141a determines priorities for the extracted pieces of frequency band information. Then, the process proceeds to step S1142.
(Step S1142) The detection threshold changing unit 2141a reads the detection threshold information corresponding to the determined priority from the detection-threshold correspondence information stored in the memory unit 1215. For frequency bands except for the frequency band represented by the extracted frequency band information among frequency bands that can be used by the mobile station apparatus 1021, the detection threshold changing unit 2141a reads the detection threshold information corresponding to the other frequency band information from the memory unit 1215. The detection threshold changing unit 2141a sets the individual pieces of detection threshold information for the usable frequency bands in the channel processing unit 2142a. Then, the process proceeds to step S1103.

Next, an example of the detection threshold information selected in the present modification will be described.

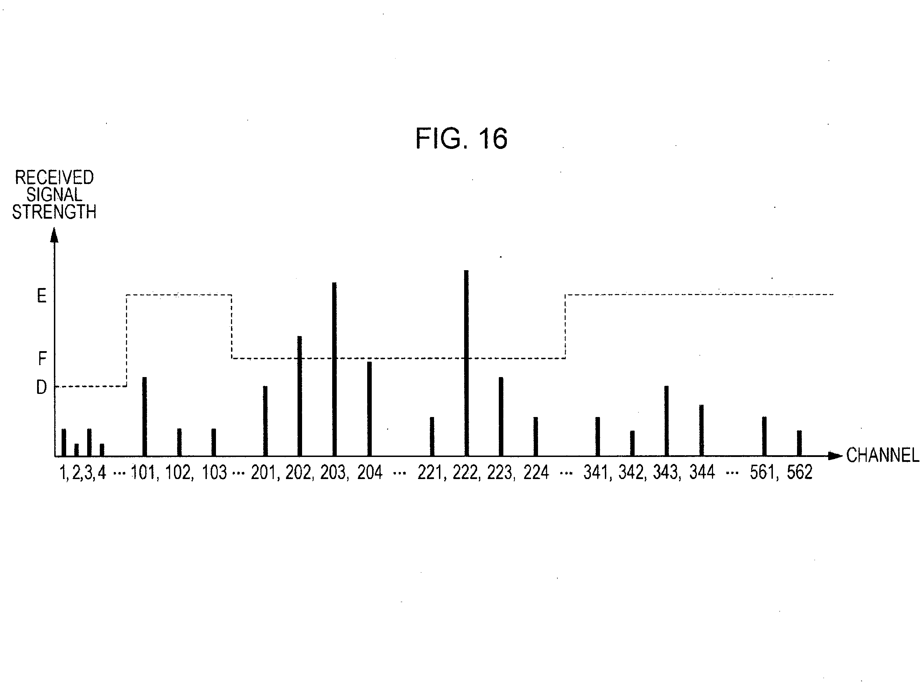

Fig. 16 is a diagram illustrating an example of the detection threshold information according to the present modification.

In Fig. 16, the horizontal axis represents the channel, and the vertical axis represents the received signal strength. In this example, frequency bands that can be used by the mobile station apparatus 1021 are five frequency bands of band0, band100, band200, band300, and band500. Ranges of channels included in band0, band100, band200, band300, and 500 are 0-99, 100-199, 200-200, 300-399, and 500-599, respectively. It is assumed here that band0 and band200 are included in the located area history information stored in the memory unit 1215 four times and twice, respectively.

In this case, because the count for band0 is the largest and the count for band200 is the next largest, the detection threshold changing unit 2141a determines priorities for band0 and band200 to priorities 1 and 2, respectively. In Fig. 16, a dashed line indicates that the detection thresholds for band0 including channels 0-99 and band200 including channels 200-299 are D and F, respectively, and that the detection threshold for the other channels assigned the lowest priority is E.

The received signal strength of each channel illustrated in Fig. 16 is the same as the corresponding received signal strength illustrated in Fig. 6.
In the case where the detection threshold D is -105 (dBm), the detection threshold F is -100 (dBm), and the detection threshold E is -90 (dBm), the channel processing unit 2142a selects the following four channels. Combinations of the selected channel and the received signal distance are (202, - 98 (dBm)), (203, -93 (dBm)), (204, -99 (dBm)), and (222, -85 (dBm)).

Note that the case where the detection threshold changing unit 2141a determines the detection threshold for each frequency band serving as the piece of the use environment information has been described above as an example; however, in the present modification, the detection threshold changing unit 2141a may determine the detection threshold for each channel.

The case where the priority is determined on the basis of the count which serves as the use state of each piece of the use environment information has been described above as an example; however, in the present modification, the detection threshold changing unit 2141a may determine the priority such that the priority becomes higher as an index value representing the use state, such as a cell location duration or reception strength, instead of the count, becomes larger. To this end, the detection threshold changing unit 2141a stores a duration over which the mobile station apparatus is located within the cell of the frequency band, the reception strength, or the like in the memory unit 1215 in association with the frequency band information as the located area history information.

Alternatively, the detection threshold changing unit 2141a may determine the priority such that the priority becomes higher for use environment information newly stored as the located area history information, for example, the newly stored frequency band information. In the case where the frequency band information of the same type is included in the located area history information twice or more than twice, the detection threshold changing unit 2141a may ignore the frequency band information that appears more than twice.

The case where the detection threshold changing unit 2141a determines the priority mainly for each frequency band has been described above as an example; however, in the present modification, the detection threshold changing unit 2141a may determine the priority for the other use environment information, for example, for each country information or communication operator information.

As described above, in the present modification, the detection threshold is set in accordance with the use state of each piece of the use environment information. With this configuration, a possibility that the minimum number of channels to be subjected to the synchronization process is to be selected is left and channels are selected on the basis of the use state of each piece of the use environment information. By reducing the number of channels selected in accordance with the use state of each piece of the use environment information in this way, the time and power consumption for the synchronization process to be performed next can be reduced.

As described above, in the present embodiment, the detection threshold used for detecting a reception wave received from the base station apparatus is determined on the basis of the use environment information which represents the use environment of this apparatus, only channels having a reception level higher than the detection threshold are selected, and the synchronization process is performed on reception waves of the selected channels.

In this way, a possibility that the minimum number of channels to be subjected to the synchronization process is to be selected is left and the number of to-be-selected channels is reduced. Accordingly, the time and power consumption for the synchronization process of the cell search can be reduced.

### (Second Embodiment)

Next, a second embodiment of the present invention will be described. Configurations that are the same as those of the above-described embodiment are denoted by the same reference signs, and the description is incorporated herein by reference.

A communication system 1002 (not illustrated) according to the present embodiment includes a mobile station apparatus 1023 instead of the mobile station apparatus 1021 of the communication system 1001 (Fig. 1). Now, a configuration of the mobile station apparatus 1023 will be described.

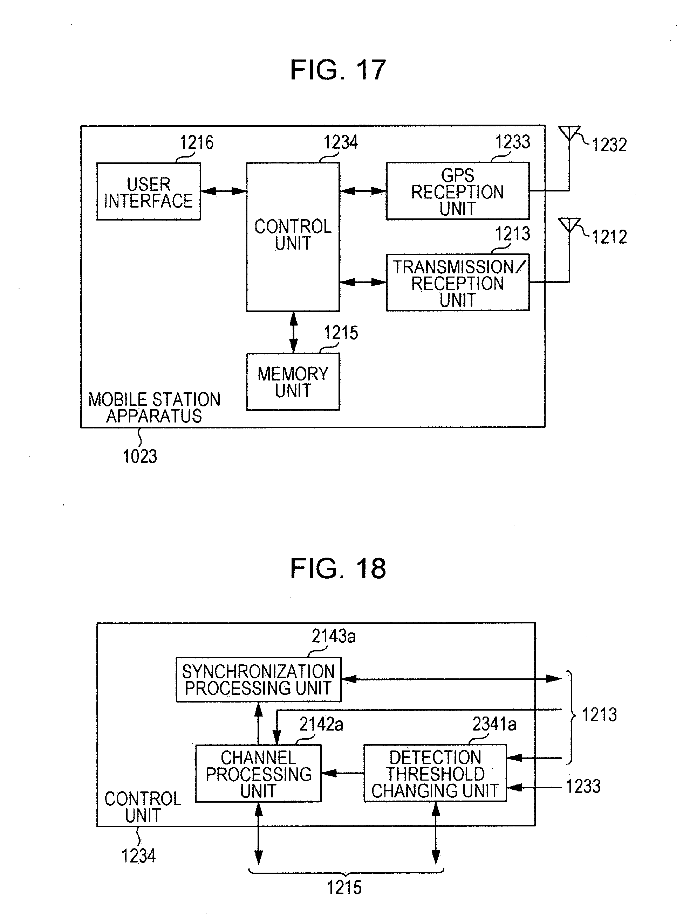

Fig. 17 is a schematic block diagram illustrating a configuration of the mobile station apparatus 1023 according to the present embodiment.

The mobile station apparatus 1023 includes the antenna 1212, the transmission/reception unit 1213, the memory unit 1215, the user interface 1216, a GPS (Global Positioning System) antenna 1232, a GPS reception unit 1233, and a control unit 1234. That is, the mobile station apparatus 1023 includes the control unit 1234 instead of the control unit 1214 of the mobile station apparatus 1021 (Fig. 2) and further includes the GPS antenna 1232 and the GPS reception unit 1233.

The GPS antenna 1232 receives a signal for determining a location (location determination signal) that has been transmitted by a GPS satellite in a form of a radio wave, and outputs the received location determination signal as an electric signal to the GPS reception unit 1233.

The GPS reception unit 1233 demodulates the location determination signal input thereto from the GPS antenna 1232, and calculates the location (for example, the latitude and longitude) of the mobile station apparatus 1023 on the basis of the demodulated location determination signal using a known method (for example, a code positioning method). The GPS reception unit 1233 generates location information that represents the calculated location, and outputs the generated location information to the control unit 1234. Accordingly, the GPS antenna 1232 and the GPS reception unit 1233 constitute a location determining unit configured to determine a location of this mobile station apparatus.

Next, a configuration of the control unit 1234 according to the present embodiment will be described.

Fig. 18 is a schematic block diagram illustrating a configuration of the control unit 1234 according to the present embodiment.

The control unit 1234 includes a detection threshold changing unit 2341a, the channel processing unit 2142a, and the synchronization processing unit 2143a. That is, the control unit 1234 includes the detection threshold changing unit 2341a instead of the detection threshold changing unit 2141a of the control unit 1214 (Fig. 3). Illustration of the user interface 1216 is omitted in Fig. 18.

The detection threshold changing unit 2341a determines a detection threshold on the basis of the location information input thereto as the use environment information from the GPS reception unit 1233.

The memory unit 1215 pre-stores detection-threshold correspondence information in which the location information serving as the use environment information and the detection threshold are associated with each other. An example of the detection-threshold correspondence information will be described later.

The detection threshold changing unit 2341a reads detection threshold information corresponding to the input location information from the detection-threshold correspondence information stored in the memory unit 1215, and outputs the read detection threshold information to the channel processing unit 2142a. In this way, the detection threshold is set in the channel processing unit 2142a.

### (Example of Detection-Threshold Correspondence Information)

Next, an example of the detection-threshold correspondence information according to the present embodiment will be described.

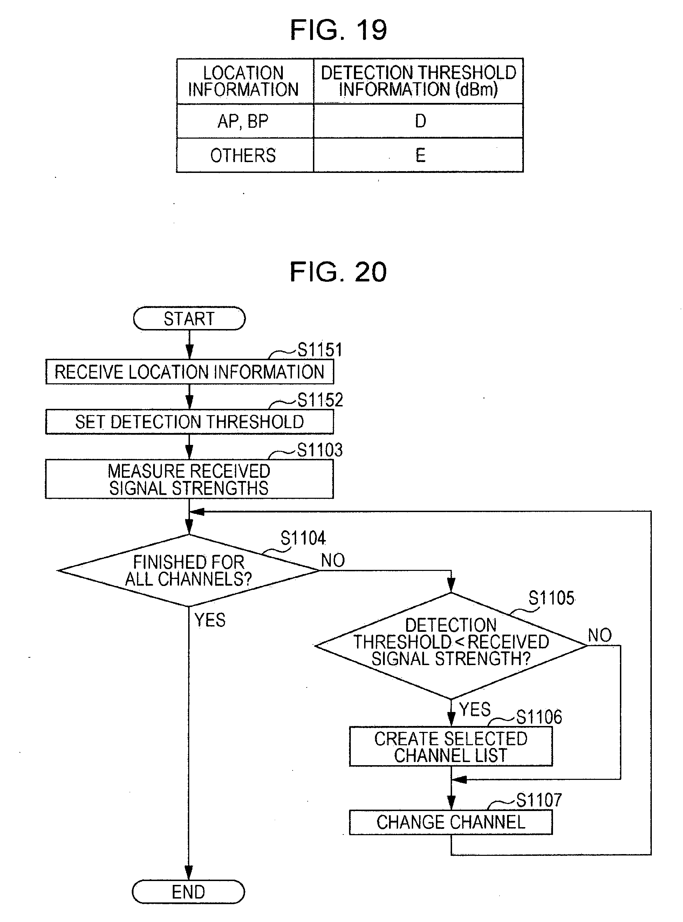

Fig. 19 is a diagram illustrating an example of the detection-threshold correspondence information according to the present embodiment.

In Fig. 19, the left column shows the location information serving as the use environment information, and the right column shows the detection threshold information.

The second row indicates that pieces of location information AP and BP are associated with the detection threshold D. The third row indicates that location information other than AP and BP is associated with the detection threshold E. Accordingly, in the case where the location information AP is input thereto from the GPS reception unit 1233, the detection threshold changing unit 2341a sets the detection threshold D. In the case where location information (for example, CP) other than the pieces of location information AP and BP is input thereto from the GPS reception unit 1233, the detection threshold changing unit 2341a sets the detection threshold E. In the case where no location determination signal reaches an outdoor place, an underground mall, or the like from the GPS satellite, the detection threshold changing unit 2341a also sets the detection threshold E corresponding to the other location information.

Now, it is assumed that the pieces of location information AP and BP are included in an area in which a network that can be used by the mobile station apparatus 1021 is operated and the detection threshold D (for example, -105 (dBm)) is smaller than the detection threshold E (for example, -90 (dBm)).

When the mobile station apparatus 1021 is located within an area in which the usable network is operated, for example, at AP, channel selection can be made more likely to be successful using a weak received signal even if the mobile station apparatus 1021 is located at a location where a radio wave is difficult to reach (for example, a remote location) from the base station apparatus 1011.

On the other hand, when the mobile station apparatus 1021 is operating in an area in which the usable network is not operated, such as at CP, the detection threshold E higher than the detection threshold D is selected. This configuration can prevent the mobile station apparatus 1021 from erroneously selecting noise, for example, ambient noise or white noise, or a received signal from another system.

### (Channel Selection Process)

Next, a channel selection process according to the present embodiment will be described.

Fig. 20 is'a flowchart illustrating a channel selection process according to the present embodiment.

The channel selection process illustrated in Fig. 20 includes steps S1151 and S1152 instead of steps S1101 and S1102 of the channel selection process illustrated in Fig. 7. (Step S1151) The GPS reception unit 1233 calculates the location of the mobile station apparatus 1023 on the basis of the location determination signal input thereto from the GPS antenna 1232, and generates the location information representing the calculated location.
Then, the process proceeds to step S1152.
(Step S1152) The detection threshold changing unit 2341a reads the detection threshold information corresponding to the location information input thereto from the GPS reception unit 1233 from the detection-threshold correspondence information stored in the memory unit 1215, and sets the read detection threshold information in the channel processing unit 2142a.
Then, the process proceeds to step S1103.

In this way, channel selection can be made more likely to be successful for a frequency band used at the location. Also, for other frequency bands, erroneous selection of a received signal such as noise can be prevented. Also, by performing such control for each location, control can be performed in a more detailed manner than in the case of using the country information.

Note that in the present embodiment, in the detection-threshold correspondence information stored in the memory unit 1215, the location information may be associated with area's frequency band information which represents a frequency band used in an area including the location. In such a case, the detection threshold changing unit 2341a selects detection threshold information (for example, the detection threshold D) for area's frequency band information (for example, the 800-MHz band) associated with an area including the location represented by the input location information. For other frequency bands that can be used by the mobile station apparatus 1021 (for example, a 900-MHz band, a 1800-MHz band, and a 1900-MHz band), the detection threshold changing unit 2341a may determine a detection threshold (for example, the detection threshold E) that is higher than the detection threshold information associated with the area including the location represented by the location information by a predetermined value.

In this way, channel selection can be made more likely to be successful for a frequency band used at the determined location. Also, erroneous selection of a received signal such as noise can be prevented for the other frequency bands.

### (Example of Received Signal Strength Information)

Next, an example of the received signal strength information will be described.

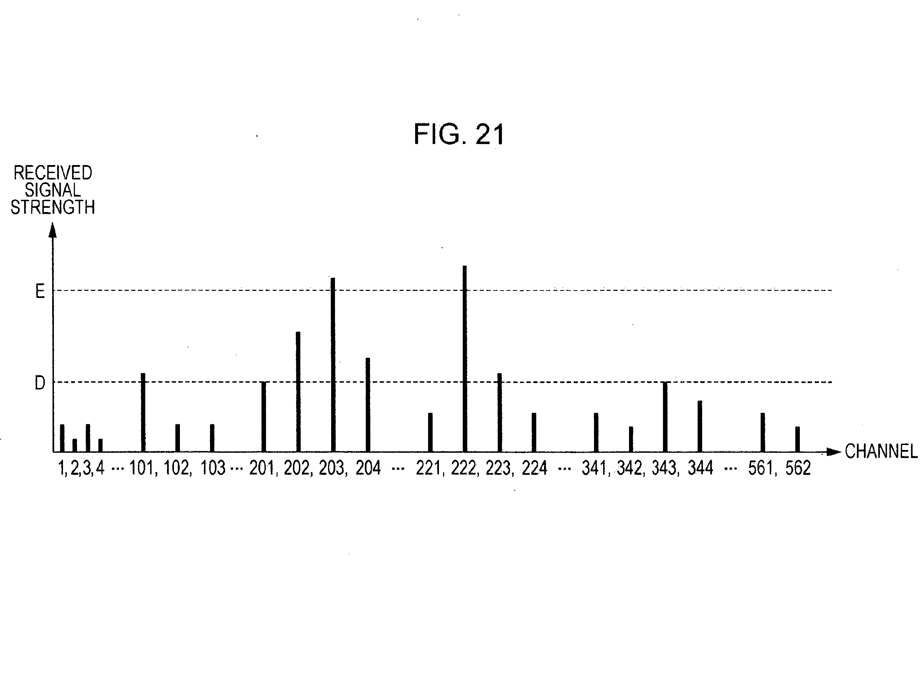

Fig. 21 is a diagram illustrating an example of the received signal strength information.

In Fig. 21, the horizontal axis represents the channel, and the vertical axis represents the received signal strength. The received signal strength illustrated in Fig. 21 is the same as the corresponding received signal strength illustrated in Fig. 6.

For example, when the input location information is CP, the detection threshold changing unit 2341a selects the detection threshold E (for example, -90 (dBm)). The channel processing unit 2142a selects channels having a received signal strength higher than the detection threshold E from among receivable channels. In this case, combinations of the selected channel and the received signal distance are those for two channels, i.e., (203, -88 (dBm)) and (222, -85 (dBm)). When the input location information is AP, the detection threshold changing unit 2341a selects the detection threshold D (for example, -105 (dBm)). The channel processing unit 2142a selects channels having a received signal strength higher than the detection threshold D from among receivable channels. In this case, combinations of the selected channel and the received signal distance are those for six channels, i.e., (101, -104 (dBm)), (202, -98 (dBm)), (203, -88 (dBm)), (204, - 99 (dBm)), (222, -85 (dBm)), and (223, -94 (dBm)).

By determining the detection threshold in accordance with the location information in this way, the number of to-be-selected channels can be controlled.

Note that the case where the location information is input to the detection threshold changing unit 2341a from the GPS reception unit 1233 every time a cell search is performed has been described above as an example; however, the present embodiment is not limited to this case. In the case where the mobile station apparatus 1023 is located in an out-of-service area of the base station apparatus 1011 for a period longer than a predetermined period, the GPS reception unit 1233 may stop outputting the location information to the detection threshold changing unit 2341a at certain intervals. In the case where the GPS reception unit 1233 stops outputting the location information, the channel processing unit 2142a performs the channel selection process on the basis of the detection threshold information determined using the previously input location information until the location information is output next.

Next, an example of timings of individual processes (location determination, a channel selection process, and a synchronization process) of a cell search will be described.

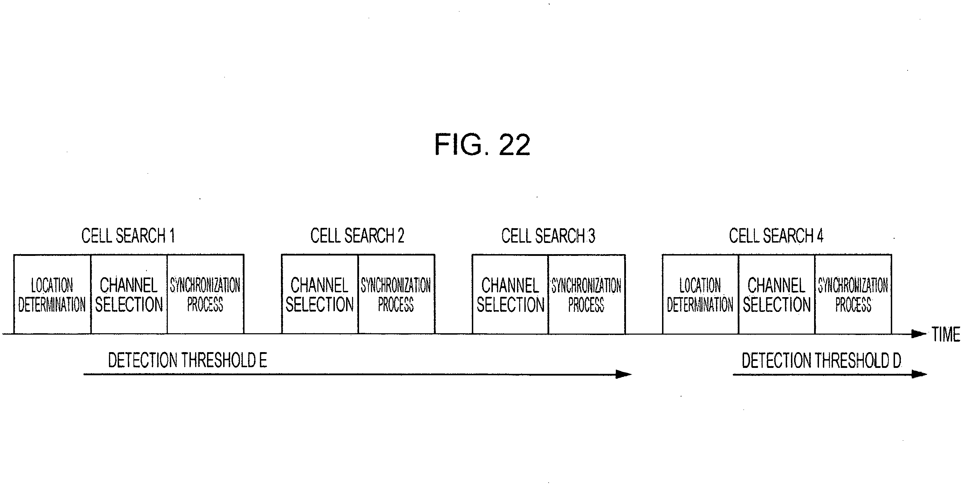

Fig. 22 is a conceptual diagram illustrating an example of timings of individual processes of a cell search.

In Fig. 22, the horizontal axis represents time, and indicates that the cell search has been performed four times. The four cell searches are referred to as, from the oldest cell search, a cell search 1, a cell search 2, a cell search 3, and a cell search 4. In this example, location determination is performed for the first cell search of every three cell searches (cell searches 1, 4, · · ·), and location determination is not performed for the other two cell searches (cell searches 2, 3, · · ·). In this way, the detection threshold (for example, the detection threshold E) is obtained on the basis of the location information obtained in location determination of the cell search 1, and the obtained detection threshold is used in the channel selection process of the cell searches 1, 2, and 3. Also, the detection threshold (for example, the detection threshold D) is obtained on the basis of new location information obtained in location re-determination of the cell search 4, and the obtained detection threshold is used in the channel selection process of the cell searches 4, 5, and 6.

Fig. 22 illustrates an example in which the GPS reception unit 1233 obtains and outputs the location information at a certain cell-search cycle (for example, once every three cell searches); however, the GPS reception unit 1233 may obtain and output the location information at certain time intervals (for example, 30 minutes).

As described above, in the present embodiment, by setting the detection threshold on the basis of the location information, a possibility that the minimum number of channels to be subjected to the synchronization process is to be selected is left and the number of to-be-selected channels is reduced, whereby the time and power consumption for the synchronization process can be reduced.

### (Modification 2-1)

Next, a modification 2-1 of the present embodiment will be described. In the present modification, when the location information is input thereto from the GPS reception unit 1233, the detection threshold changing unit 2341a stores the input location information in the memory unit 1215. The detection threshold changing unit 2341a may store the location information as part of the located area history information every time the input from the GPS reception unit 1233 is started. In the case where the location information is not input from the GPS reception unit 1233, the detection threshold changing unit 2341a reads the latest location information stored in the memory unit 1215, and outputs the read location information to the channel processing unit 2142a. In this way, even if a location determination signal does not reach an outdoor place, an underground mall, or the like from a GPS satellite, the detection threshold changing unit 2341a can determine the detection threshold on the basis of the latest location information stored in the memory unit 1215.

Next, a channel selection process according to the present modification will be described.

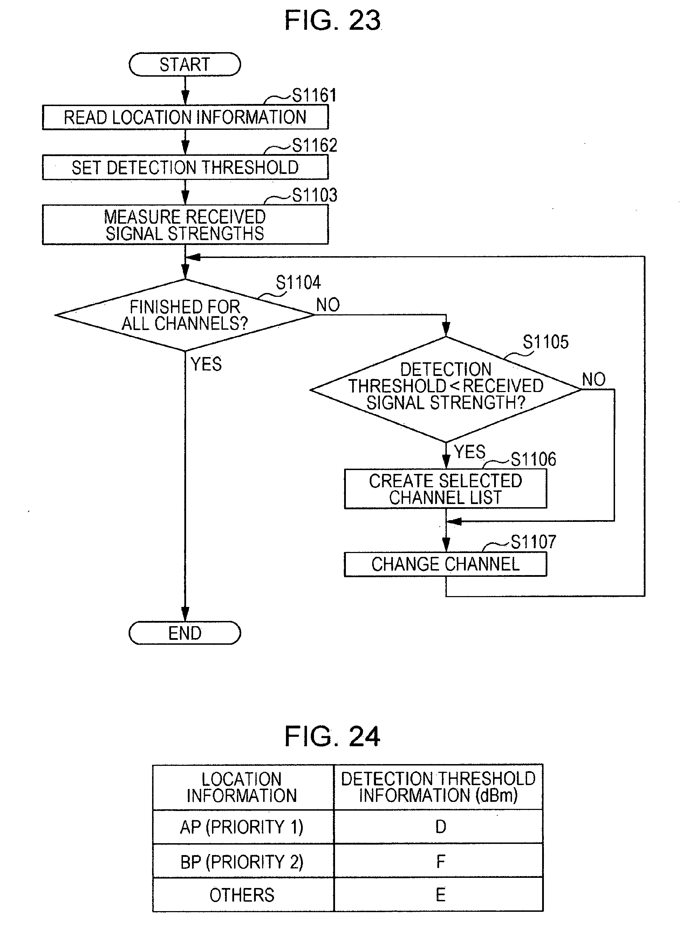

Fig. 23 is a flowchart illustrating an example of a channel selection process according to the present modification.

The channel selection process according to the present modification includes steps S1161 and S1162 instead of steps S1101 and S1102 of the channel selection process illustrated in Fig. 7.
(Step S1161) In the case where the location information is input thereto from the GPS reception unit 1233, the detection threshold changing unit 2341a stores the input location information in the memory unit 1215. In the case where the location information is not input from the GPS reception unit 1233, the detection threshold changing unit 2341a reads the location information stored in the memory unit 1215. The detection threshold changing unit 2341a extracts the latest location information entry from the read location information. Then, the process proceeds to step S1162.
(Step S1162) The detection threshold changing unit 2341a reads the detection threshold information corresponding to the location information input thereto from the GPS reception unit 1233 or the location information read from the memory unit 1215 from the detection-threshold correspondence information stored in the memory unit 1215, and outputs the read detection threshold information to the channel processing unit 2142a. Then, the process proceeds to step S1103.

As described above, in the present modification, even in the case where the location information is not input from the GPS reception unit 1233, the detection threshold can be set on the basis of the latest input location information. In this way, a possibility that the minimum number of channels to be subjected to the synchronization process is to be selected is left and the number of to-be-selected channels is reduced, whereby the time or power consumption for the synchronization process can be reduced.

### (Modification 2-2)

Next, a modification 2-2 of the present embodiment will be described. In the present modification, the detection threshold changing unit 2341a determines, for each use environment information, that is, for each location information, a priority in accordance with a use state thereof, and determines the detection threshold such that the higher the determined priority, the lower the detection threshold.

The detection threshold changing unit 2341a counts, for each location represented by the location information read from the memory unit 1215, the number of times the location has been stored. Then, the detection threshold changing unit 2341a determines a priority for each frequency band such that the priority becomes higher for a location having a larger count.

For example, in the case where the read pieces of location information AP and BP are included four times and twice, respectively, the detection threshold changing unit 2341a determines the priority such that the priority for the location information AP becomes higher than the priority for the location information BP. Here, the priorities for the pieces of location information AP and BP are referred to as priorities 1 and 2, respectively.

The detection threshold changing unit 2341a reads the detection threshold information corresponding to the determined priority from the memory unit 1215. For frequency bands except for the frequency band represented by the extracted frequency band information among the frequency bands that can be used by the mobile station apparatus 1021, the detection threshold changing unit 2341a reads the detection threshold information corresponding to the other frequency band information from the memory unit 1215. Here, in the detection-threshold correspondence information pre-stored in the memory unit 1215, detection threshold information representing a lower detection threshold is associated with a higher priority. Also, for the other frequency band information, detection threshold information representing the highest detection threshold is associated because the priority is low.

Next, an example of the detection-threshold correspondence information according to the present modification will be described.

Fig. 24 is a diagram illustrating an example of the detection-threshold correspondence information according to the present modification.

In Fig. 24, the left column shows the location information serving as the use environment information, and the right column shows the detection threshold information.

The second row indicates that the detection threshold D assigned the highest priority 1 is associated with the location information AP. The third row indicates that the detection threshold F assigned the next highest priority 2 is associated with the location information BP. The fourth row indicates that the detection threshold E is associated with priority information other than those for AP and BP. Also, as in the above-described modifications, in the case where the frequency band information is unknown, the detection threshold E is given. In this example, the detection threshold is in the order of D < F < E. With this configuration, even a weak radio wave can be easily detected for a channel included in a frequency band assigned a high priority, detection of noise or the like is avoided for a channel assigned the lowest priority, and a possibility of detecting a strong received signal from the base station apparatus is left.

Next, an example of the detection threshold information selected in the present modification will be described.

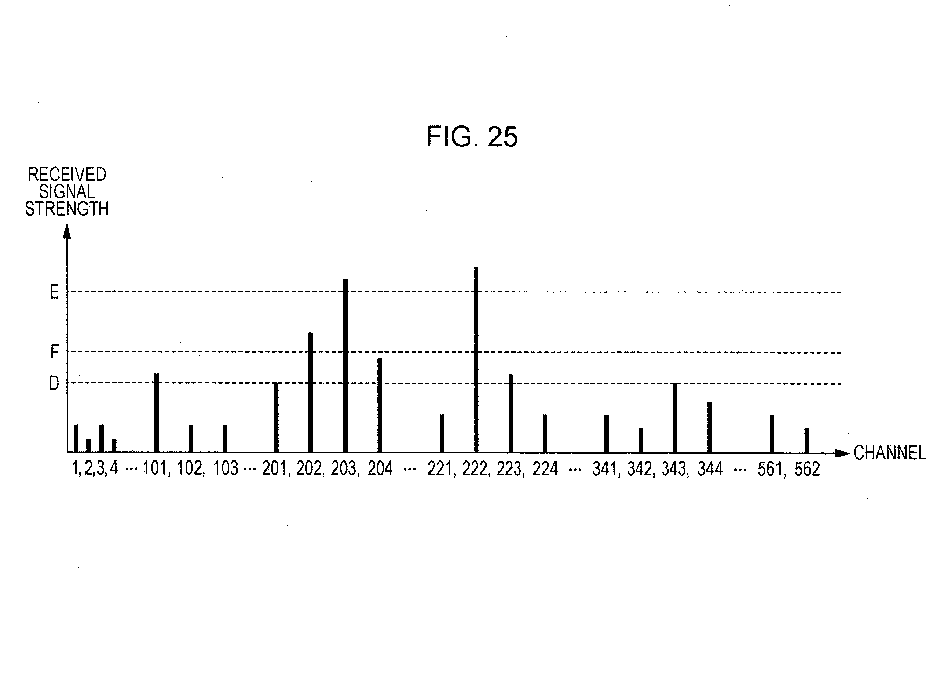

Fig. 25 is a diagram illustrating an example of the detection threshold information according to the present modification.

In Fig. 25, the horizontal axis represents the channel, and the vertical axis represents the received signal strength.

Dashed lines represent the detection thresholds E, F, and D associated with the priorities 1 and 2, and the others, respectively. The received signal strength of each channel illustrated in Fig. 25 is the same as the corresponding received signal strength illustrated in Fig. 6.

When the location information AP is obtained and the detection threshold D is -105 (dBm), the channel processing unit 2142a selects the following six channels. Combinations of the selected channel and the received signal distance are (101, -104 (dBm)), (202, -98 (dBm)), (203, -88 (dBm)), (204, -99 (dBm)), (222, -85 (dBm.)), and (223, -94 (dBm)).

When the location information BP is obtained and the detection threshold F is -95 (dBm), the channel processing unit 2142a selects the following three channels. Combinations of the selected channel and the received signal distance are (203, -88 (dBm)), (222, -85 (dBm)), and (223, -94 (dBm)).

When the other location information is obtained and the detection threshold E is the highest, that is, -90 (dBm), the channel processing unit 2142a selects the following two channels. Combinations of the selected channel and the received signal distance are (203, -88 (dBm)) and (222, -85 (dBm)). Accordingly, because a higher detection threshold is selected for a lower priority, the number of to-be-selected channels is reduced. Here, for the location information AP, the synchronization process is attempted up to eight times, and thus the mobile station apparatus is more likely to be located within the cell 1011c of the base station apparatus 1011. On the other hand, for the other location information, the detection threshold is set to be higher by setting the priority to be lower. Consequently, the number of selected channel is two, and the number of times the synchronization process is attempted is reduced to twice. Therefore, the power consumption of the mobile station apparatus 1023 can be suppressed.

The case where the detection threshold changing unit 2341a determines the priority in accordance with the number of times each location information has been obtained has been described above as an example; however, the present modification is not limited to this example. The detection threshold changing unit 2341a may determine the priority in accordance with a distance from a base station, on the basis of the location information input thereto from the GPS reception unit 1233. For example, the GPS reception unit 1233 receives, from a GPS satellite, base station location information which represents the location of the base station apparatus 1011, and outputs the received base station location information to the detection threshold changing unit 2341a. The detection threshold changing unit 2341a calculates a distance from the mobile station apparatus 1023 to the base station location represented by the base station location information input thereto from the GPS reception unit 1233. The detection threshold changing unit 2341a may determine the priority such that the priority becomes higher as the calculated distance becomes larger so as to determine a lower detection threshold. In this way, even in the case where the mobile station apparatus 1023 is located at a mountain, ocean, a plain, or the like, the mobile station apparatus 1023 can detect the base station apparatus 1011 located far away from the mobile station apparatus 1023.

Also, in the case where the calculated distance is smaller than a certain distance threshold, the detection threshold changing unit 2341a may set the priority to an intermediate level (for example, the second highest level among three levels), that is, the detection threshold to an intermediate level. With this configuration, even in the case where relatively small-scale base station apparatuses are densely arranged in an urban area, an underground mall, or the like, the mobile station apparatus 1023 selects only a base station apparatus having a high reception strength from among many base station apparatuses. Also, in the case where the base station location information is not input, it is estimated that the current area is an area where no usable base station apparatus is located. Thus, the detection threshold changing unit 2341a sets the priority corresponding to the other location to the lowest level among the plurality of levels, that is, the detection threshold to the highest level.

As described above, in the present modification, the detection threshold is set in accordance with the priority which is determined on the basis of the use state of each location information serving as the use environment. With this configuration, a possibility that the minimum number of channels to be subjected to the synchronization process is to be selected is left by setting the detection threshold to be high for the location information assigned a low priority, and the time and power consumption for the synchronization process to be performed next can be reduced by reducing the number of to-be-selected channels.

As described above, in the present embodiment, the location of the mobile station apparatus 1023 is determined, and the detection threshold used for detecting a reception wave is determined on the basis of the determined location. With this configuration, channel detection based on the location of the mobile station apparatus 1023 is enabled and an unnecessary synchronization process and power consumption can be reduced.

### (Third Embodiment)

Next, a third embodiment of the present invention will be described. Configurations that are the same as those of the above-described embodiments are denoted by the same reference signs, and the description is incorporated herein by reference.

A communication system 1003 (not illustrated) according to the present embodiment includes a mobile station apparatus 1024 instead of the mobile station apparatus 1021 of the communication system 1001 (Fig. 1). Now, a configuration of the mobile station apparatus 1024 will be described.

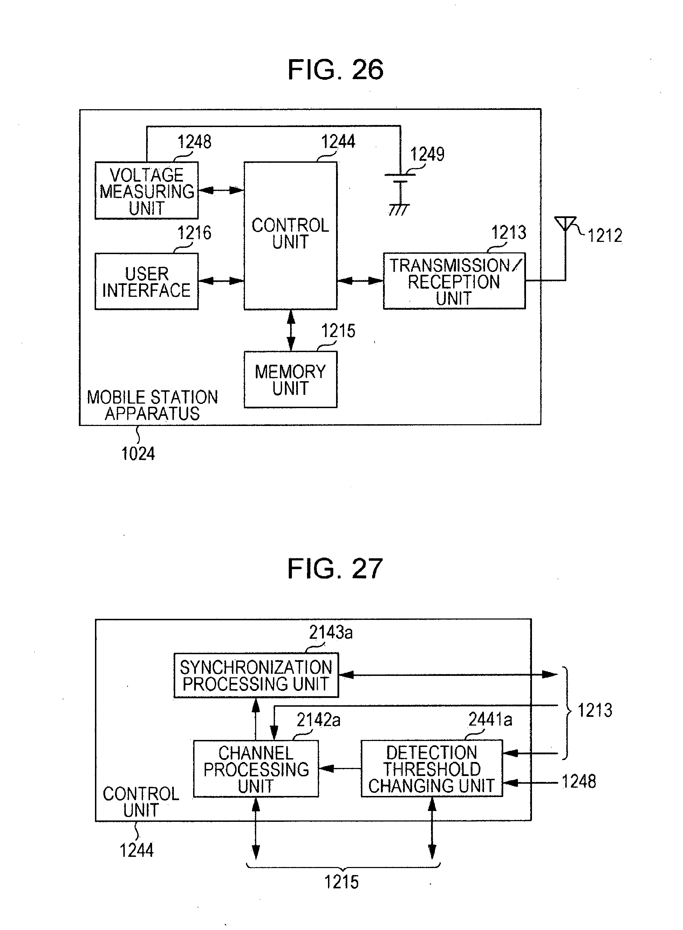

Fig. 26 is a schematic block diagram illustrating a configuration of the mobile station apparatus 1024 according to the present embodiment.

The mobile station apparatus 1024 includes the antenna 1212, the transmission/reception unit 1213, the memory unit 1215, the user interface 1216, a control unit 1244, a voltage measuring unit 1248, and a power supply 1249. That is, the mobile station apparatus 1024 includes the control unit 1244 instead of the control unit 1214 of the mobile station apparatus 1021 (Fig. 2) and further includes the voltage measuring unit 1248 and the power supply 1249. Illustration of the user interface 1216 is omitted in Fig. 26.

The voltage measuring unit 1248 measures a voltage at a positive terminal of the power supply 1249, and outputs voltage information which represents the measured voltage to a detection threshold changing unit 2441a of the control unit 1244. The voltage measuring unit 1248 is, for example, an analog-to-digital converter (A/D converter).

The power supply 1249 supplies direct-current power necessary for operation to the individual components 1212, 1213, 1215, 1216, 1244, and 1248 of the mobile station apparatus 1024. The power supply 1249 is a secondary battery that is rechargeable, and is, for example, a lithium-ion battery. The power supply 1249 includes a positive terminal and a negative terminal. The positive terminal is connected to the voltage measuring unit 1248. The negative terminal is grounded.

Next, a configuration of the control unit 1244 according to the present embodiment will be described.

Fig. 27 is a schematic block diagram illustrating a configuration of the control unit 1244 according to the present embodiment.

The control unit 1244 includes the detection threshold changing unit 2441a, the channel processing unit 2142a, and the synchronization processing unit 2143a. That is, the control unit 1244 includes the detection threshold changing unit 2441a instead of the detection threshold changing unit 2141a of the control unit 1214 (Fig. 3).

The detection threshold changing unit 2441a determines a detection threshold on the basis of the voltage information input thereto as the use environment information from the voltage measuring unit 1248.

The memory unit 1215 pre-stores detection-threshold correspondence information in which the voltage information serving as the use environment information and the detection threshold are associated with each other. An example of the detection-threshold correspondence information will be described later.

The detection threshold changing unit 2441a reads detection threshold information corresponding to the input voltage information from the detection-threshold correspondence information stored in the memory unit 1215, and outputs the read detection threshold information to the channel processing unit 2142a. In this way, the detection threshold is set in the channel processing unit 2142a.

### (Example of Detection-Threshold Correspondence Information)

Next, an example of the detection-threshold correspondence information according to the present embodiment will be described.

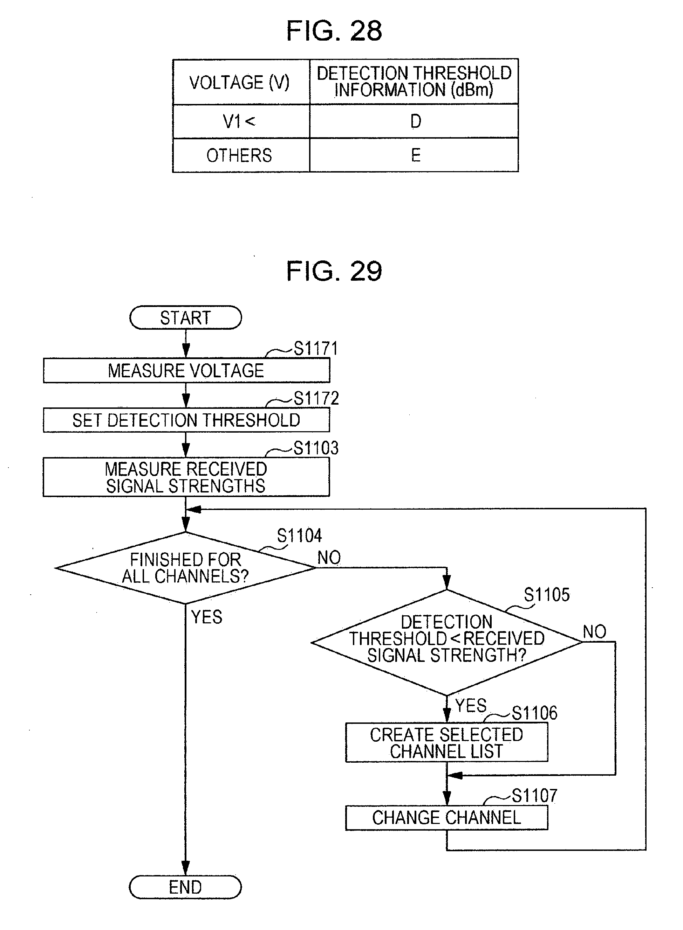

Fig. 28 is a diagram illustrating an example of the detection-threshold correspondence information according to the present embodiment.

In Fig. 28, the left column shows the voltage information serving as the use environment information, and the right column shows the detection threshold information.

The second row indicates that voltages exceeding a predetermined voltage V1 (for example, 3.7 V) are associated with the detection threshold D. The third row indicates that other voltages, that is, voltages equal to the voltage V1 or lower than the voltage V1, are associated with the detection threshold E. Accordingly, in the case where the voltage information representing a voltage (for example, 4.0 V) higher than the voltage V1 is input from the voltage measuring unit 1248, the detection threshold changing unit 2441a sets the detection threshold D. In the case where the voltage information representing a voltage (for example, 3.4 V) that is equal to the voltage V1 or lower than the voltage V1 is input from the voltage measuring unit 1248, the detection threshold changing unit 2441a sets the detection threshold E.

Here, a voltage that is high enough for the mobile station apparatus 1024 to operate is preset as the voltage V1 and the detection threshold D (for example, -105 (dBm)) is set to be lower than the detection threshold E (for example, -90 (dBm)). In the case where voltage information representing a voltage higher than the voltage V1 is input from the voltage measuring unit 1248, that is, in the case where an remaining amount of electric charges stored in the power supply 1249 is sufficient, the detection threshold D is set so as to allow more channels to be selected and make a cell search be more likely to be successful. On the other hand, voltage information representing a voltage equal to the voltage V1 or lower than the voltage V1 is input from the voltage measuring unit 1248, that is, a remaining amount of electric charges stored in the power supply 1249 is insufficient, the detection threshold E is set so as to allow only the minimum number of channels having strong radio wave strengths to be selected and to suppress power consumption without completely eliminating the possibility of the synchronization process.

Next, a channel selection process according to the present embodiment will be described.

Fig. 29 is a flowchart illustrating a channel selection process according to the present embodiment.

The channel selection process according to the present embodiment includes steps S1171 and S1172 instead of steps S1101 and S1102 of the channel selection process illustrated in Fig. 7.
(Step S1171) The voltage measuring unit 1248 measures a voltage at the positive terminal of the power supply 1249, and outputs voltage information representing the measured voltage to the detection threshold changing unit 2441a. Then, the process proceeds to step S1172.
(Step S1172) The detection threshold changing unit 2441a reads the detection threshold information corresponding to the voltage information input thereto from the voltage measuring unit 1248 from the detection-threshold correspondence information stored in the memory unit 1215, and outputs the read detection threshold information to the channel processing unit 2142a. Then, the process proceeds to step S1103.

As described above, in the present embodiment, the detection threshold can be set to be higher as the voltage of the power supply 1249, that is, the remaining amount of electric charges stored in the power supply 1249, becomes smaller. With this configuration, a possibility that the minimum number of channels to be subjected to the synchronization process is to be selected is left and the number of to-be-selected channels is reduced when the remaining amount of the battery becomes small, whereby the time and power consumption for the synchronization process can be reduced.

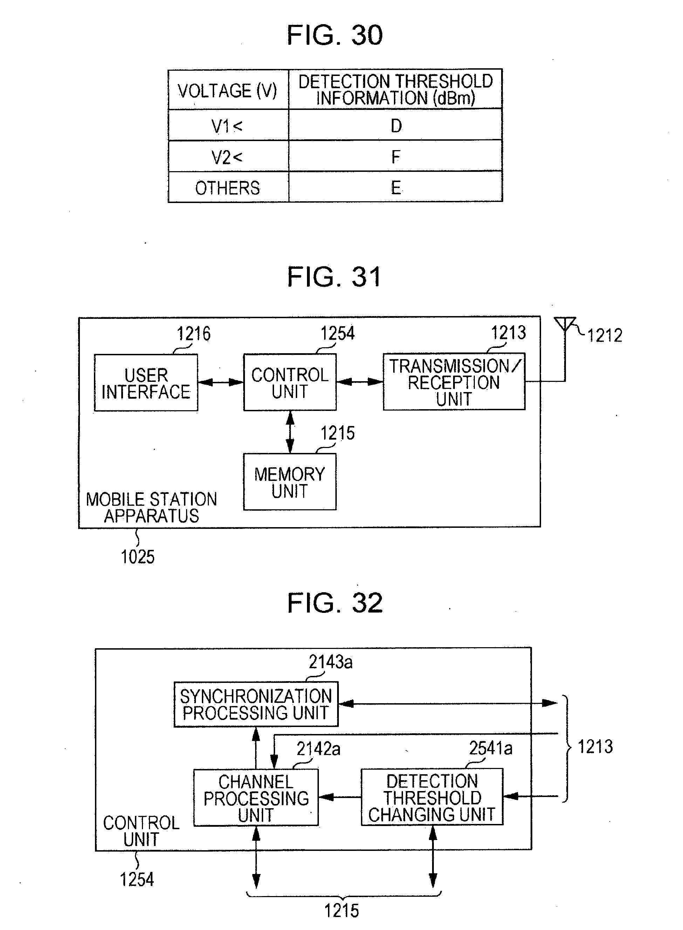

Fig. 30 is a diagram illustrating another example of the detection-threshold correspondence information according to the present embodiment.

In Fig. 30, the left column shows the voltage information serving as the use environment information, and the right column shows the detection threshold information. The second row of Fig. 30 indicates that if a voltage represented by the voltage information is higher than the voltage V1, the voltage is associated with the detection threshold D. The third row of Fig. 30 indicates that if a voltage represented by the voltage information is higher than a voltage V2 and is equal to the voltage V1 or lower than the voltage V1, the voltage is associated with the detection threshold F. The fourth row of Fig. 30 indicates that if a voltage represented by the voltage information is equal to the voltage V2 or lower than the voltage V2, the voltage is associated with the detection threshold E. Here, the detection threshold is in the order of D < F < E.

As described above, in the present embodiment, the voltage of the power supply of the mobile station apparatus 1024 is measured, and the detection threshold used for detecting a reception wave is determined on the basis of the measured voltage. In this way, channel detection based on the remaining amount of electric charges stored in the power supply is enabled and an unnecessary synchronization process and power consumption can be reduced.

### (Fourth Embodiment)

Next, a fourth embodiment of the present invention will be described. Configurations that are the same as those of the above-described embodiments are denoted by the same reference signs, and the description is incorporated herein by reference.

A communication system 1004 (not illustrated) according to the present embodiment includes a mobile station apparatus 1025 instead of the mobile station apparatus 1021 of the communication system 1001 (Fig. 1). Now, a configuration of the mobile station apparatus 1025 will be described.

Fig. 31 is a schematic block diagram illustrating a configuration of the mobile station apparatus 1025 according to the present embodiment.

The mobile station apparatus 1025 includes the antenna 1212, the transmission/reception unit 1213, the memory unit 1215, the user interface 1216, and a control unit 1254. That is, the mobile station apparatus 1025 includes the control unit 1254 instead of the control unit 1214 of the mobile station apparatus 1021 (Fig. 2).

Fig. 32 is a schematic block diagram illustrating a configuration of the control unit 1254 according to the present embodiment.

The control unit 1254 includes a detection threshold changing unit 2541a, the channel processing unit 2142a, and the synchronization processing unit 2143a. That is, the control unit 1254 includes the detection threshold changing unit 2541a instead of the detection threshold changing unit 2141a of the control unit 1214 (Fig. 3). In Fig. 32, illustration of the user interface 1216 is omitted.

The detection threshold changing unit 2541a updates a detection threshold determined for each use environment information in accordance with the number of times the cell search has been performed or a duration of the state in which the mobile station apparatus 1025 is unable to perform communication after being located in an out-of-service area of the cell 1011c or the like. This duration is hereinafter referred to as an out-of-service duration.

The detection threshold changing unit 2541a counts the number of iterations of the cell search performed by the synchronization processing unit 2143a. Here, the detection threshold changing unit 2541a increases (increments) the number of iterations of the cell search by one every time step S1120 (Fig. 8) is finished, for example. Note that the initial value of the number of iterations of the cell search is 1.

In the case where the number of iterations of the cell search is 1, the detection threshold changing unit 2541a determines the detection threshold in the same manner as the detection threshold changing unit 2141a (Fig. 3). Note that in the case where the number of iterations of the cell search is more than 1, the detection threshold changing unit 2541a decreases, for example, the already determined detection threshold by a predetermined amount of change α (for example, 5 (dBm)) in step S1102 (Fig. 7). In this way, the detection threshold is decreased by α every time the number of iterations of the cell search is increased by one. The detection threshold changing unit 2341a may repeatedly perform the process for decreasing the detection threshold until the detection threshold reaches a predetermined lower limit (for example, -120 (dBm)) or the number of iterations reaches a predetermined number of iterations (for example, four times).

After the mobile station apparatus 1021 (Fig. 2) is located in an out-of-service area of the cell 1011c or the like, the cell search is repeatedly performed without updating of the located area history information indicating that the user has not moved, and the power may be unnecessarily consumed. In contrast, by decreasing the detection threshold in accordance with the number of iterations of the cell search or the out-of-service duration as in the mobile station apparatus 1025, sensitivity for a received signal can be increased and an effective channel can be detected.

Next, an example of how the detection threshold information according to the present embodiment is changed will be described.

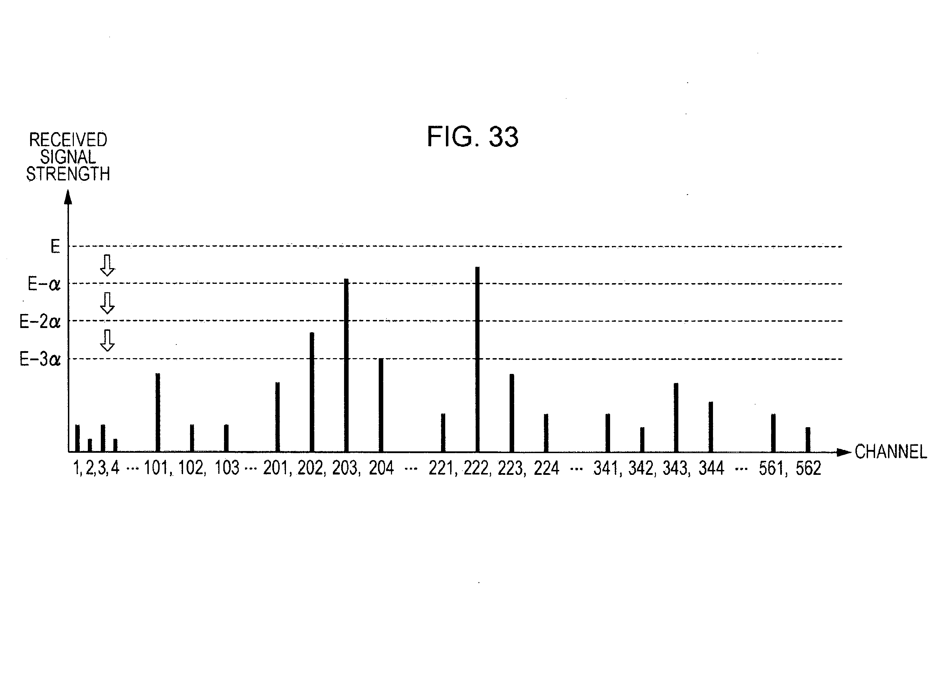

Fig. 33 is a diagram illustrating an example of the received signal strength information.

In Fig. 33, the horizontal axis represents the channel, and the vertical axis represents the received signal strength. On the vertical axis, E, E-α, E-2α, and E-3α are shown as examples of the detection thresholds for the numbers of iterations of 1, 2, 3, and 4, respectively. The received signal strength of each channel illustrated in Fig. 33 is the same as the corresponding one illustrated in Fig. 6. Fig. 33 indicates that as the detection threshold is decreased to E, E-α, E-2α, and E-3α, the number of channels exceeding this detection threshold, that is, the number of selected channels increases to 0, 2, 2, and 4, respectively.

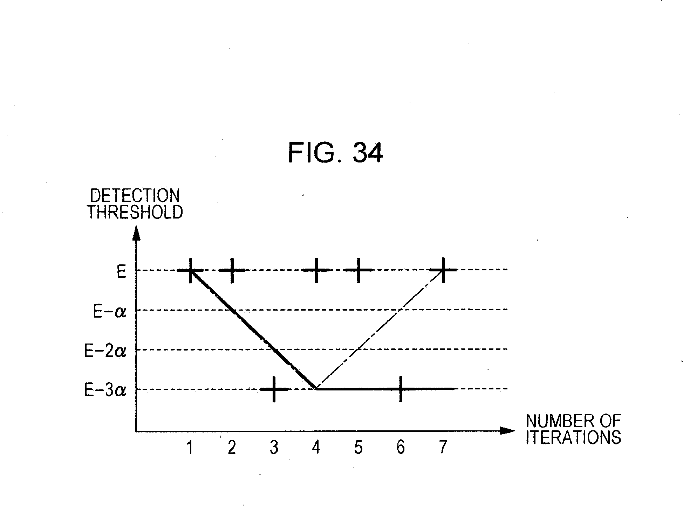

Fig. 34 is a diagram illustrating an example of how the detection threshold information according to the present embodiment is changed.

In Fig. 34, the horizontal axis represents the number of iterations of the cell search, and the vertical axis represents the detection threshold.

In Fig. 34, a solid line indicates that the initial value of the detection threshold is E, and after the detection threshold has reached the predetermined lower limit of E-3α (or the number of iterations has reached four times), the detection threshold changing unit 2541a maintains the detection threshold without changing it.

In Fig. 34, a dot-and-dash line indicates that the initial value of the detection threshold is E, and after the detection threshold has reached the predetermined lower limit of E-3α (or the number of iterations has reached four times), the detection threshold changing unit 2541a increases the detection threshold by the predetermined amount of change α at every iteration of the cell search. In this case, the detection threshold changing unit 2541a may repeatedly perform the process for increasing the detection threshold until the detection threshold reaches a predetermined upper limit (for example, the initial value E). In this way, in the case where the user has moved to a location where the reception strength of a received signal from the base station apparatus 1011 is strong, detection of an unnecessary channel is avoided and the processing time and power consumption can be reduced.

Alternatively, the detection threshold changing unit 2541a may determine the detection threshold at every iteration such that the lower limit appears at least once at a certain cycle of the number of iterations of the cell searches (for example, once every four cell searches). In the example illustrated in Fig. 34, during a cycle composed of three iterations indicated by + symbols, the detection threshold is determined to be E at the first and second iterations and the detection threshold is determined to be E-3α at the third iteration. Note that, the detection threshold changing unit 2341a may determine the cycles of the number of iterations at which the detection threshold is determined to be the lower limit at random at a predetermined probability (for example, 1/4). With this configuration, the processing time and power consumption are reduced as a whole, and it is ensured that a channel is more likely to be detected.

Note that the case where the detection threshold changing unit 2541a changes the detection threshold at each iteration of the cell search has been described above as an example; however, the detection threshold may be changed every time the out-of-service duration reaches a multiple of a certain time interval (for example, 10 minutes), instead of on the basis of the number of iterations. For example, in the case where the detection threshold changing unit 2541a determines the detection threshold to be E at the time when the mobile station apparatus 1025 has exited to the out-of-service area of the cell 1011c, the detection threshold changing unit 2541a may determine the detection threshold to be E-α, E-2α, E-3α, E-3α, E-3α, and E-3α after 10 minutes, 20 minutes, 30 minutes, 40 minutes, 50 minutes, 60 minutes, and 70 minutes have passed as indicated by the solid line in Fig. 34, respectively. Alternatively, the detection threshold changing unit 2541a may determine the detection threshold at certain time intervals as indicated by the dot-and-hash line or + symbols in Fig. 34.

The case where the detection threshold changing unit 2541a changes the detection threshold over the entire band in accordance with the number of times the cell search has been performed or the out-of-service duration has been described above as an example; however, the present embodiment is not limited to this case. In the present embodiment, the detection threshold may be changed for a predetermined frequency band or a frequency band represented by the frequency band information included in the located area history information.

The case where the detection threshold changing unit 2541a includes a configuration for updating the detection threshold that is determined for each use environment information in accordance with the number of iterations of the cell search or the out-of-service duration in addition to the configuration of the detection threshold changing unit 2141a (Fig. 3) has been described above an example; however, the present embodiment is not limited to this case. The detection threshold changing unit 2541a may include the configuration for updating the detection threshold that is determined for each use environment information in accordance with the number of iterations of the cell search or the out-of-service duration described above in addition to the configuration of the detection threshold changing unit 2341a (Fig. 18) or 2441a (Fig. 27).

As described above, in the present embodiment, by changing the detection threshold in accordance with the number of times the cell search has been performed or the out-of-service duration, to-be-selected channels can be screened out and the processing and power consumption related to the synchronization process for unnecessary channels can be reduced.

Also, the case where the detection-threshold correspondence information used by the detection threshold changing unit 2141a (Fig. 3), 2341a (Fig. 18), 2441a (Fig. 27), or 2541a (Fig, 32) to determine the detection threshold includes pieces of detection threshold information representing two or three detection thresholds has been described as example in the above-described embodiments; however, the configuration is not limited to this case. In the above-described embodiments, the detection threshold information may include pieces of detection threshold information representing multiple detection thresholds more than three, for example, four detection thresholds.

The above-described embodiments can also be carried out in the following aspects.
(1A) A mobile station apparatus including: a detection threshold changing unit configured to determine a detection threshold used for detecting a reception wave from a base station apparatus, on the basis of use environment information that represents a use environment of the mobile station apparatus; a channel selecting unit configured to select a channel having a reception level higher than the detection threshold from among channels that constitute the reception wave; and a synchronization processing unit configured to perform a synchronization process on a reception wave of the channel selected by the channel selecting unit.

(2A) The mobile station apparatus according to (1A), wherein the use environment information includes country information regarding an area in which a network connected to the base station apparatus is operated, and the detection threshold changing unit is configured to change the detection threshold on the basis of the country information.

(3A) The mobile station apparatus according to (1A), wherein the use environment information includes carrier information regarding a carrier that operates a network connected to the base station apparatus, and the detection threshold changing unit is configured to change the detection threshold on the basis of the carrier information.

(4A) The mobile station apparatus according to (1A), wherein the use environment information includes frequency band information that represents a frequency band that is in operation in a network connected to the base station apparatus, and the detection threshold changing unit is configured to change the detection threshold on the basis of the frequency band information.

(5A) The mobile station apparatus according to (1A), wherein the use environment information includes location information of the mobile station apparatus, and the detection threshold changing unit is configured to change the detection threshold on the basis of the location information.

(6A) The mobile station apparatus according to (1A), further including: a voltage measuring unit configured to measure a voltage of a power supply of the mobile station apparatus, wherein the use environment information includes voltage information that represents the voltage measured by the voltage measuring unit, and the detection threshold changing unit is configured to change the detection threshold on the basis of the voltage information.

(7A) The mobile station apparatus according to any of (1A) to (6A), further including: a storage unit configured to store history information regarding a history of the use environment information, wherein the history information includes a plurality of pieces of the use environment information, and the detection threshold changing unit is configured to change the detection threshold in accordance with individual use states of the plurality of pieces of the use environment information.

(8A),The mobile station apparatus according to any of (1A) to (7A), wherein the detection threshold changing unit is configured to change the detection threshold in accordance with the number of times the synchronization processing unit has performed the synchronization process or a duration over which the mobile station apparatus is located outside an area over which a radio wave reaches from the base station apparatus.

(9A) The mobile station apparatus according to any of (1A) to (8A), wherein the detection threshold changing unit is configured to select one detection threshold from among at least two predetermined detection threshold candidates, in accordance with the use environment information.

(10A) An integrated circuit included in a mobile station apparatus, executing: a detection threshold changing step of changing a detection threshold used for detecting a reception wave from a base station apparatus, on the basis of use environment information that represents a use environment of the mobile station apparatus; a channel selecting step of selecting a channel having a reception level higher than the detection threshold from among channels that constitute the reception wave; and a synchronization processing step of performing a synchronization process on a reception wave of the channel selected in the channel selecting step.

(11A) A communication method for a mobile station apparatus, including: a detection threshold changing step of changing a detection threshold used for detecting a reception wave from a base station apparatus, on the basis of use environment information that represents a use environment of the mobile station apparatus; a channel selecting step of selecting a channel having a reception level higher than the detection threshold from among channels that constitute the reception wave; and a synchronization processing step of performing a synchronization process on a reception wave of the channel selected in the channel selecting step.

(12A) A communication program causing a computer of a mobile station apparatus to execute: a detection threshold changing step of changing a detection threshold used for detecting a reception wave from a base station apparatus, on the basis of use environment information that represents a use environment of the mobile station apparatus; a channel selecting step of selecting a channel having a reception level higher than the detection threshold from among channels that constitute the reception wave; and a synchronization processing step of performing a synchronization process on a reception wave of the channel selected in the channel selecting step.

According to the aspect of (1A), (10A), (11A), or (12A), the number of channels selected as targets of the synchronization process is reduced and the minimum number of channels are selected in accordance with the use environment of the mobile station apparatus. Accordingly, a possibility of restarting communication can be ensured and the processing time and power consumption for the synchronization process of a cell search can be reduced.
According to the aspect of (2A), the number of selected channels is reduced in accordance with the country in which the network is operated in (1A).
According to the aspect of (3A), the number of selected channels is reduced in accordance with the carrier that operates the network in (1A).
According to the aspect of (4A), the number of selected channels is reduced in accordance with the frequency band that is in operation in the network in (1A).
According to the aspect of (5A), the number of selected channels is reduced in accordance with the location of the mobile station apparatus in (1A).
According to the aspect of (6A), the number of selected channels is reduced in accordance with the voltage of the power supply of the mobile station apparatus in (1A). According to the aspect of (7A), the number of selected channels is reduced in accordance with individual use states of the plurality of use environments in any of (1A) to (6A). According to the aspect of (8A), the number of selected channels is reduced in accordance with the number of iterations of the synchronization process or the duration over which the mobile station apparatus is located outside the area over which a radio wave reaches from the base station apparatus in any of (1A) to (7A).
According to the aspect of (9A), channels constituting the radio wave are selected at a sensitivity selected in accordance with the use environment of the mobile station apparatus in any of (1A) to (8A).

### (Fifth Embodiment)

Embodiments of the present invention will be described below with reference to the drawings.

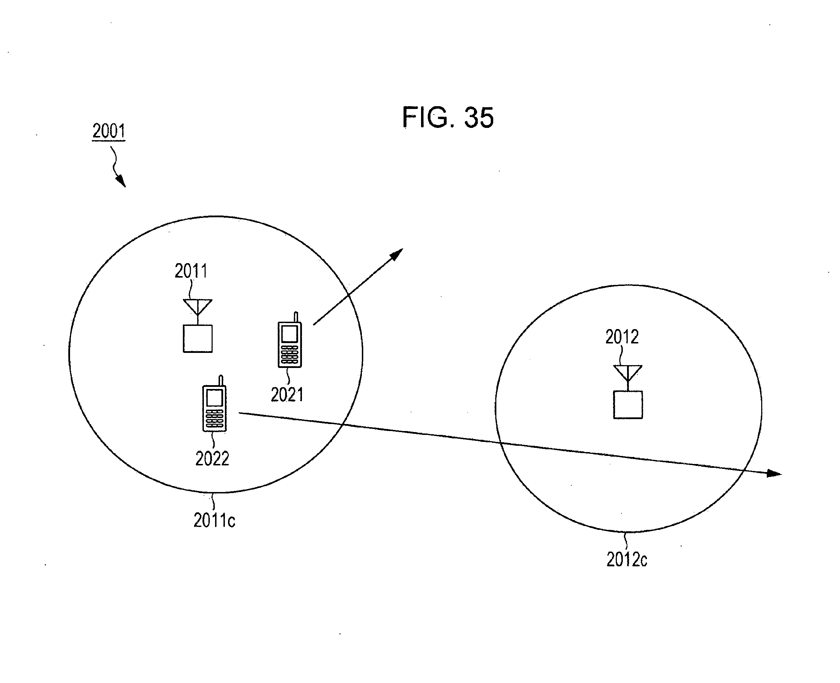

Fig. 35 is a conceptual diagram illustrating a communication system 2001 according to the present embodiment.

The communication system 2001 includes a plurality of (two in an example illustrated in Fig. 35) base station apparatuses 2011 and 2012 and a plurality of (two in the example illustrated in Fig. 35) mobile station apparatuses 2021 and 2022.

The base station apparatuses 2011 and 2012 are apparatuses that transmit and receive signals using radio waves between a core network (CN, not illustrated) and the mobile station apparatuses 2021 and 2022 located within cells 2011c and 2012c. The base station apparatuses 2011 and 2012 each may be simply referred to as an eNB (evolved Node B). The cells 2011c and 2012c are areas in which the base station apparatuses 2011 and 2012 are capable of transmitting and receiving signals to and from the mobile station apparatuses 2021 and 2012 using radio waves, respectively. The base station apparatuses 2011 and 2012 are arranged at different locations.

The base station apparatuses 2011 and 2012 may be either large-scale base station apparatuses (macrocells) or small-scale base station apparatuses (for example, microcells, picocells, or femtocells). A macrocell refers to the cell 2011c or 2012c having a radius of approximately several hundreds of meters to approximately several kilometers, or a base station apparatus having such a cell. A microcell refers to the cell 2011c or 2012c having a radius of approximately several tens of meters to approximately several hundreds of meters, or a base station apparatus having such a cell. A picocell refers to the cell 2011c or 2012c having a radius of approximately several meters to approximately several tens of meters, or a base station apparatus having such a cell. A femtocell refers to the cell 2011c or 2012c having a radius of approximately several meters or smaller, or a base station apparatus having such a cell. The femtocell is also referred to as a home base station apparatus (HeNB: Home eNodeB). Accordingly, the cells 2011c and 2012c and the like connected to one network form a service area in which communication can be performed using the network.

A network connected to the base station apparatuses 2011 and 2012 and the like is, for example, a PLMN (Public Land Mobile Network, public wireless communication network). A PLMN is a network in which a communication carrier provides communication services to users (subscribers). The adopted communication scheme and frequency band, the connected base station apparatuses 2011 and 2012, and so forth may differ from country to country in which and from carrier to carrier by which the network is operated. The communication scheme is, for example, LTE (Long Term Evolution), LTE-A (LTE-Advanced), W-CDMA (Wideband Code Division Multiple Access), GSM (registered trademark) (Global System for Mobile Communications), or the like.

Each of the mobile station apparatuses 2021 and 2022 is an apparatus that realizes communication with its communication partner by transmitting and receiving signals using radio waves via the base station apparatus 2011 or 2012. The mobile station apparatuses 2021 and 2022 are also referred to as terminal apparatuses or user equipments (UEs). The mobile station apparatuses 2021 and 2022 are, for example, mobile phones, multifunction mobile phones (including so-called smartphones), tablet terminal apparatuses, or the like.

A service area does not necessarily occupy the entire space, as illustrated in Fig. 35. The mobile station apparatuses 2021 and 2022 may be unable to receive signals from the base station apparatuses 2011 and 2012 because of arrangement of the base station apparatuses 2011 and 2012, output of radio waves thereof, arrangement of buildings and other obstacles, noise sources, or the like. An arrow originating from the mobile station apparatus 2021 indicates that the mobile station apparatus 2021 is originally located at a location belonging to the cell 2011c, and then is moved to outside of the service area including the cell 2011c (to an out-of-service area). On the other hand, an arrow originating from the mobile station apparatus 2022 indicates that the mobile station apparatus 2022 is originally located at a location belonging to the cell 2011c, and then is moved sequentially to the out-of-service area, the cell 2012c, and the out-of-service area. The mobile station apparatuses 2021 and 2022 search (perform a cell search) for the base station apparatus 2011 or 2012 related to a cell to which the mobile station apparatuses 2021 and 2022 belong (in which they are located) during booting or in a state in which the mobile station apparatuses 2021 and 2022 are once located in the out-of-service area and become unable to perform communication. As a result of a successful search, the mobile station apparatuses 2021 and 2022 become able to communicate with the base station apparatus 2011 or 2012.

### (Configuration of Mobile Station Apparatus)

Next, a configuration of the mobile station apparatus 2021 according to the present embodiment will be described. The mobile station apparatus 2022 has a configuration similar to that of the mobile station apparatus 2021, and thus a description regarding the mobile station apparatus 2021 is incorporated herein by reference. In the following description, a case where the mobile station apparatus 2021 performs communication mainly using the base station apparatus 2011 is used as an example; however, the present embodiment is not limited to this example, and the mobile station apparatus 2021 may perform communication using another base station apparatus, for example, the base station apparatus 2012.

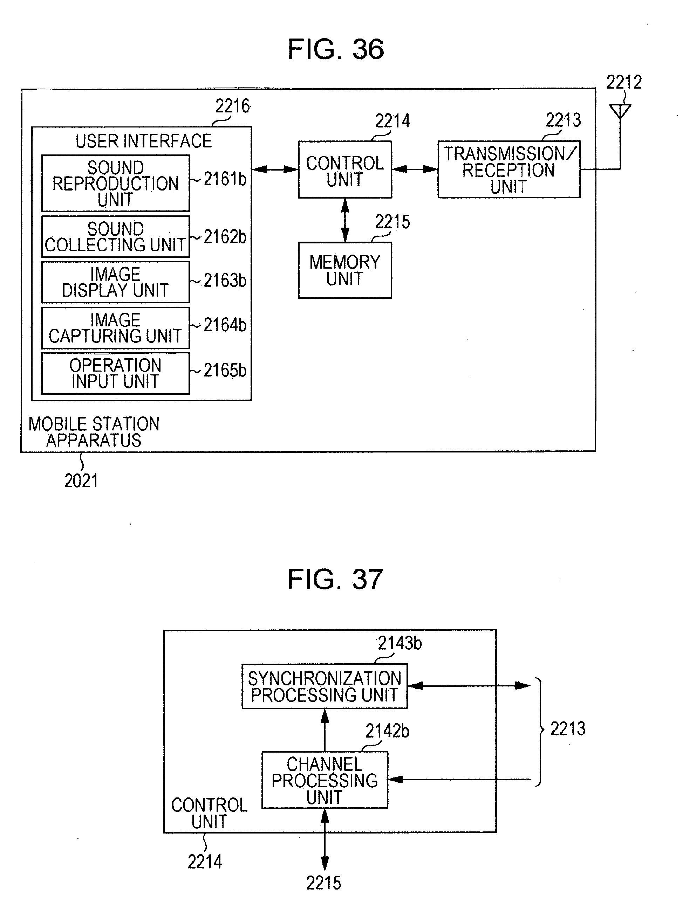

Fig. 36 is a schematic block diagram illustrating a configuration of the mobile station apparatus 2021 according to the present embodiment.

The mobile station apparatus 2021 includes an antenna 2212, a transmission/reception unit 2213, a control unit 2214, a memory unit (storage unit) 2215, and a user interface 2216.

The antenna 2212 receives a reception wave from the base station apparatus 2011, that is, a receive signal of a radio frequency band that has reached it in a form of a radio wave, and outputs the received signal to the transmission/reception unit 2213. The antenna 2212 transmits a transmit signal of a radio frequency band input thereto from the transmission/reception unit 2213 to the base station apparatus 2011 in a form of a radio wave.

The transmission/reception unit 2213 converts the received signal of the radio frequency band input thereto from the antenna 2212 into a received signal of a base frequency band, and outputs the resulting received signal to the control unit 2214. The transmission/reception unit 2213 converts a transmit signal of a base frequency band input thereto from the control unit 2214 into a radio frequency band, and outputs the resulting transmit signal to the antenna 2212.

Also, the transmission/reception unit 2213 measures, for each channel, a reception level (received signal strength, RSSI: Received Signal Strength Indicator) received from the base station apparatus 2011. The transmission/reception unit 2213 outputs received signal strength information representing the received signal strength measured for each channel to the control unit 2214. Here, a channel indicates a frequency or frequency band that constitutes a radio wave used for communication, and a frequency or frequency band serving as units of data allocation. For example, in the GSM (registered trademark) scheme, individual channels are allocated at intervals of 200 kHz. Also, in the LTE scheme, channels are also referred to as subcarriers, and a bandwidth of one channel is 15 kHz. In the LTE scheme, a plurality of (for example, approximately 600 in the case where the bandwidth is 10 MHz) channels are used for communication between the mobile station apparatus 2021 and the base station apparatus 2011.

The following description employs the case of mainly using the received signal strength (RSSI) as an index of the reception level as an example; however, in the present embodiment, an index of the reception level such as RSRP (Reference Signal Received Power) or RSRQ (Reference Signal Received Quality) may be used.

The control unit 2214 controls processes performed by the mobile station apparatus 2021. The control unit 2214 controls, for example, inputting of a received signal from the transmission/reception unit 2213 and outputting of a transmit signal to the transmission reception unit 2213.

The control unit 2214 outputs, to the user interface 2216, user data among the received signal input thereto from the transmission/reception unit 2213; and outputs, to the transmission/reception unit 2213, user data input thereto from the user interface 2216 as a transmit signal. Here, user data is a signal that is transmitted or received by the mobile station apparatus 2022 serving as a communication partner, that is, an audio signal, a video signal, text data, or the like.

The control unit 2214 controls starting or stopping of a process, changing of a mode, or the like in accordance with an operation input signal input thereto from the user interface 2216; and outputs the obtained image signal, text signal, or the like to the user interface 2216. The control unit 2214 sometimes uses data read from the memory unit 2215 when it performs a process. Also, the control unit 2214 stores data generated through a process in the memory unit 2215. The control unit 2214 determines that the mobile station apparatus is located in an out-of-service area in the case where the received signal strength is equal to a predetermined detection threshold (for example, -120 (dBm)) or lower than the detection threshold in all the receivable frequency bands, for example. The control unit 2214 determines that the mobile station apparatus is located in the area of the cell 2011c in the case where the received signal strength exceeds the detection threshold. A more detailed configuration of the control unit 2214 will be described later.

The memory unit 2215 pre-stores data used in processes performed by the control unit 2214, for example, the number of to-be-selected channels and detection thresholds used for detecting a frequency band of a received signal. Also, the memory unit 2215 stores data obtained by the control unit 2214 as located area history information

The user interface 2216 presents, to the user, information based on the received signal input thereto from the control unit 2214; and outputs, to the control unit 2214, information accepted from the user.

For example, the user interface 2216 causes a sound reproduction unit 2161b (for example, a speaker) to reproduce sound based on an audio signal input thereto from the control unit 2214; and outputs an audio signal of sound recorded by a sound collecting unit 2162b (for example, a microphone) to the control unit 2214.

Also, the user interface 2216 causes an image display unit 2163b (for example, a display) to display an image represented by an image signal input thereto from the control unit 2214; and outputs an image signal representing an image captured by an image capturing unit 2164b (for example, a camera) to the control unit 2214.

The user interface 1216 outputs an operation input signal corresponding to a user input operation detected by an operation input unit 2165b (for example, a touch sensor) to the control unit 2214. The operation input unit and the image display unit may be integrated into a touchscreen. Also, some or all of the sound reproduction unit 2161b, the sound collecting unit 2162b, the image display unit 2163b, the image capturing unit 2164b, and the operation input unit 2165b may be integrally formed in the mobile station apparatus 2021 or may be provided separately from the mobile station apparatus 2021.

### (Configuration of Control Unit)

Next, a configuration of the control unit 2214 according to the present embodiment will be described.

Fig. 37 is a schematic block diagram illustrating a configuration of the control unit 2214 according to the present embodiment.

The control unit 2214 includes a channel processing unit 2142b and a synchronization processing unit 2143b.

The channel processing unit 2142b selects as many channels as the number of channels that is preset on the basis of use environment information that represents a use environment of the mobile station apparatus 2021, from a received signal received from the base station apparatus 2011 or another nearby base station apparatus. Here, data that represents a predetermined number of channels N is pre-stored in the memory unit 2215. The channel processing unit 2142b reads the number of channels N from the memory unit 2215. Then, the channel processing unit 2142b outputs a selected channel list that represents the selected channels to the synchronization processing unit 2143b.

The channel processing unit 2142b selects channels by performing any of the following processes (1) to (4), for example.
(1) The channel processing unit 2142b sequentially selects channels from a channel having the highest reception strength up to a channel having the N-th highest reception strength, from among all channels (for example, 1000 channels) that can be used by the mobile station apparatus, for example. Here, N is an integer that represents a predetermined number of channels (for example, 10 channels) and is larger than 0. With this configuration, channels having high reception strengths are preferentially selected, and thus an unnecessary process of a synchronization operation that is performed thereafter for channels having weak reception strengths is reduced, whereby the processing amount and power consumption involving such a process can be reduced.
(2) The channel processing unit 2142b may set a predetermined detection threshold as the lower limit, and may sequentially select channels from a channel having the highest received signal strength up to a channel having the N-th highest received signal strength, from among channels having received signal strengths exceeding the lower limit among all channels that can be used by the base station apparatus 2021. In the case where the number of channels M having received signal strengths exceeding the lower limit is less than the set number of channels N, channels up to the channel having the M-th highest received signal strength are selected. With this configuration, only channels having reception strengths at least higher than the predetermined detection threshold are selected, and thus a possibility that a synchronization process to be performed thereafter is successful can be improved.
(3) The channel processing unit 2142b may select, for each predetermined frequency band (band) b, as many channels as the number of channels Nb predetermined in the frequency band b from among channels included in the frequency band b. Here, data that represents the number of channels Nb is pre-stored in the memory unit 2215 in association with the frequency band b. The channel processing unit 2142b reads the number of channels Nb from the memory 2215. The channel processing unit 2142b selects channels from a channel having the highest received signal strength up to a channel having the Nb-th highest received signal strength from among all channels (for example, 1200 channels) included in each frequency band b. The number of channels Nb to be selected may be the same or different between the frequency bands b. With this configuration, channels on which a synchronization process is to be performed are selected for each frequency band, and thus the frequency band to be used can be adjusted.
   Here, the frequency band b is made up of a plurality of channels (for example, 72 channels in the case where the bandwidth is 1.4 MHz), and is a unit that is allocated for transmission or reception of data between this apparatus (the mobile station apparatus 2021) and the base station apparatus 2011.
(4) The channel processing unit 2142b may select channels having received signal strengths exceeding the lower limit in each frequency band b, and select channels from a channel having the highest reception strength up to the Nb-th received signal strength from among the selected channels. The lower limit of the received signal strength of the frequency band b may be the same or different between the frequency bands b. The number of to-be-selected channels N may be the same or different between the frequency bands b. With this configuration, channels having the reception strength at least higher than the predetermined detection threshold are selected, and thus a possibility that a synchronization process to be performed thereafter is successful can be improved even in the case where channels are selected on a frequency-by-frequency basis.

In the above-described processes (1)-(4), in the case where there are a plurality of channels having the same received signal strength, the channel processing unit 2142b may select any of the plurality of channels in a given manner. The channel processing unit 2142b may preferentially select a channel assigned a smaller number (that is, channel of a lower frequency), or may preferentially select a channel assigned a larger number (that is, a channel of a higher frequency).

Also, in the above-described processes (1) and (2), in the case where there are a plurality of channels having the same received signal strength, the channel processing unit 2142b may preferentially select a channel included in a frequency band of lower frequencies. Alternatively, the channel processing unit 2142b may preferentially select a channel included in a frequency band of higher frequencies, or may preferentially select a channel included in a predetermined frequency band.

In the following description, the detection threshold used in the above-described processes (2) and (4), that is, the lower limit, may be referred to as a lower limit detection threshold.

Also, immediately after a cell search (described later) has ended, broadcast information is input to the channel processing unit 2142b from the transmission/reception unit 2213 as a received signal from the base station apparatus 2011, and the channel processing unit 2142b extracts located area history information from the input broadcast information. The channel processing unit 2142b may store the extracted located area history information in the memory unit 2215. Alternatively, the channel processing unit 2142b may extract the located area history information from demodulated broadcast information obtained through a synchronization process (described later) by the synchronization processing unit 2143b, and may store the extracted located area history information in the memory unit 2215.

The synchronization processing unit 2143b performs a synchronization process on reception waves of channels represented by the selected channel list input thereto from the channel processing unit 2142b. Here, the selected channel list is input to the synchronization processing unit 2143b from the channel processing unit 2142b, and broadcast information which has been modulated for each channel is input to the synchronization processing unit 2143b from the transmission/reception unit 2213 as a received signal received from the base station apparatus 2011. The synchronization processing unit 2143b detects a synchronization signal included in the broadcast information input for each channel represented by the input selected channel list. The synchronization processing unit 2143b identifies data that configures the broadcast information using the detected synchronization signal, and decodes the identified data to obtain the broadcast information.
The synchronization processing unit 2143b attempts such a process until a channel (usable channel) for which both detection of a synchronization signal and demodulation of broadcast information are successful is detected. The synchronization processing unit 2143b outputs a location registration request signal to the transmission/reception unit 2213 as a transmit signal that uses the usable channel intended for the base station apparatus 2011 (camp-on). A location registration request signal is a signal used to make a request for registration of the mobile station apparatus as the one used for communication. Thereafter, the transmission/reception unit 2213 receives a location registration completion signal and located area history information from the base station apparatus 2011. In this way, the mobile station apparatus 2021 becomes able to perform communication. Examples of the synchronization process will be described later. The channel selection process performed by the channel processing unit 2142b and the synchronization process performed by the synchronization processing unit 2143b, which are described above, are collectively referred to as a cell search.

### (Example of Received Signal Strength Information)

Next, an example of the received signal strength information will be described.

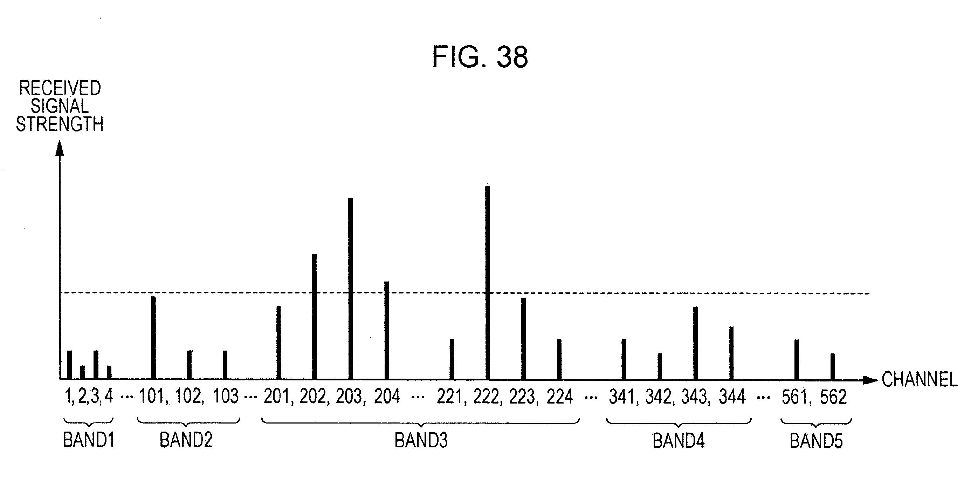

Fig. 38 is a diagram illustrating an example of the received signal strength information.

In Fig. 38, the horizontal axis represents the channel, and the vertical axis represents the received signal strength. Units of the vertical axis are omitted. In this example, channels that can be received by the mobile station apparatus 2021 are channels 1-562. The height of the vertical line of each channel represents the received signal strength of the channel. The numbers of channels illustrated Fig. 38 in descending order of received signal strength are 222, 203, 202, 204, 101, 223, 201, 343, ···. In the case where the predetermined number of channels N is 6 and the channel processing unit 2142b performs the above-described process (1), the channel processing unit 2142b selects the channels 222, 203, 202, 204, 101, and 223 having high received signal strengths.

In Fig. 38, a dashed line represents an example of the detection threshold used in the above-described process (2).
In the case where the channel processing unit 2142b performs the above-described process (2), the channel processing unit 2142b selects the channels 222, 203, 202, and 204 having received signal strengths higher than this detection threshold. In the case where the predetermined number of channels N is 3, the channel processing unit 2142b selects the channels 222, 203, and 202 in descending order of received signal strength from among the selected four channels. In another example, in the case where the predetermined number of channels N is 6, the predetermined number of channels N is larger than the number of channels selected based on the detection threshold, which is 4. Thus, the channel processing unit 2142b selects all the four channels 222, 203, 202, and 204 that have been selected based on the detection threshold.

In Fig. 38, BANDs 1-5 illustrated below the horizontal axis represent respective frequency bands. In this example, BANDs 1, 2, 3, 4, and 5 include channels 1-100, 101-200, 201-300, 301-400, and 500-562, respectively. It is assumed here that the predetermined number of channels Nb for each frequency band is determined to be 0, 1, 3, 1, and 0 for BANDs 1, 2, 3, 4, and 5, respectively. In this case, when the channel processing unit 2142b performs the above-described process (3), the channel processing unit 2142b selects the channel 101, the channels 222, 203, and 202, and the channel 343 for BANDs 2, 3, and 4, respectively. Because the predetermined number of channels Nb for Bands 1 and 5 is 0, no channel is selected from BANDs 1 and 5.

Next, it is assumed that the channel processing unit 2142b performs the above-described process (4) in the case where the detection threshold illustrated in Fig. 38 is determined and the predetermined number of channels Nb for each frequency band is determined to be 0, 1, 3, 1, and 0 for BANDs 1, 2, 3, 4, and 5, respectively. In this case, because there is no channel having a received signal strength exceeding the detection threshold in BANDs 1, 2, 4, and 5, no channel is selected from these frequency bands. The channel processing unit 2142b selects three channels in descending order of the received signal strength from among channels included in BAND 3 and having received signal strengths exceeding the detection threshold. Here, the channels 222, 203, and 202 are selected.

### (Channel Selection Process)

Next, a channel selection process of a communication process according to the present embodiment will be described. In the following description, the case where the channel processing unit 2142b performs the process (4) is used as an example. The present embodiment is not limited to this example, and the channel processing unit 2142b may perform any of the processes (1)-(3).

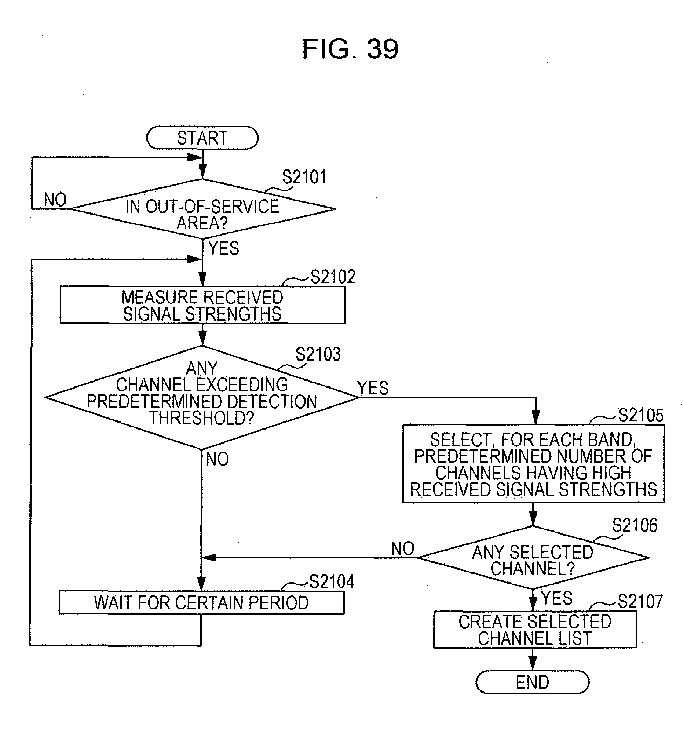

Fig. 39 is a flowchart illustrating a channel selection process according to the present embodiment.
(Step S2101) The control unit 2214 determines whether or not the mobile station apparatus (mobile station apparatus 2021) is located in an out-of-service area of the cell 2011c of the base station apparatus 2011. For example, if the received signal strength is equal to a predetermined reference threshold (for example, -120 (dBm)) or is lower than the reference threshold on all the receivable frequency bands, the control unit 2214 determines that the mobile station apparatus is located in the out-of-service area. If the received signal strength exceeds the reference threshold and synchronization with the base station apparatus 2011 is achieved, the control unit 2214 determines that the mobile station apparatus is located in a service area of the cell 2011c. If it is determined that the mobile station apparatus is in the out-of-service area (YES in step S2101), the process proceeds to step S2102. If it is determined that the mobile station apparatus is in the service area (NO in step S2101), step S2101 is repeated.

(Step S2102) The transmission/reception unit 2213 sequentially measures received signal strengths of all receivable channels. Then, the process proceeds to step S2103.
(Step S2103) The channel processing unit 2142b determines whether or not there is a channel having the measured received signal strength exceeding a predetermined detection threshold. If it is determined that there is a channel having the received signal strength exceeding the predetermined detection threshold (YES in step S2103), the channel processing unit 2142b selects the channel having the received signal strength exceeding the detection threshold. Then, the process proceeds to step S2105. If it is determined that there is no channel having the received signal strength exceeding the predetermined detection threshold (NO in step S2103), the process proceeds to step S2104.
(Step S2104) The control unit 2214 temporarily stops the process of this flowchart, and waits for a certain period (for example, 10 minutes). Then, the process returns to step S2102.

(Step S2105) The channel processing unit 2142b selects, for each frequency band, as many channels as a predetermined number of channels in descending order of received signal strength from among the channels selected in step S2104. Then, the process proceeds to step S2106.
(Step S2106) The channel processing unit 2142b determines whether or not there is a channel selected in step S2105. If it is determined that there is a selected channel (YES in step S2106), the process proceeds to step S2107. If it is determined that there is no selected channel (NO in step S2106), the process proceeds to step S2104.
(Step S2107) The channel processing unit 2142b stores the number assigned to each selected channel and the received signal strength of the channel in the memory unit 2215 in association with each other, and generates a selected channel list. Here, the channel processing unit 2142b may rearrange combinations of the channel number and the received signal strength in descending order of received signal strength. Then, the process of this flowchart ends.

In the case where the channel processing unit 2142b performs the process (1) in which the lower limit detection threshold is not set, step S2103 of Fig. 39 may be omitted. In such a case, in step S2105, the channel processing unit 2142b selects the predetermined number of channels in descending order of received signal strength from all receivable channels.

In the case where the channel processing unit 2142b performs the process (2) in which the lower limit detection threshold is set, operation in step S2105 is changed in Fig. 39. In such a case, in step S2105, the channel processing unit 2142b selects the predetermined number of channels in descending order of received signal strength from among all receivable channels instead of selecting channels from each band.

In the case where the channel processing unit 2142b performs the process (3) in which the lower limit detection threshold is not set and the number of channels is set for each band, step S2103 may be omitted in Fig. 39 as in the process (1).

Also, in the individual processes (1) to (4), waiting for a certain period in step S2104 may be omitted.

### (Synchronization Process)

Next, a synchronization process of the communication process according to the present embodiment will be described.

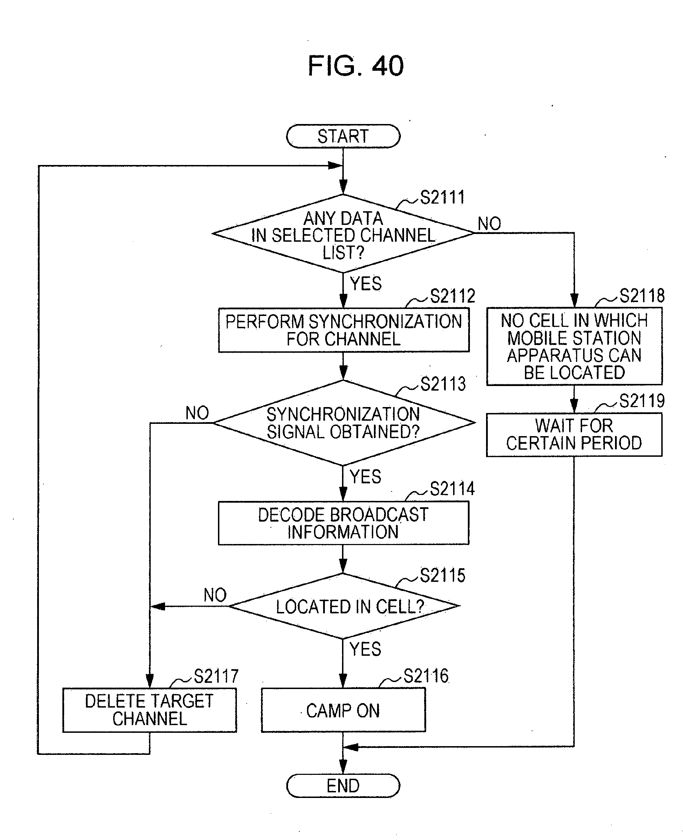

Fig. 40 is a flowchart illustrating a synchronization process according to the present embodiment.
(Step S2111) The synchronization processing unit 2143b determines whether or not there is data that represents a combination of the selected channel and the received signal strength in the selected channel list input thereto from the channel processing unit 2142b. If it is determined that there is data that represents a combination of the selected channel and the received signal strength in the selected channel list (YES in step S2111), the process proceeds to step S2112. If it is determined that there is no such data in the selected channel list (NO in step S2111), the process proceeds to step S2118.
(Step S2112) The synchronization processing unit 2143b sets the first channel included in the selected channel list as the target channel, and performs a known synchronization process for the channel. Here, the synchronization processing unit 2143b detects a synchronization signal mapped to the target channel among the received signal received from the base station apparatus 2011. The synchronization signal is, for example, an SCH synchronization signal mapped to a synchronization channel (SCH). The synchronization signal includes a cell ID for identifying the base station apparatus 2011. Based on the SCH synchronization signal from the received synchronization signal, the synchronization processing unit 2143b identifies ranges of individual frames in the received signal, that is, frame timings. Then, the process proceeds to step S2113.

(Step S2113) The synchronization processing unit 2143b determines whether or not the SCH synchronization signal has been successfully obtained. In this way, whether or not the synchronization process is successful is determined. If it is determined that the SCH synchronization signal has been successfully obtained (YES in step S2113), the process proceeds to step S2114. If it is determined that the SCH synchronization signal has not been successfully obtained (NO in step S2113), the process proceeds to step S2117.
(Step S2114) The synchronization processing unit 2143b decodes BCCH broadcast information included in the received signal. Then, the process proceeds to step S2115.
(Step S2115) The synchronization processing unit 2143b determines whether or not the mobile station apparatus is located within the cell 2011c of the base station apparatus 2011, that is, whether or not the base station apparatus 2011 is an appropriate base station apparatus, on the basis of the BCCH broadcast information obtained from decoding. For example, the synchronization processing unit 2143b determines whether or not there is PLMN represented by the BCCH broadcast information that matches PLMN represented by preset subscriber information (SIM: Subscriber Identity Module). If it is determined that the mobile station apparatus is located within the cell (YES in step S2115), the process proceeds to step S2116. If it is determined that the mobile station apparatus is not located within the cell (NO in step S2115), the process proceeds to step S2117.

(Step S2116) The synchronization processing unit 2143b transmits a location registration request signal to the base station apparatus 2011 so as to perform location registration (camp-on), and becomes ready for communication. Thereafter, the process of this flowchart, consequently, the cell search ends.
(Step S2117) The synchronization processing unit 2143b deletes the first channel number and received signal strength of the target channel included in the selected channel list, and updates the target channel to a channel having the next highest received signal strength. Then, the process returns to step S2111.
(Step S2118) The synchronization processing unit 2143b determines that there is no cell in which the mobile station apparatus can be located. Then, the process proceeds to step S2119.
(Step S2119) The mobile station apparatus waits for a certain period (for example, 10 minutes), and the process of this flowchart ends. Thereafter, the channel selection process (Fig. 39) is repeated.

In this way, in the above-described example, by preferentially selecting a predetermined number of channels having high received signal strengths, a possibility that the minimum number of channels to be subjected to the synchronization process is to be selected is left and the number of to-be-selected channels is reduced. An amount of power consumption for the synchronization process is much (for example, approximately 50-100 times) larger than that of the case where the synchronization process is not performed, that is, than that of the channel selection process. Accordingly, by reducing the time and processing amount of the synchronization process, the entire power consumption for the cell search can be reduced.

As described above, in the present embodiment, a predetermined number of channels having high reception levels are selected from among channels that constitute a reception wave received from the base station apparatus, on the basis of reception strengths of individual channels that serve as use environment information representing the use environment of the mobile station apparatus; and the synchronization process is performed on the selected channels.

In this way, the number of channels to be selected as targets of the synchronization process is reduced in accordance with the reception strengths of the individual channels serving as the use environment of the mobile station apparatus. Accordingly, a possibility of restarting communication can be ensured and the processing time and power consumption for the synchronization process that is performed after the channel selection process can be reduced.

### (Sixth Embodiment)

Next, a sixth embodiment of the present invention will be described. Configurations that are the same as those of the above-described embodiments are denoted by the same reference signs, and the description is incorporated herein by reference.

A communication system 2002 (not illustrated) according to the present embodiment includes a mobile station apparatus 2023 instead of the mobile station apparatus 2021 of the communication system 2001 (Fig. 35). Now, a configuration of the mobile station apparatus 2023 will be described.

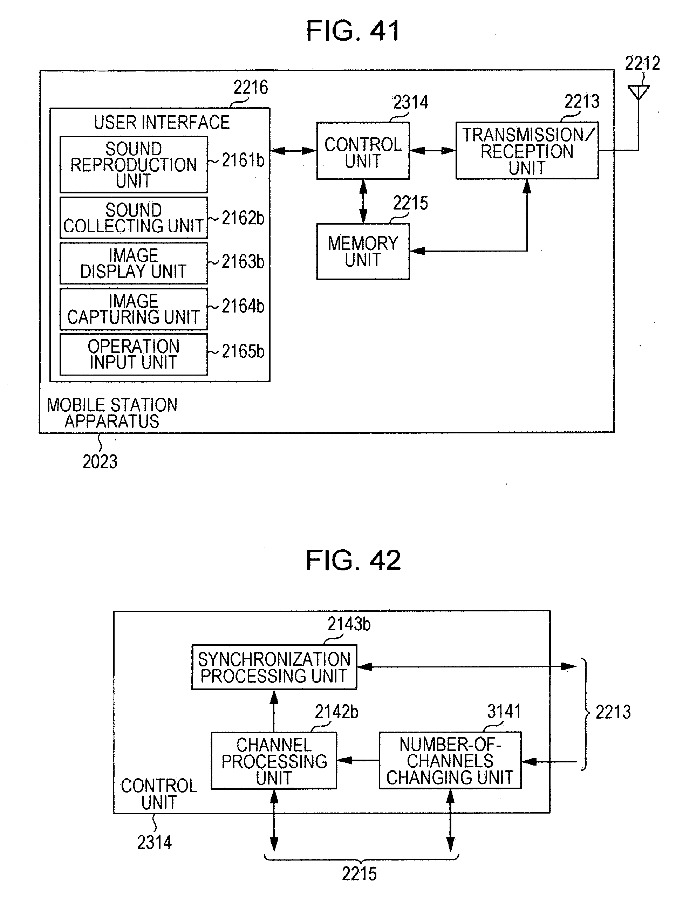

Fig. 41 is a schematic block diagram illustrating a configuration of the mobile station apparatus 2023 according to the present embodiment.

The mobile station apparatus 2023 includes the antenna 2212, the transmission/reception unit 2213, the memory unit 2215, the user interface 2216, and a control unit 2314. That is, the mobile station apparatus 2023 includes the control unit 2314 instead of the control unit 2214 of the mobile station apparatus 2021 (Fig. 36).

Next, a configuration of the control unit 2314 according to the present embodiment will be described.

Fig. 42 is a schematic block diagram illustrating a configuration of the control unit 2314 according to the present embodiment.

The control unit 2314 includes a number-of-channels changing unit 3141, the channel processing unit 2142b, and the synchronization processing unit 2143b. That is, the control unit 2314 includes the number-of-channels changing unit 3141 in the control unit 2214 (Fig. 37).

Here, the number-of-channels changing unit 3141 reads, for example, the located area history information from the memory unit 2215, and extracts country information from the latest located area history information entry of the read located area history information. The located area history information is information representing a history regarding the base station apparatus 2011 related to a cell to which the mobile station apparatus 2021 belongs or regarding a network connected to the base station apparatus 2011. The located area history information includes communication operator information and frequency band information as well as the country information. The located area history information is information included in broadcast information. Accordingly, immediately after a cell search has ended, broadcast information is input as a received signal received from the base station apparatus 2011 to the number-of-channels changing unit 3141 from the transmission/reception unit 2213, and the number-of-channels changing unit 3141 extracts the located area history information from the input broadcast information. The number-of-channels changing unit 3141 may store the extracted located area history information in the memory unit 2215. Alternatively, the number-of-channels changing unit 3141 may extract the located area history information from demodulated broadcast information obtained through a synchronization process by the synchronization processing unit 2143b, and may store the extracted located area history information in the memory unit 2215. An example of the located area history information will be described later.

The number-of-channels changing unit 3141 reads number-of-channels information corresponding to the extracted country information from number-of-channels correspondence information stored in the memory unit 2215, and outputs the read number-of-channels information to the channel processing unit 2142b. In this way, the number of channels set in the channel processing unit 2142b is changed to the number of channels represented by the number-of-channel information input from the number-of-channels changing unit 3141. The channel processing unit 2142b performs a channel selection process using the resulting number of channels, and creates a selected channel list. The channel processing unit 2142b outputs the selected channel list to the synchronization processing unit 2143b.

The number-of-channels correspondence information is information in which the country information serving as the use environment information and the number of channels are associated with each other. An example of the number-of-channels correspondence information will be described later.

### (Example of Located Area History Information)

Next, an example of the located area history information according to the present embodiment will be described.

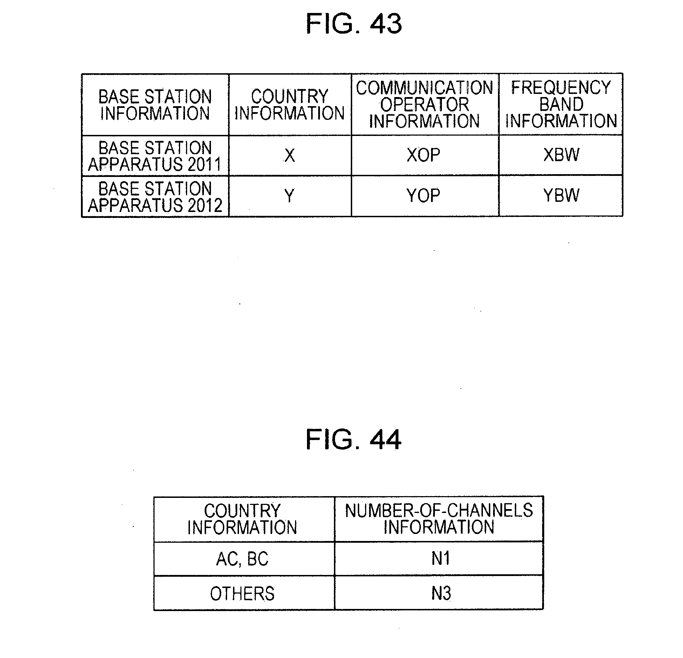

Fig. 43 is a diagram illustrating an example of the located area history information according to the present embodiment.

The located area history information illustrated in Fig. 43 is obtained when the mobile station apparatus 2022 (Fig. 35) is moved from a location belonging to the cell 2011c of the base station apparatus 2011 to the service area of the cell 2012c through the out-of-service area.

Fig. 43 shows, sequentially from the leftmost column to the right side, base station information, country information, communication operator information, and frequency band information. The base station information is information representing a base station apparatus that covers an area in which the mobile station apparatus 2022 is located. The country information is information (MCC) representing a country which is an area in which a network connected to the base station apparatus is operated. The communication operator information is information (MNC: Mobile Network Code) representing an operator (carrier) that operates the network connected to the base station apparatus. A combination of MCC and MNC serves as PLMN identification information (PLMN Identify). The frequency band information is information representing a frequency band on which the network connected to the base station apparatus is operated, that is, a frequency band that can be used by the base station apparatus. These pieces of information are included in broadcast information (BCCH broadcast information) that has been mapped to and received on a BCCH (Broadcast Control Channel). The memory unit 2215 may store, as the located area history information, not only the latest information but also information obtained when the mobile station apparatus has been located in areas before. In such a case, after the number of pieces of located area history information stored in the memory unit 2215 has reached a predetermined upper limit (for example, 10), the channel processing unit 2142b may delete the oldest information.

In the second row of Fig. 43, country information X, communication operator information XOP, and frequency band information XBW are associated with the base station apparatus 2011. In the third row, country information Y, communication operator information YOP, and frequency band information YBW are associated with the base station apparatus 2012.

### (Example of Number-of-Channels Correspondence Information)

Next, an example of the number-of-channels correspondence information according to the present embodiment will be described.

Fig. 44 is a diagram illustrating an example of the number-of-channels correspondence information according to the present embodiment.

In Fig. 44, the left column shows the country information serving as the use environment information, and the right column shows the number-of-channels information.

The second row indicates that pieces of country information AC and BC are associated with number-of-channels information N1. The third row indicates that country information other than AC and BC is associated with number-of-channels information N3. Accordingly, in the case where the country information AC is extracted from the located area history information, the number-of-channels changing unit 3141 sets the number of channels N1 in the channel processing unit 2142b. In the case where the country information other than AC and BC (for example, country information CC) is extracted from the located area history information, the number-of-channels changing unit 3141 sets the number of channels N3. In the case where no located area history information is stored such as immediately after the mobile station apparatus 2021 has been shipped, the number-of-channels changing unit 3141 also sets the number of channels N3.

Now, the pieces of country information AC and BC represent countries in which a network that can be used by the mobile station apparatus 2021 is operated, and the number of channels N1 (for example, 100 channels) is larger than the number of channels N3 (for example, 10).

When the mobile station apparatus 2021 is moved to the out-of-service area after being located in the country in which the usable network is operated, the number of channels N1 that is larger than the number of channels N3 is selected.

Consequently, in the case where the pieces of country information AC and BC are obtained, a selected channel list including N1 channels is created and is output to the synchronization processing unit 2143b.

This increases a possibility that a larger number of reception waves of weak received electrical field strength are included in the selected channel list even when the mobile station apparatus 2021 is located at a location where a radio wave does not reach from the base station apparatus 2011 or a location where a radio wave is difficult to reach (for example, a remote location). Consequently, a synchronization operation is performed by the synchronization processing unit 2143b on channels selected from received signals of a larger number of channels, and thus a possibility that the mobile station apparatus is located within the cell 2011c of the base station apparatus 2011 and becomes able to perform communication increases.

On the other hand, when the mobile station apparatus 2021 is operating in a country in which the usable network is not operated, the number of channels N3 that is smaller than the number of channels N1 is selected.

Consequently, in the case where the country information other than the pieces of country information AC and BC is obtained, a selected channel list including N3 channels is created.

In this way, as a result of a selected channel list in which the number of selected channels is limited to N3 being created, an opportunity that noise, for example, ambient noise or white noise, or a received signal from another system is erroneously detected by the mobile station apparatus 2021 is reduced, and thus the processing amount related to the synchronization process performed thereafter is reduced. Also, because the synchronization process is not completely eliminated, a possibility that the mobile station apparatus enters a state in which the synchronization process can be performed on a channel of a strong reception wave is left.

Note that, in the present embodiment, the country information and country's frequency band information which represents a frequency band used in the country are associated with each other in the number-of-channels correspondence information stored in the memory unit 2215. In such a case, the number-of-channels changing unit 3141 selects the number-of-channels information (for example, the number of channels N1) for the country's frequency band (for example, 800-MHz band or 900-MHz band) corresponding to the country information extracted from the located area history information. As for another frequency band (for example, 1800-MHz band or 1900-MHz band that can be used by the mobile station apparatus 2021, the number-of-channels changing unit 3141 determines the number of channels (for example, the number of channels N3) that is smaller than the number-of-channels information for the country's frequency band by a predetermined value.

More specifically, it is assumed that the mobile station apparatus 2021 can use a network that employs the GSM (registered trademark) scheme. The GSM (registered trademark) scheme is not used in Japan but is used in Europe and China. Accordingly, in the case where the country information included in the located area history information represents Japan, the number of channels N3 giving a smaller value is selected, and the synchronization process is performed for each of the N3 selected channels included in the selected channel list. In the case where the user is actually located in Japan, such a synchronization process is unnecessary, and by limiting the number of to-be-selected channels to N3, the processing amount of the synchronization process is reduced.

However, there may be cases where the user has moved to the out-of-service area or moved to Europe or China after terminating the operation even if the country information represents Japan. Even in such cases, a possibility that a received signal having a high reception strength is detected and then a synchronization process is performed thereafter is left. Thus, the mobile station apparatus 2021 has chances to perform communication with the base station apparatus 2011 for which the received signal has been successfully detected and the synchronization process has been successfully performed. Here, in the case where the use environment (for example, the country information) that is not being used is obtained, an unnecessary synchronization process can be reduced further by giving the number of channels N3 which is smaller.

On the other hand, in the case where the country information included in the located area history information represents Europe, the number of channels N1 giving a larger value is selected, and the synchronization process is performed for each of the N1 selected channels. Because the synchronization process is performed on channels having weak received electrical field strengths, a possibility that the mobile station apparatus is located within the cell 2011c of the base station apparatus 2011 and becomes able to perform communication increases.

In this way, in the above-described example, by setting the number of channels on the basis of the country information, a possibility that the minimum number of channels to be subjected to the synchronization process is to be selected is left and the number of to-be-selected channels is reduced. An amount of power consumption for the synchronization process is much (for example, approximately 50-100 times) larger than that of the case where the synchronization process is not performed, that is, than that of the case where the channel selection process is performed. Accordingly, the time and power consumption for the synchronization process of the cell search can be reduced.

Next, an example of a channel selection process according to the present embodiment will be described.

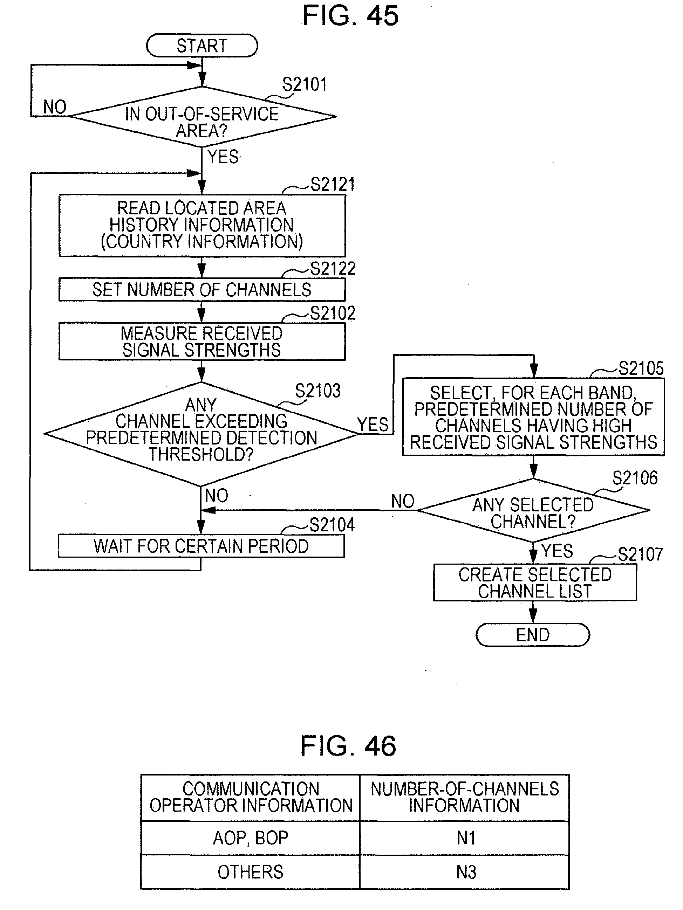

Fig. 45 is a flowchart illustrating an example of a channel selection process according to the present embodiment.

The channel selection process according to the present embodiment further includes steps S2121 and S2122 in the channel selection process illustrated in Fig. 39. Also, the case where the number of channels N1 or the like corresponding to the country information indicated by the number-of-channels correspondence information is determined for each frequency band is used as an example. Step S2121 is performed after it is determined that the mobile station apparatus is located in the out-of-service area in step S2101 (YES in S2101).

(Step S2121) The number-of-channels changing unit 3141 reads the located area history information stored in the memory unit 2215, and extracts the country information from the latest located area history information entry of the read located area history information. Then, the process proceeds to step S2122.
(Step S2122) The number-of-channels changing unit 3141 reads the number-of-channels information based on the extracted country information from the number-of-channels correspondence information stored in the memory unit 2215, and sets the read number-of-channels information in the channel processing unit 2142b. Then, the process proceeds to step S2102.

In step S2105, the channel processing unit 2142b selects as many channels as the number of channels represented by the set number-of-channels information. Note that in the case where the number of channels N1 or the like is collectively set for all usable frequency bands, the channel processing unit 2142b selects as many channels as the number of channels set for all the frequency bands in step S2105.

With this configuration, by setting the number of channels on the basis of the country information, a possibility that the minimum number of channels to be subjected to the synchronization process is to be selected is left and the number of to-be-selected channels is reduced. Accordingly, the time and power consumption for the synchronization process can be reduced.

### (Modification 6-1)

Next, a modification 6-1 of the present embodiment will be described. In the present modification, the number-of-channels changing unit 3141 determines the number-of-channels information using the communication operator information instead of the country information. Now, an example of the number-of-channels correspondence information according to the present modification will be described.

Fig. 46 is a diagram illustrating an example of the number-of-channels correspondence information according to the present modification.

In Fig. 46, the left column shows the communication operator information serving as the use environment information, and the right column shows the number-of-channels information.

The second row indicates that pieces of communication operator information AOP and BOP are associated with the number-of-channels information N1. The third row indicates that communication operator information other than AOP and BOP is associated with the number-of-channels information N3. For example, in the case where the communication operator information AOP is extracted from the located area history information, the number-of-channels changing unit 3141 (Fig. 42) sets the number of channels N1. In the case where the communication operator information other than AOP and BOP (for example, COP) is extracted from the located area history information, the number-of-channels changing unit 3141 sets the number of channels N3. In the case where no located area history information is stored, the number-of-channels changing unit 3141 also sets the number of channels N3.

Next, a channel selection process according to the present modification will be described.

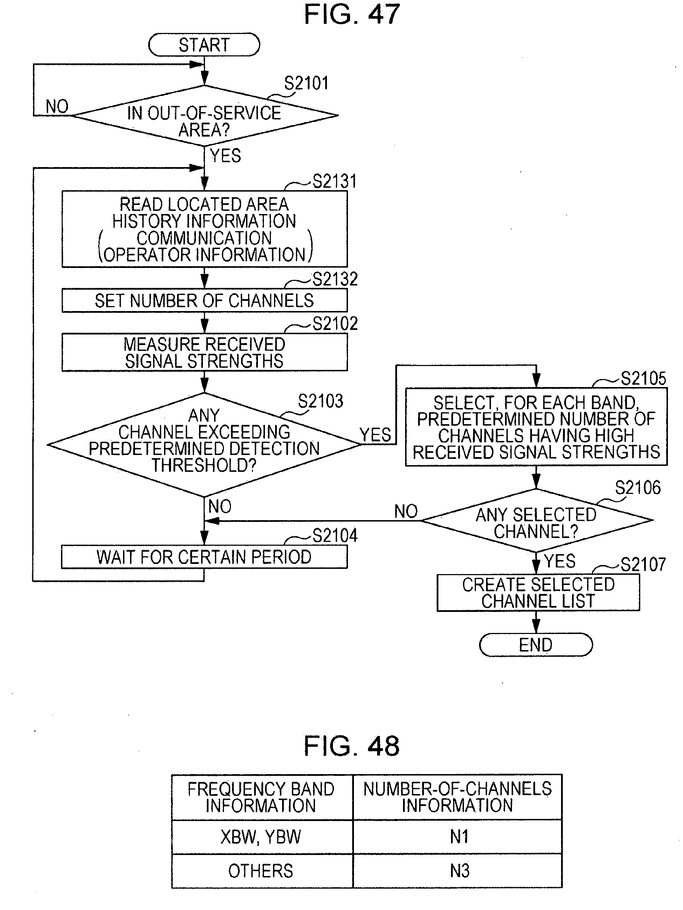

Fig. 47 is a flowchart illustrating a channel selection process according to the present modification.

The channel selection process according to the present modification includes steps S2131 and S2132 instead of steps S2121 and S2122 of the channel selection process illustrated in Fig. 45. Also, the case where the number of channels N1 or the like corresponding to the communication operator information indicated by the number-of-channels correspondence information is determined for each frequency band is used as an example. Step S2131 is performed after it is determined that the mobile station apparatus is located in the out-of-service area in step S2101 (YES in step S2101).

(Step S2131) The number-of-channels changing unit 3141 reads the located area history information stored in the memory unit 2215, and extracts the communication operator information from the latest located area history information entry of the read located area history information. Then, the process proceeds to step S2132.
(Step S2132) The number-of-channels changing unit 3141 reads the number-of-channels information based on the extracted communication operator information from the number-of-channels correspondence information stored in the memory unit 2215, and sets the read number-of-channels information in the channel processing unit 2142b. Then, the process proceeds to step S2102.

In this way, by setting the number of channels on the basis of the communication operator information, a possibility that the minimum number of channels to be subjected to the synchronization process is to be selected is left and the number of to-be-selected channels is reduced. Thus, the time and power consumption for the synchronization process that is performed after the channel selection process can be reduced.

### (Modification 6-2)

Next, a modification 6-2 of the present embodiment will be described. In the present embodiment, the number-of-channels changing unit 3141 determines the number-of-channels information using the frequency band information instead of the country information. Now, an example of the number-of-channels correspondence information according to the present modification will be described.

Fig. 48 is a diagram illustrating an example of the number-of-channels correspondence information according to the present modification.

In Fig. 48, the left column shows the frequency band information serving as the use environment information, and the right column shows the number-of-channels information.

The second row indicates that pieces of frequency band information XBW and YBW are associated with the number of channels N1. The third row indicates that frequency band information other than XBW and YBW (for example, ZBW) is associated with the number of channels N3. For example, in the case where the frequency band information XBW is extracted from the located area history information, the number-of-channels changing unit 3141 determines the number of channels N1 for the frequency band represented by the frequency band information XBW and determines the number of channels N3 for the other usable frequency bands.

Note that in the case where no located area history information is stored, the number-of-channels changing unit 3141 sets the number of channels N3.

Next, a channel selection process according to the present modification will be described.

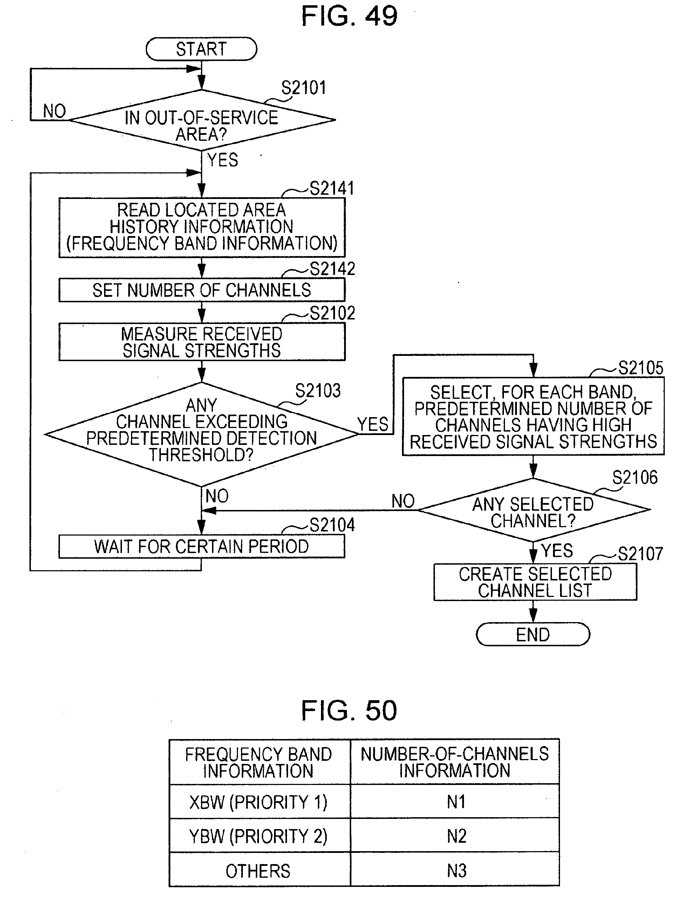

Fig. 49 is a flowchart illustrating a channel selection process according to the present modification.

The channel selection process according to the present modification includes steps S2141 and S2142 instead of steps S2121 and S2122 of the channel selection process illustrated in Fig. 45. Step S2141 is performed after it is determined in step S2101 that the mobile station apparatus is located in the out-of-service area (YES in step S2101).

(Step S2141) The number-of-channels changing unit 3141 reads the located area history information stored in the memory unit 2215, and extracts the frequency band information from the latest located area history information entry of the read located area history information. Then, the process proceeds to step S2142.
(Step S2142) The number-of-channels changing unit 3141 reads the number-of-channels information based on the extracted frequency band information from the number-of-channels correspondence information stored in the memory unit 2215, and sets the read number-of-channels information in the channel processing unit 2142b. Then, the process proceeds to step S2102.

In this way, by setting the number of channels on the basis of the frequency band information, a possibility that the minimum number of channels to be subjected to the synchronization process is to be selected is left and the number of selected channels is reduced. Thus, the time and power consumption for the synchronization process that is performed after the channel selection process can be reduced.

### (Modification 6-3)

Next, a modification 6-3 of the present embodiment will be described. In the present modification, the number-of-channels changing unit 3141 determines, for each piece of use environment information, a priority in accordance with the use state of the use environment information, and determines the number of channels such that the higher the determined priority, the more the number of channels.

The number-of-channels changing unit 3141 extracts, for example, the frequency band information as the use environment information from the located area history information read from the memory unit 2215, and counts, for each frequency band represented by the extracted frequency band information, the number of times the frequency band has been stored. Then, the number-of-channels changing unit 3141 determines, for each frequency band, a priority such that the priority becomes higher for the frequency band whose count is larger.

For example, in the case where the pieces of frequency band information XBW and YBW are included in the located area history information four times and twice, respectively, the number-of-channels changing unit 3141 determines the priority such that the priority for the frequency band information XBW becomes higher than the priority for the frequency band information YBW. Here, the priorities for the pieces of frequency band information XBW and YBW are referred to as priorities 1 and 2, respectively.

The number-of-channels changing unit 3141 reads the number-of-channels information corresponding to the determined priority from the memory unit 2215. For frequency bands except for the frequency band represented by the extracted frequency band information among the frequency bands that can be used by the mobile station apparatus 2021, the number-of-channels changing unit 3141 reads the number-of-channels information corresponding to the other priority from the memory unit 2215. Here, in the number-of-channels correspondence information pre-stored in the memory unit 2215, number-of-channels information representing a larger number of channels is associated with a higher priority. Also, for the other priority, number-of-channels information representing the smallest number of channels is associated.

Next, an example of the number-of-channels correspondence information according to the present modification will be described.

Fig. 50 is a diagram illustrating an example of the number-of-channels correspondence information according to the present modification.

In Fig. 50, the left column shows the frequency band information serving as the use environment information, and the right column shows the number-of-channels information.

The second row indicates that the number-of-channels information N1 assigned the highest priority 1 is associated with the frequency band information XBW. The third row indicates that number-of-channels information N2 assigned the next highest priority 2 is associated with the frequency band information YBW. The fourth row indicates that the number-of-channels information N3 is associated with priority information other than those for XBW and YBW. Also, as in the above-described modifications, in the case where the frequency band information is unknown, the number-of-channels information N3 is given. In this example, the number of channels is in the order of N1 > N2 > N3. By selecting a larger number of channels from a frequency band assigned a higher priority, a possibility that the synchronization process to be performed thereafter is successful is increased.

Also, the minimum number of channels N3 is selected for the frequency band assigned the lowest priority so as to limit the number of channels included in the selected channel list, whereby a possibility that the minimum number of channels to be subjected to the synchronization process is to be selected is left and the number of to-be-selected channels can be reduced. Accordingly, the time and power consumption of the synchronization process that is performed after the channel selection process can be reduced.

Next, a channel selection process according to the present modification will be described.

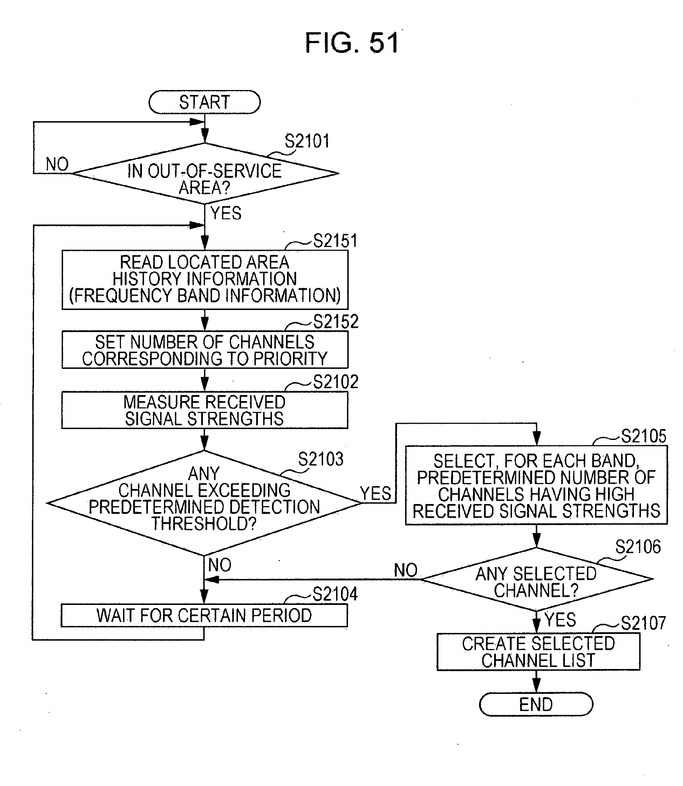

Fig. 51 is a flowchart illustrating a channel selection process according to the present modification.

The channel selection process according to the present modification includes steps S2151 and S2152 instead of steps S2141 and S2142 of the channel selection process illustrated in Fig. 49.
(Step S2151) The number-of-channels changing unit 3141 reads the located area history information stored in the memory unit 2215, and extracts the frequency band information on the basis of the read located area history information. The number-of-channels changing unit 3141 determines a priority for each piece of the extracted frequency band information. Then, the process proceeds to step S2152.
(Step S2152) The number-of-channels changing unit 3141 reads the number-of-channels information corresponding to the determined priority from the number-of-channels correspondence information stored in the memory unit 2215. For the frequency bands except for the frequency band represented by the extracted frequency band information among the frequency bands that can be used by the mobile station apparatus 2021, the number-of-channels changing unit 3141 reads the number-of-channels information corresponding to the other priority from the memory unit 2215. The number-of-channels changing unit 3141 sets the individual pieces of number-of-channels information for the usable frequency bands in the channel processing unit 2142b. Then, the process proceeds to step S2102.

The case where the priority is determined on the basis of the count which serves as the use state of each piece of the use environment information has been described above as an example; however, in the present modification, the number-of-channels changing unit 3141 may determine the priority such that the priority becomes higher as an index value representing the use state, such as a cell location duration or reception strength, instead of the count, becomes larger. To this end, the number-of-channels changing unit 3141 stores a duration over which the mobile station apparatus is located within the cell of the frequency band, the reception strength, or the like in the memory 2215 in association with the frequency band information, in the located area history information.

Alternatively, the number-of-channels changing unit 3141 may determine the priority such that the priority becomes higher for use environment information newly stored as the located area history information, for example, the newly stored frequency band information. In the case where the frequency band information of the same type is included in the located area history information twice or more than twice, the number-of-channels changing unit 3141 may ignore the frequency band information that appears more than twice.

The case where the number-of-channels changing unit 3141 determines the priority mainly for each frequency band has been described above as an example; however, in the present modification, the number-of-channels changing unit 3141 may determine the priority for the other use environment information, for example, for each country information or communication operator information.

As described above, in the present modification, the number of to-be-selected channels is set in accordance with the use state of each piece of the use environment information. In this way, a possibility that the minimum number of channels to be subjected to the synchronization process is to be selected is left and the number of channels to be selected is reduced in accordance with the use state of each piece of the use environment information, whereby the time and power consumption for the synchronization process that is performed after the channel selection process can be reduced.

As described above, in the present embodiment, as the use environment information that represents the use environment of the mobile station apparatus, the country information regarding an area in which the network is operated, the carrier information regarding a carrier that operates the network, and the frequency band information that is in operation in the network are used. In the present embodiment, the number of channels to be selected from among channels that constitute a reception wave from the base station apparatus is determined on the basis of these pieces of information, and the synchronization process is performed on a reception wave of each of the determined number of selected channels included in the selected channel list.

In this way, a possibility that the minimum number of channels to be subjected to the synchronization process is to be selected is left and the number of to-be-selected channels is reduced. Accordingly, the time and power consumption for the synchronization process that is performed after the channel selection process can be reduced.

Note that as in the fifth embodiment, in the present embodiment, the lower limit detection threshold may be preset in the memory unit 2215 and the channel processing unit 2142b may select channels having a received signal strength exceeding the present detection threshold. In such a case, the synchronization processing unit 2143b performs the synchronization process on the channels selected by the channel processing unit 2142b.

### (Seventh Embodiment)

Next, a seventh embodiment of the present invention will be described. Configurations that are the same as those of the above-described embodiments are denoted by the same reference signs, and the description is incorporated herein by reference.

A communication system 2003 (not illustrated) according to the present embodiment includes a mobile station apparatus 2024 instead of the mobile station apparatus 2021 of the communication system 2001 (Fig. 35). Now, a configuration of the mobile station apparatus 2024 will be described.

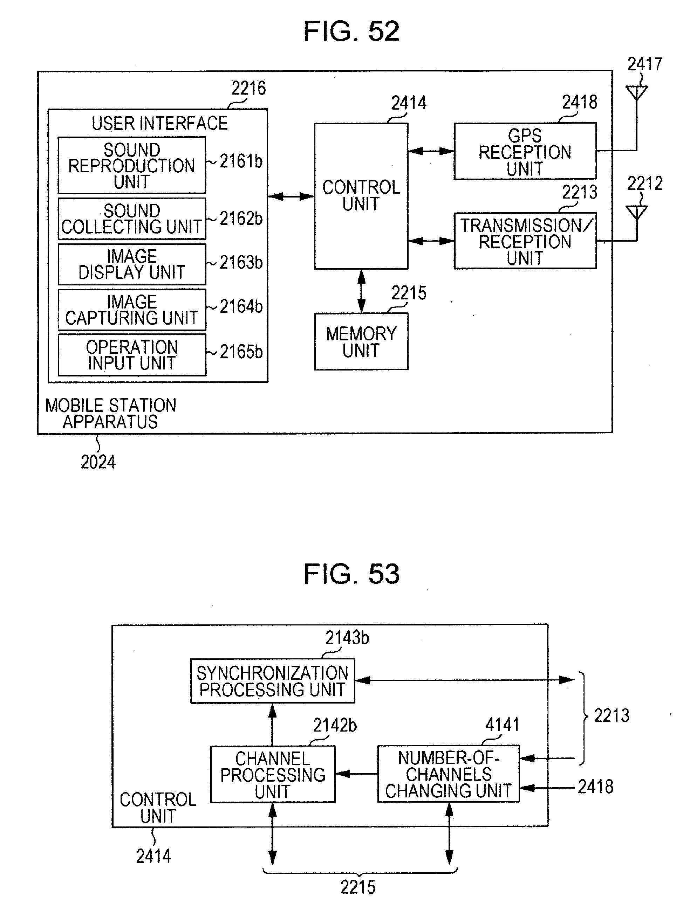

Fig. 52 is a schematic block diagram illustrating a configuration of the mobile station apparatus 2024 according to the present embodiment.

The mobile station apparatus 2024 includes the antenna 2212, the transmission/reception unit 2213, the memory unit 2215, the user interface 2216, a control unit 2414, a GPS (Global Positioning System) antenna 2417, and a GPS reception unit 2418. That is, the mobile station apparatus 2024 includes the control unit 2414 instead of the control unit 2214 of the mobile station apparatus 2021 (Fig. 36) and further includes the GPS antenna 2417 and the GPS reception unit 2418.

The GPS antenna 2417 receives a signal for determining a location (location determination signal) that has been transmitted by a GPS satellite in a form of a radio wave, and outputs the received location determination signal as an electric signal to the GPS reception unit 2418.

The GPS reception unit 2418 demodulates the location determination signal input thereto from the GPS antenna 2417, and calculates the location (for example, the latitude and longitude) of the mobile station apparatus 2024 on the basis of the demodulated location determination signal using a known method (for example, a code positioning method). The GPS reception unit 2418 generates location information that represents the calculated location, and outputs the generated location information to the control unit 2414. Accordingly, the GPS antenna 2417 and the GPS reception unit 2418 constitute a location determining unit configured to determine the location of the mobile station apparatus 2024.

Next, a configuration of the control unit 2414 according to the present embodiment will be described.

Fig. 53 is a schematic block diagram illustrating a configuration of the control unit 2414 according to the present embodiment.

The control unit 2414 includes a number-of-channels changing unit 4141, the channel processing unit 2142b, and the synchronization processing unit 2143b. That is, the control unit 2414 includes the number-of-channels changing unit 4141 in the control unit 2214 (Fig. 37).

The number-of-channels changing unit 4141 determines the number of channels on the basis of the location information input as the use environment information from the GPS reception unit 2418.

The memory unit 2215 pre-stores number-of-channels correspondence information in which the location information serving as the use environment information and number-of-channels information are associated with each other. An example of the number-of-channels correspondence information will be described later.

The number-of-channels changing unit 4141 reads the number-of-channels information corresponding to the input location information from the number-of-channels correspondence information stored in the memory unit 2215, and outputs the read number-of-channels information to the channel processing unit 2142b. In this way, the number of channels is set in the channel processing unit 2142b.

### (Example of Number-of-Channels Correspondence Information)

Next, an example of the number-of-channels correspondence information according to the present embodiment will be described.

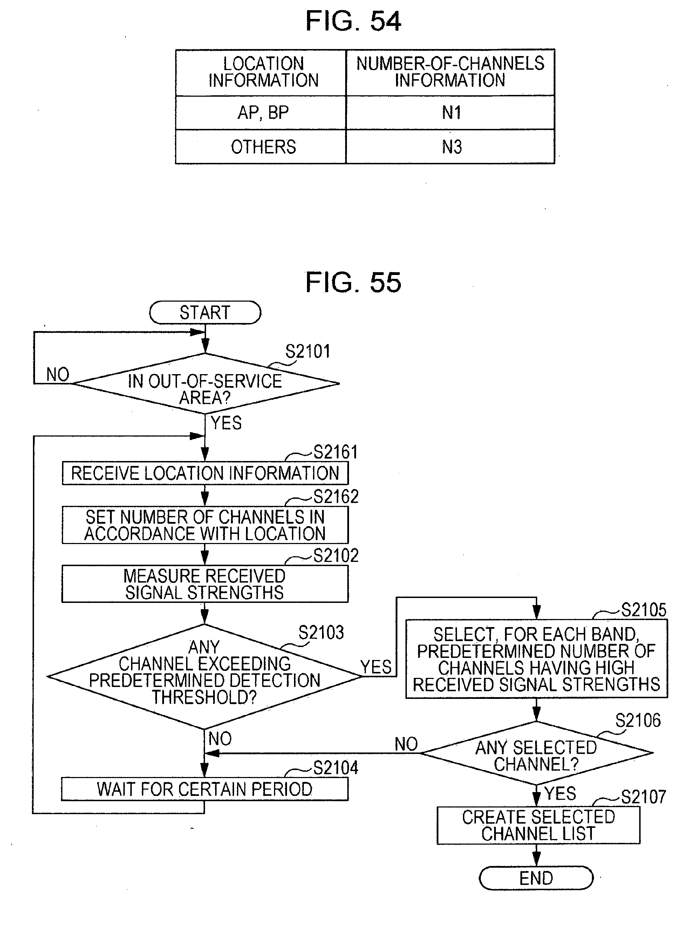

Fig. 54 is a diagram illustrating an example of the number-of-channels correspondence information according to the present embodiment.

In Fig. 54, the left column shows the location information serving as the use environment information, and the right column shows the number-of-channels information.

The second row indicates that pieces of location information AP and BP are associated with the number-of-channels information N1. The third row indicates that location information other than AP and BP is associated with the number-of-channels information N3. Accordingly, in the case where the location information AP is input from the GPS reception unit 2418, the number-of-channels changing unit 4141 sets the number-of-channels information N1. In the case where location information (for example, CP) other than the pieces of location information AP and BP is input from the GPS reception unit 2418, the number-of-channels changing unit 4141 sets the number-of-channels information N3. In the case where no location determination signal reaches an outdoor place, an underground mall, or the like from the GPS satellite, the number-of-channels changing unit 4141 also sets the number-of-channels information N3 corresponding to the other location information.

Now, it is assumed that the pieces of location information AP and BP are included in an area in which a network that can be used by the mobile station apparatus 2024 is operated and the number of channels N1 (for example, 100 channels) is larger than the number of channels N3 (for example, 10 channels).

In the case where the mobile station apparatus 2024 is located within an area in which the usable network is operated, for example, at AP, channel selection can be made more likely to be successful using a weak received signal even if the mobile station apparatus 2024 is located at a location where a radio wave is difficult to reach (for example, a remote location) from the base station apparatus 2011.

On the other hand, when the mobile station apparatus 2021 is operating in an area in which the usable network is not operated, for example, at CP, the number of channels N3 that is smaller than the number of channels N1 is selected. This can prevent the mobile station apparatus 2024 from erroneously selecting noise, for example, ambient noise or white noise, or a received signal from another system even if it detects such a signal because the number of channels is limited.

By setting a larger number of channels, channel selection can be made more likely to be successful for a frequency band used at the location. Also, for other frequency bands, by setting a smaller number of channels, erroneous selection of a received signal such as noise can be prevented. Also, by performing such control for each location, control can be performed in a more detailed manner than in the case of using the country information.

Note that in the present embodiment, in the number-of-channels correspondence information stored in the memory unit 2215, the location information may be associated with area's frequency band information which represents a frequency band used in an area including the location. In such a case, the number-of-channels changing unit 4141 selects the number-of-channels information (for example, the number of channels N1) for area's frequency band information (for example, the 800-MHz band) associated with an area including the location represented by the input location information. For other frequency bands that can be used by the mobile station apparatus 2024 (for example, a 900-MHz band, a 1800-MHz band, and a 1900-MHz band), the number-of-channels changing unit 4141 may determine the number of channels (for example, the number of channels N3) that is smaller than the number-of-channels information associated with the area including the location represented by the location information by a predetermined value.

In this way, channel selection can be made more likely to be successful for a frequency band used at the determined location. Also, for other frequency bands, erroneous selection of a received signal such as noise can be prevented.

### (Channel Selection Process)

Next, a channel selection process according to the present embodiment will be described.

Fig. 55 is a flowchart illustrating a channel selection process according to the present embodiment.

The channel selection process illustrated in Fig. 55 includes steps S2161 and S2162 in the channel selection process illustrated in Fig. 39.

Also, the case where the number of channels such as N1 corresponding to the location information represented by the number-of-channels correspondence information is determined for each frequency band will be used as an example. Step S2161 is performed after it is determined in step S2101 that the mobile station apparatus is located in the out-of-service area (YES in step S2101).
(Step S2161) The GPS reception unit 2418 calculates the location of the mobile station apparatus 2024 on the basis of the location determination signal input thereto from the GPS antenna 2417, and generates the location information representing the calculated location.
Then, the process proceeds to step S2162.
(Step S2162) The number-of-channels changing unit 4141 reads the number-of-channels information corresponding to the location information input thereto from the GPS reception unit 2418 from the number-of-channels correspondence information stored in the memory unit 2215, and sets the read number-of-channels information in the channel processing unit 2142b. Then, the process proceeds to step S2102.

In step S2105, the channel processing unit 2142b selects as many channels as the number of channels represented by the set number-of-channels information. Note that in the case where the number of channels is collectively set for all usable frequency bands, the channel processing unit 2142b selects as many channels as the number of channels set for all the frequency bands in step S2105.

Note that the case where the location information is input to the number-of-channels changing unit 4141 from the GPS reception unit 2418 every time a cell search is performed has been described above as an example; however, the present embodiment is not limited to this case. In the case where the mobile station apparatus 2023 is located in an out-of-service area of the base station apparatus 2011 for a period longer than a predetermined period, the GPS reception unit 2418 may stop outputting the location information to the number-of-channels changing unit 4141 at certain intervals. In the case where the GPS reception unit 2418 stops outputting the location information, the channel processing unit 2142b performs the channel selection process on the basis of the number-of-channels information determined using the previously input location information until the location information is output next.

Next, an example of timings of individual processes (location determination, a channel selection process, and a synchronization process) of a cell search will be described.

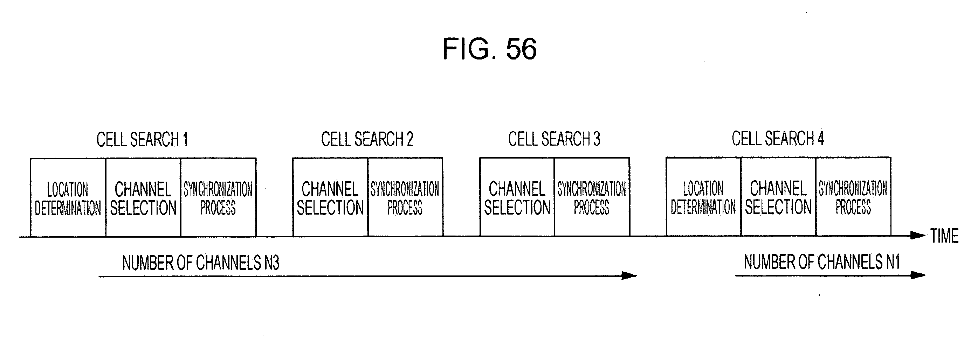

Fig. 56 is a conceptual diagram illustrating an example of timings of individual processes of a cell search.

In Fig. 56, the horizontal axis represents time, and indicates that the cell search has been performed four times. The four cell searches are referred to as, from the oldest cell search, a cell search 1, a cell search 2, a cell search 3, and a cell search 4. In this example, location determination is performed for the first cell search of every three cell searches (cell search 1, 4, ···), and location determination is not performed for the other two cell searches (cell search 2, 3, ···). In this way, the number-of-channels information (for example, the number of channels N3) is obtained on the basis of the location information obtained in location determination of the cell search 1, and the obtained number of channels N3 is used in the channel selection process of the cell searches 1-3. In this way, a selected channel list including N3 channels is created and is output to the synchronization processing unit 2143b.

Also, the number-of-channels information (for example, the number of channels N1) is obtained on the basis of new location information obtained in location re-measurement of the cell search 4, and the obtained number of channels N1 is used in the channel selection process of the cell searches 4-6. A selected channel list including N1 channels is created and is output to the synchronization processing unit 2143b.

In the example illustrated in Fig. 56, the GPS reception unit 2418 obtains and outputs the location information at a certain cell-search cycle (for example, once every three cell searches); however, the GPS reception unit 2418 may obtain and output the location information at certain time intervals (for example, 30 minutes).

As described above, in the present embodiment, by setting the number of channels on the basis of the location information, a possibility that the minimum number of channels to be subjected to the synchronization process is to be selected is left and the number of to-be-selected channels is reduced. In this way, the time and power consumption for the synchronization process that is performed after the channel selection process can be reduced.

### (Modification 7-1)

Next, a modification 7-1 of the present embodiment will be described. In the present modification, when the location information is input thereto from the GPS reception unit 2418, the number-of-channels changing unit 4141 stores the input location information in the memory unit 2215. The number-of-channels changing unit 4141 outputs the input location information to the channel processing unit 2142b. The number-of-channels changing unit 4141 may store the location information as part of the located area history information every time the input from the GPS reception unit 2418 is started. In the case where the location information is not input from the GPS reception unit 2418, the number-of-channels changing unit 4141 reads the latest location information stored in the memory unit 2215, and outputs the read location information to the channel processing unit 2142b. In this way, even if a location determination signal does not reach an outdoor place, an underground mall, or the like from a GPS satellite, the number-of-channels changing unit 4141 can determine the number of to-be-selected channels on the basis of the latest location information stored in the memory unit 2215.

Next, a channel selection process according to the present modification will be described.

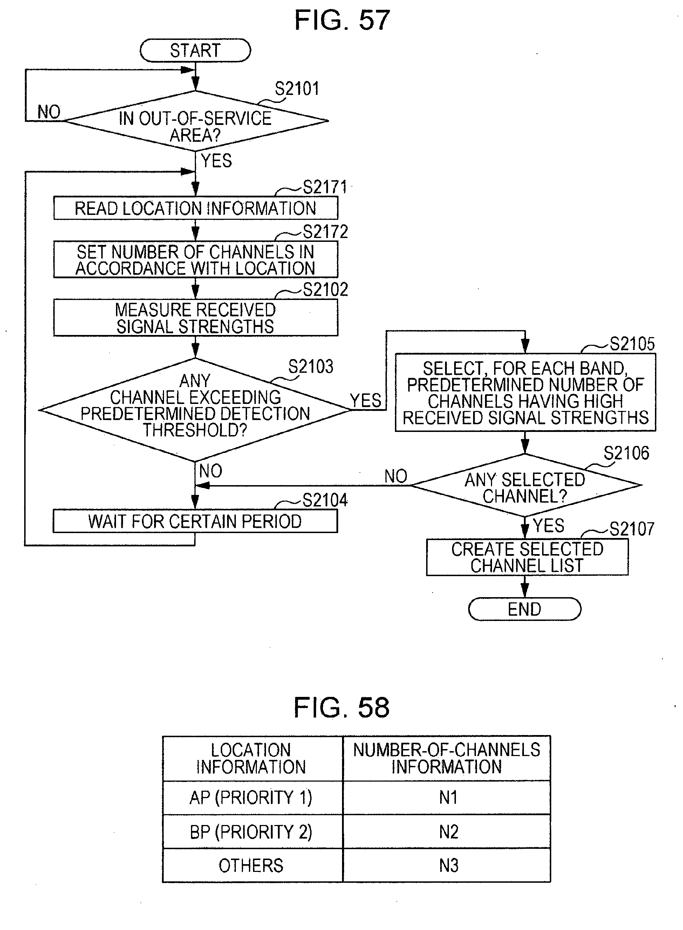

Fig. 57 is a flowchart illustrating an example of a channel selection process according to the present modification.

The channel selection process according to the present modification includes steps S2171 and S2172 instead of steps S2161 and S2162 of the channel selection process illustrated in Fig. 51.
(Step S2171) In the case where the location information is input from the GPS reception unit 2418, the number-of-channels changing unit 4141 stores the input location information in the memory unit 2215. In the case where the location information is not input from the GPS reception unit 2418, the number-of-channels changing unit 4141 reads the location information stored in the memory unit 2215. The number-of-channels changing unit 4141 extracts the latest location information entry of the read location information. Then, the process proceeds to step S2172.
(Step S2172) The number-of-channels changing unit 4141 reads the number-of-channels information corresponding to the location information input thereto from the GPS reception unit 2418 or the location information read from the memory unit 2215 from the number-of-channels correspondence information stored in the memory unit 2215, and outputs the read number-of-channels information to the channel processing unit 2142b. Then, the process proceeds to step S2102.

As described above, in the present modification, even in the case where the location information is not input from the GPS reception unit 2418, the number of channels can be set on the basis of the latest input location information.
In this way, a possibility that the minimum number of channels to be subjected to the synchronization process is to be selected is left and the number of to-be-selected channels is reduced, whereby the time or power consumption for the synchronization process that is performed after the channel selection process can be reduced.

### (Modification 7-2)

Next, a modification 7-2 of the present embodiment will be described. In the present modification, the number-of-channels changing unit 4141 determines, for each use environment information, that is, each location information, a priority in accordance with a use state thereof, and determines the number of channels such that the higher the determined priority, the larger the number of channels.

The number-of-channels changing unit 4141 counts, for each location represented by the location information read from the memory unit 2215, the number of times the location has been stored. Then, the number-of-channels changing unit 4141 determines a priority for each location information such that the priority becomes higher for a location having a larger count.

For example, in the case where the read pieces of location information AP and BP are included four times and twice, respectively, the number-of-channels changing unit 4141 determines the priority such that the priority for the location information AP becomes higher than the priority for the location information BP. Here, the priorities for the pieces of location information AP and BP are referred to as priorities 1 and 2, respectively.

The number-of-channels changing unit 4141 reads the number-of-channels information corresponding to the determined priority from the memory unit 2215. Here, in the number-of-channels correspondence information pre-stored in the memory unit 2215, number-of-channels information representing a larger number of channels is associated with a higher priority. Also, number-of-channels information representing the smallest number of channels is associated with the other priority.

Next, an example of the number-of-channels correspondence information according to the present modification will be described.

Fig. 58 is a diagram illustrating an example of the number-of-channels correspondence information according to the present modification.

In Fig. 58, the left column shows the location information serving as the use environment information, and the right column shows the number-of-channels information.

The second row indicates that the number-of-channels information N1 assigned the highest priority 1 is associated with the location information AP. The third row indicates that the number-of-channels information N2 assigned the next highest priority 2 is associated with the location information BP. The fourth row indicates that the number-of-channels information N3 is associated with priority information other than those for AP and BP. Also, as in the above-described modifications, in the case where the location information is unknown, the number-of-channels information N3 is given. In this example, the number of channels is in the order of N1 > N2 > N3. With this configuration, a possibility of detecting a weak radio wave increases for a channel included in a frequency band assigned a high priority, detection of noise or the like is avoided for a channel assigned the lowest priority, and a possibility of detecting a strong received signal from the base station apparatus is left.

The case where the number-of-channels changing unit 4141 determines the priority in accordance with the number of times each location information has been obtained has been described above as an example; however, the present modification is not limited to this example.

The number-of-channels changing unit 4141 may determine the priority in accordance with a distance from a base station, on the basis of the location information input thereto from the GPS reception unit 2418. For example, the GPS reception unit 2418 receives, from a GPS satellite, base station location information which represents the location of the base station apparatus 2011, and outputs the received base station location information to the number-of-channels changing unit 4141. The detection threshold changing unit 4141 calculates a distance from the mobile station apparatus 2024 to the base station location represented by the base station location information input thereto from the GPS reception unit 2418.

The number-of-channels changing unit 4141 may determine the priority such that the priority becomes higher as the calculated distance becomes larger so as to determine a larger number of channels.

Also, in the case where the calculated distance is smaller than a certain distance threshold, the number-of-channels changing unit 4141 may set the priority to an intermediate level (for example, the second highest level among three levels), that is, the number of channels to an intermediate level. With this configuration, even in the case where relatively small-scale base station apparatuses are densely arranged in an urban area, an underground mall, or the like, the mobile station apparatus 2024 selects only a base station apparatus having a high reception strength from among many base station apparatuses. Also, in the case where the base station location information is not input, it is estimated that the current area is an area where no usable base station apparatus is located. Thus, the number-of-channels changing unit 4141 sets the priority corresponding to the other location to the lowest level among the plurality of levels, that is, the number of channels to the smallest value.

As described above, in the present modification, the number of channels is set in accordance with the priority which is determined on the basis of the use state of each location information serving as the use environment. In this way, a possibility that the minimum number of channels to be subjected to the synchronization process is to be selected is left by setting the number of channels to be small for the location information assigned a low priority, and the time and processing amount of the synchronization process that is performed after the channel selection process can be reduced by reducing the number of to-be-selected channels.

As described above, in the present embodiment, a certain number of channels is selected from among channels that constitute a reception wave received from the mobile station apparatus, on the basis of the location information of the mobile station apparatus 2024 serving as the use environment information that represents the use environment of the mobile station apparatus 2024, and the synchronization process is performed on the selected channels.

In this way, the number of channels to be selected as targets of the synchronization process is reduced in accordance with the location information of the mobile station apparatus 2024. Accordingly, a possibility that communication can be restarted can be ensured and the processing time and power consumption for the synchronization process that is performed after the channel selection process can be reduced.

### (Eighth Embodiment)

Next, an eighth embodiment of the present invention will be described. Configurations that are the same as those of the above-described embodiments are denoted by the same reference signs, and the description is incorporated herein by reference.

A communication system 2004 (not illustrated) according to the present embodiment includes a mobile station apparatus 2025 instead of the mobile station apparatus 2021 of the communication system 2001 (Fig. 35). Now, a configuration of the mobile station apparatus 2025 will be described.

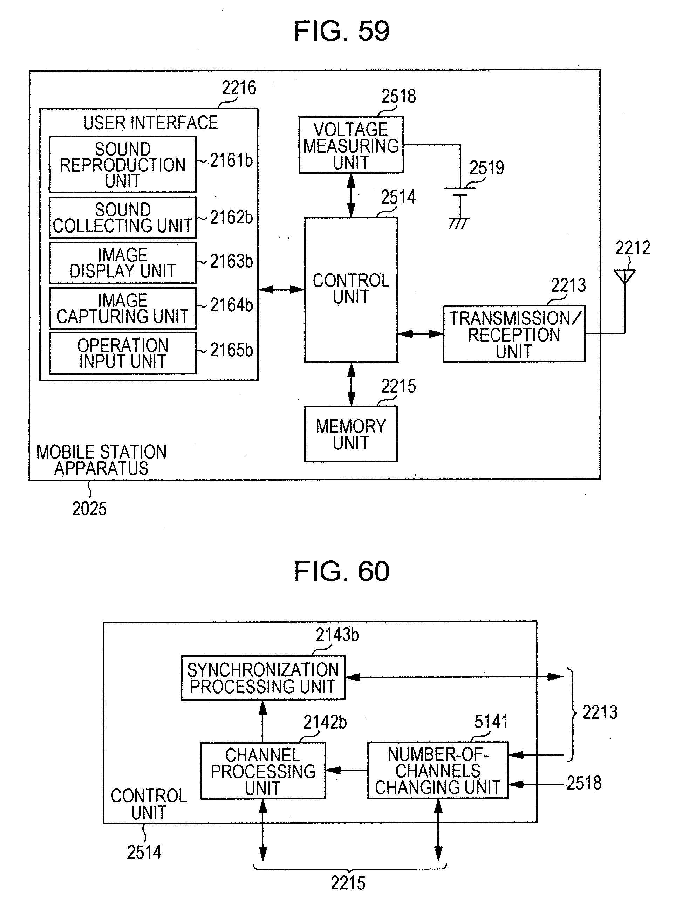

Fig. 59 is a schematic block diagram illustrating a configuration of the mobile station apparatus 2025 according to the present embodiment.

The mobile station apparatus 2025 includes the antenna 2212, the transmission/reception unit 2213, the memory unit 2215, the user interface 2216, a control unit 2514, a voltage measuring unit 2518, and a power supply 2519.
That is, the mobile station apparatus 2025 includes the control unit 2514 instead of the control unit 2214 of the mobile station apparatus 2021 (Fig. 36) and further includes the voltage measuring unit 2518 and the power supply 2519.

The voltage measuring unit 2518 measures a voltage at a positive terminal of the power supply 2519, and outputs voltage information which represents the measured voltage to a number-of-channels changing unit 5141 of the control unit 2514. The voltage measuring unit 2518 is, for example, an analog-to-digital converter (A/D converter).

The power supply 2519 supplies direct-current power necessary for operation to the individual components of the mobile station apparatus 2025, for example, the transmission/reception unit 2213, the memory unit 2215, the user interface 2216, the control unit 2514, and the voltage measuring unit 2518. The power supply 2519 is a secondary battery that is rechargeable, and is, for example, a lithium-ion battery. The power supply 2519 includes a positive terminal and a negative terminal. The positive terminal is connected to the voltage measuring unit 2518. The negative terminal is grounded.

Next, a configuration of the control unit 2514 according to the present embodiment will be described.

Fig. 60 is a schematic block diagram illustrating a configuration of the control unit 2514 according to the present embodiment.

The control unit 2514 includes the number-of-channels changing unit 5141, the channel processing unit 2142b, and the synchronization processing unit 2143b. That is, the control unit 2514 includes the number-of-channels changing unit 5141 in the control unit 2214 (Fig. 37).

The number-of-channels changing unit 5141 determines the number of channels on the basis of the voltage information input thereto as the use environment information from the voltage measuring unit 2518.

The memory unit 2215 pre-stores number-of-channels correspondence information in which the voltage information serving as the use environment information and the number-of-channels information are associated with each other. An example of the number-of-channels correspondence information will be described later.

The number-of-channels changing unit 5141 reads number-of-channels information corresponding to the input voltage information from the number-of-channels correspondence information stored in the memory unit 2215, and outputs the read number-of-channels information to the channel processing unit 2142b. In this way, the number of channels is set in the channel processing unit 2142b.

### (Example of Number-of-Channels Correspondence Information)

Next, an example of the number-of-channels correspondence information according to the present embodiment will be described.

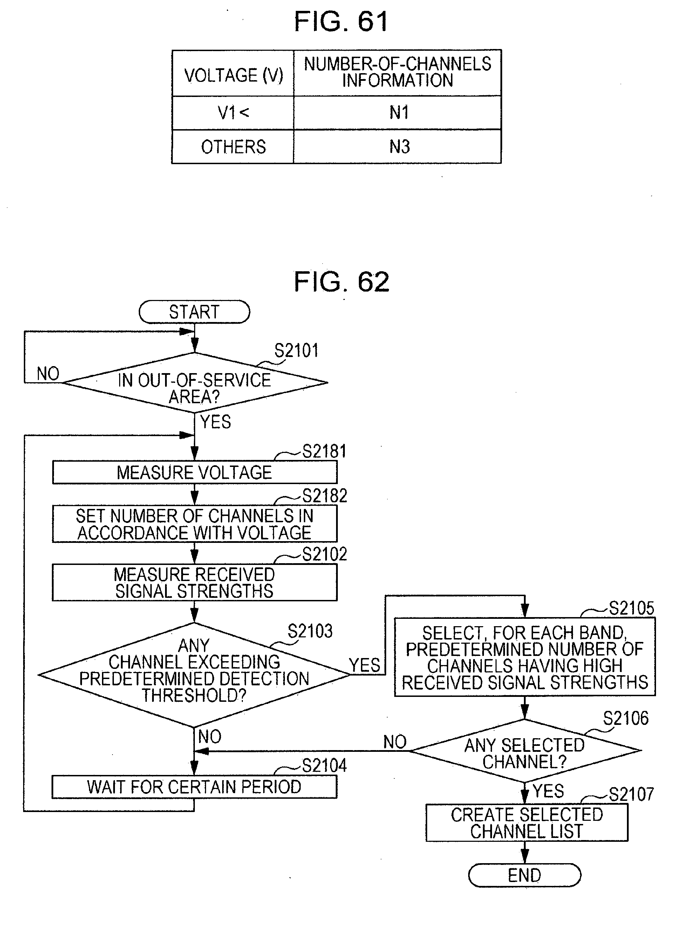

Fig. 61 is a diagram illustrating an example of the number-of-channels correspondence information according to the present embodiment.

In Fig. 61, the left column shows the voltage information serving as the use environment information, and the right column shows the number-of-channels information.

The second row indicates that voltages exceeding a predetermined voltage V1 (for example, 3.7 V) are associated with the number-of-channels information N1. The third row indicates that other voltages, that is, voltages equal to the voltage V1 or lower than the voltage V1, are associated with the number-of-channels information N3. In the case where the voltage information representing a voltage (for example, 4.0 V) higher than the voltage V1 is input from the voltage measuring unit 2518, the number-of-channels changing unit 2541 sets the number-of-channels information N1. In the case where the voltage information representing a voltage (for example, 3.4 V) that is equal to the voltage V1 or lower than the voltage V1 is input from the voltage measuring unit 2518, the number-of-channels changing unit 2541 sets the number-of-channels information N3.

Here, a voltage that is high enough for the mobile station apparatus 2024 to operate is preset as the voltage V1 and the number-of-channels information N1 (for example, 100 channels) is set to have a value larger than that of the number-of-channels information N3 (for example, 10). In the case where voltage information representing a voltage higher than the voltage V1 is input from the voltage measuring unit 2518, that is, in the case where a remaining amount of electric charges stored in the power supply 2519 is sufficient, the number-of-channels information N1 is set so as to allow more channels to be selected and make a cell search be more likely to be successful. On the other hand, voltage information representing a voltage equal to the voltage V1 or lower than the voltage V1 is input from the voltage measuring unit 2518, that is, in the case where a remaining amount of electric charges stored in the power supply 2519 is insufficient, the number-of-channels information N3 is set so as to allow only the minimum number of channels to be selected and to suppress power consumption for the synchronization process without completely eliminating the possibility of the synchronization process.

Next, a channel selection process according to the present embodiment will be described.

Fig. 62 is a flowchart illustrating a channel selection process according to the present embodiment.

The channel selection process according to the present embodiment includes steps S2181 and S2282 instead of steps S2101 and S2102 of the channel selection process illustrated in Fig. 41. Also, the case where the number of channels such as N1 corresponding to the voltage information represented by the number-of-channels correspondence information is determined for each frequency band will be used as an example. Step S2181 is performed after it is determined in step S2101 that the mobile station apparatus is located in the out-of-service area (YES in step S2101).
(Step S2181) The voltage measuring unit 2518 measures a voltage at the positive terminal of the power supply 2519, and outputs voltage information representing the measured voltage to the number-of-channels changing unit 5141. Then, the process proceeds to step S2182.
(Step S2182) The number-of-channels changing unit 5141 reads the number-of-channels information corresponding to the voltage information input thereto from the voltage measuring unit 2518 from the number-of-channels correspondence information stored in the memory unit 2215, and outputs the read number-of-channels information to the channel processing unit 2142b. Then, the process proceeds to step S2102.

In step S2105, the channel processing unit 2142b selects as many channels as the number of channels represented by the set number-of-channels information. Note that in the case where the number of channels is collectively set for all usable frequency bands, the channel processing unit 2142b selects as many channels as the number of channels set for all the frequency bands in step S2105.

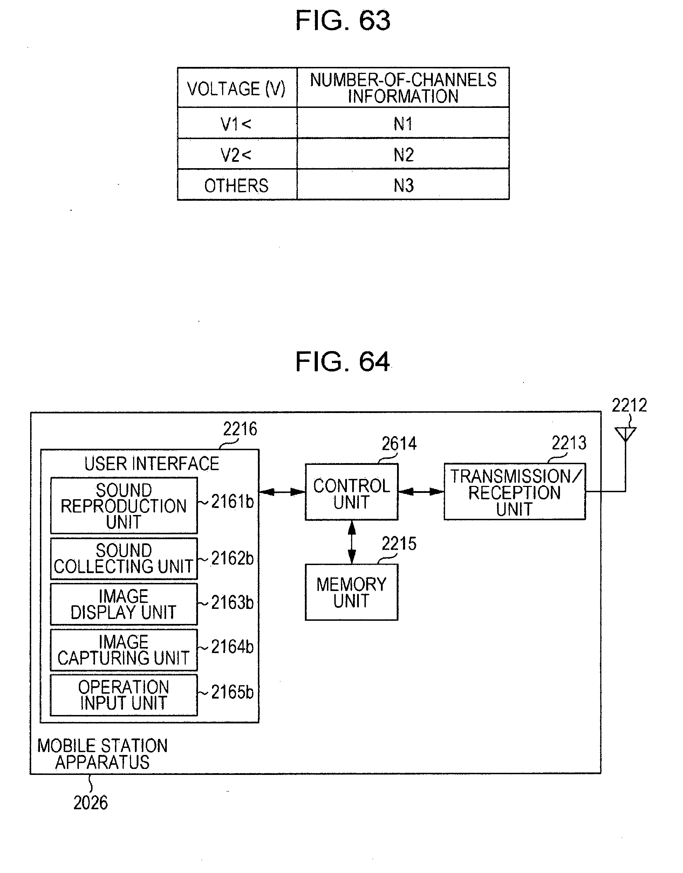

Fig. 63 is a diagram illustrating another example of the number-of-channels correspondence information according to the present embodiment.

In Fig. 63, the left column shows the voltage information serving as the use environment information, and the right column shows the number-of-channels information. The second row of Fig. 63 indicates that if a voltage represented by the voltage information is higher than the voltage V1, the voltage is associated with the number-of-channels information N1. The third row of Fig. 63 indicates that if a voltage represented by the voltage information is higher than a voltage V2 and is equal to the voltage V1 or lower than the voltage V1, the voltage is associated with the number-of-channels information N2. The fourth row of Fig. 63 indicates that if a voltage represented by the voltage information is equal to the voltage V2 or lower than the voltage V2, the voltage is associated with the number-of-channels information N3. Here, the pieces of number-of-channels information represent values that are in the order of N1 > N2 > N3.

Note that the case where the number of channels is set in accordance with the voltage (remaining amount) of the power supply 2519 has been described above; however, the present embodiment is not limited to this case. The number-of-channels changing unit 5141 may set the number of channels in accordance with a power consumption mode of the power supply 2519. For example, in the case where the mobile station apparatus 2025 is operating in a power-saving mode, the number-of-channels changing unit 5141 may sets the number of channels (for example, 10 channels) that is smaller than that (for example, 100 channels) of the case where the mobile station apparatus 2025 is operating in the normal operation mode. The power-saving mode is an operation mode in which power consumption is reduced by omitting some of functions of the normal operation mode, decreasing the performance, or doing both of the above. The power-saving mode is also referred to as a power reduction mode. With this configuration, when the mobile station apparatus 2025 is operating in the power-saving mode, an amount of power consumption of the synchronization process can be saved.

As described above, in the present embodiment, a smaller number of channels can be set as the voltage of the power supply 2519, that is, the remaining amount of electric charges stored in the power supply 2519, becomes smaller. In this way, when the remaining amount becomes small, a possibility that the minimum number of channels to be subjected to the synchronization process is to be selected is left and the number of to-be-selected channels is reduced, whereby the time and power consumption for the synchronization process that is performed after the channel selection process can be reduced.

As described above, a certain number of channels are selected from channels that constitute a reception wave received from the mobile station apparatus, on the basis of the voltage of the power supply included in the mobile station apparatus 2025 serving as the use environment information that represents the use environment of the mobile station apparatus 2025, and the synchronization process is performed on the selected channels.

In this way, the number of channels to be selected as targets of the synchronization process is reduced in accordance with the voltage of the power supply, a possibility that communication can be restarted can be ensured, and the processing time and power consumption for the synchronization process that is performed after the channel selection process can be reduced.

### (Ninth Embodiment)

Next, a ninth embodiment of the present invention will be described. Configurations that are the same as those of the above-described embodiments are denoted by the same reference signs, and the description is incorporated herein by reference.

A communication system 2005 (not illustrated) according to the present embodiment includes a mobile station apparatus 2026 instead of the mobile station apparatus 2021 of the communication system 2001 (Fig. 35). Now, a configuration of the mobile station apparatus 2026 will be described.

Fig. 64 is a schematic block diagram illustrating a configuration of the mobile station apparatus 2026 according to the present embodiment.

The mobile station apparatus 2026 includes the antenna 2212, the transmission/reception unit 2213, the memory unit 2215, the user interface 2216, and a control unit 2614. That is, the mobile station apparatus 2026 includes the control unit 2614 instead of the control unit 2214 of the mobile station apparatus 2021 (Fig. 36).

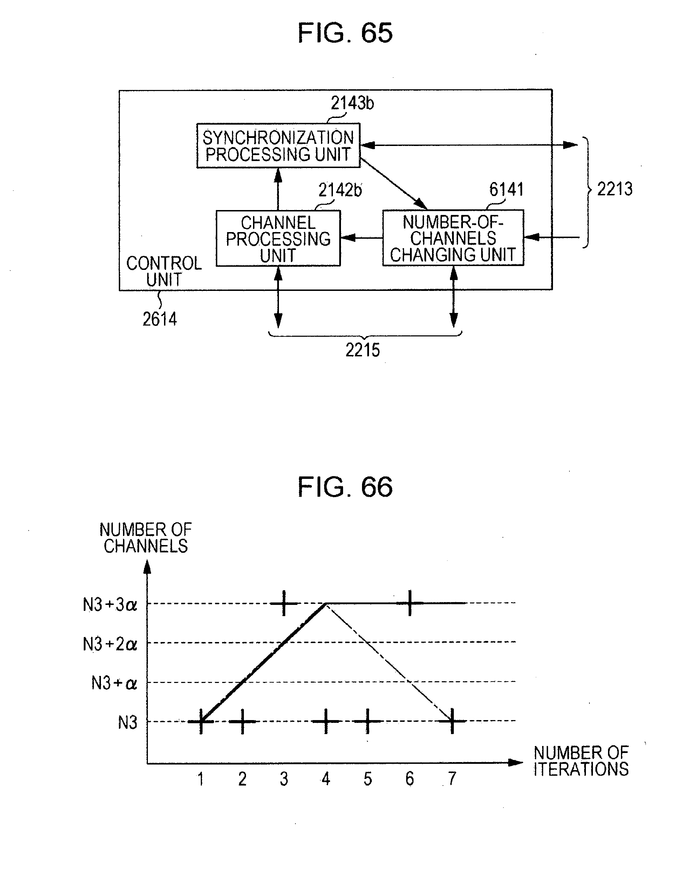

Fig. 65 is a schematic block diagram illustrating a configuration of the control unit 2614 according to the present embodiment.

The control unit 2614 includes a number-of-channels changing unit 6141, the channel processing unit 2142b, and the synchronization processing unit 2143b. That is, the control unit 2614 includes the number-of-channels changing unit 6141 in the control unit 2214 (Fig. 37).

The number-of-channels changing unit 6141 updates the number of channels determined for each use environment information in accordance with the number of times the cell search has been performed or a duration of the state in which the mobile station apparatus 2026 is unable to perform communication after being located in an out-of-service area of the cell 2011c or the like. This duration is hereinafter referred to as an out-of-service duration.

The number-of-channels changing unit 6141 counts the number of iterations of the cell search performed by the synchronization processing unit 2143b. Here, the number-of-channels changing unit 6141 increases (increments) the number of iterations of the cell search by one every time step S2119 (Fig. 40) is finished, for example. Note that the initial value of the number of iterations of the cell search is 1.

In the case where the number of iterations of the cell search is 1, the number-of-channels changing unit 6141 presets the number of channels in the same manner as the channel processing unit 2142b (Fig. 37). The present embodiment is not limited to this case, and the number-of-channels changing unit 6141 determines the number of channels in the same manner as the number-of-channels changing unit 3141 (Fig. 42), 4141 (Fig. 53), or 5141 (Fig. 60).

Note that in the case where the number of iterations of the cell search is more than 1, the number-of-channels changing unit 6141 increases, for example, the already determined number of channels by a predetermined amount of change α (for example, 5 channels) immediately after step S2102 (Fig. 39). In this way, the number of channels is increased by α every time the number of iterations of the cell search is increased by one. The number-of-channels changing unit 6141 may repeatedly perform the process for increasing the number of channels until the number of channels reaches a predetermined upper limit (for example, 200 channels) or the number of iterations reaches a predetermined number of iterations (for example, four times).

After the mobile station apparatus 2021 (Fig. 36) is located in an out-of-service area of the cell 2011c or the like, the cell search is repeatedly performed without updating of the located area history information indicating that the user has not moved, and the power may be unnecessarily consumed. In contrast, by increasing the number of channels in accordance with the number of iterations of the cell search or the out-of-service duration as in the mobile station apparatus 2026, an effective channel can be detected from a larger number of channels.

Next, an example of how the number-of-channels information according to the present embodiment is changed will be described.

Fig. 66 is a diagram illustrating an example of how the number-of-channels information according to the present embodiment is changed.

In Fig. 66, the horizontal axis represents the number of iterations of the cell search, and the vertical axis represents the number of channels.

In Fig. 66, a solid line indicates that the initial value of the number of channels is N3, and after the number of channels has reached the predetermined upper limit of N3+3α (or the number of iterations has reached four times), the number-of-channels changing unit 6141 maintains the number of channels without changing it.

In Fig. 66, a dot-and-dash line indicates that the initial value of the number of channels is N3, and after the number of channels has reached the predetermined upper limit of N3+3α (or the number of iterations has reached four times), the number-of-channels changing unit 6141 decreases the number of channels by the predetermined amount of change α at each iteration of the cell search. In this case, the number-of-channels changing unit 6141 may repeatedly perform the process for decreasing the number of channels. In this way, in the case where the user has moved to a location where the reception strength of a received signal from the base station apparatus 2011 is strong, selection of an unnecessary channel is avoided and the operation time and power consumption for the synchronization process that is performed after the channel selection process can be reduced.

Alternatively, the number-of-channels changing unit 6141 may determine the number of channels at every iteration such that the upper limit appears at least once at a certain cycle of the number of iterations of the cell search (for example, once every four cell searches). In the example illustrated in Fig. 66, during a cycle composed of three iterations as indicated by + symbols, the number of channels is determined to be N3 at the first and second iterations, and the number of channels is determined to be N3+3α at the third iteration. Note that, the number-of-channels changing unit 6141 may determine the cycles of the number of iterations at which the number of channels is determined to be the upper limit at random at a predetermined probability (for example, 1/4). With this configuration, the processing time and power consumption are reduced as a whole, and it is ensured that a channel is more likely to be detected.

Note that the case where the number-of-channels changing unit 6141 changes the number of channels at each iteration of the cell search has been described above as an example; however, the number of channels may be changed every time the out-of-service duration reaches a multiple of a certain time interval (for example, 10 minutes), instead of on the basis of the number of iterations. For example, in the case where the number-of-channels changing unit 6141 determines the number of channels to be N3 at the time when the mobile station apparatus 2026 has exited to the out-of-service area of the cell 2011c, the number-of-channels changing unit 6141 may determine the number of channels to be N3+α, N3+2α, N3+3α, N3+3α, N3+3α, N3+3α, and N3+3α after 10 minutes, 20 minutes, 30 minutes, 40 minutes, 50 minutes, 60 minutes, and 70 minutes have passed as indicated by the solid line in Fig. 66, respectively. Alternatively, the number-of-channels changing unit 6141 may determine the number of channels at certain time intervals as indicated by the dot-and-hash line or + symbols in Fig. 66.

The case where the number-of-channels changing unit 6141 changes the number of channels over the entire band in accordance with the number of times the cell search has been performed or the out-of-service duration has been described above as an example; however, the present embodiment is not limited to this case. In the present embodiment, the number of channels may be changed for a predetermined frequency band or a frequency band represented by frequency band information included in the located area history information. The case where the number-of-channels changing unit 6141 includes a configuration for updating the number of channels that is determined for each use environment information in accordance with the number of iterations of the cell search or the out-of-service duration in the control unit 2214 (Fig. 37) has been described an example above; however, the present embodiment is not limited to this case. The number-of-channels changing unit 6141 may include the configuration for updating the number of channels that is determined for each use environment information in accordance with the number of iterations of the cell search or the out-of-service duration described above in addition to the configuration of the number-of-channels changing unit 3141 (Fig. 43), 4141 (Fig. 53), or 5141 (Fig. 60).

As described above, in the present embodiment the number of channels is changed in accordance with the number of times the synchronization process has been performed or the duration over which the mobile station apparatus is located outside of the area over which a radio wave reaches from the base station apparatus. As a result of changing the number of channels, the number of channels selected in the channel selection process is reduced, whereby the processing time and power consumption for the synchronization process that is performed after the channel selection process can be reduced.

Also, the case where the number-of-channels correspondence information used by the number-of-channels changing unit 3141 (Fig. 43), 4141 (Fig. 53), 5141 (Fig. 60), or 6141 (Fig, 65) to determine the number of channels includes pieces of number-of-channels information representing two or three values of the number of channels has been described as example in the above-described embodiments; however, the configuration is not limited to this case. In the above-described embodiments, the number-of-channels correspondence information may include pieces of number-of-channels information representing multiple values more than three, for example, four values of the number of channels.

The above-described embodiments can be carried out in the following aspects.
(1B) A mobile station apparatus including: a channel processing unit configured to select a predetermined number of channels from among channels that constitute a reception wave received from a base station apparatus, on the basis of use environment information that represents a use environment of the mobile station apparatus; and a synchronization processing unit configured to perform a synchronization process on the channels selected by the channel processing unit.

(2B) The mobile station apparatus according to (1B), wherein the use environment information represents a reception strength of each of the channels that constitute the reception wave.

(3B) The mobile station apparatus according to (2B), wherein the channel processing unit is configured to select a channel having a reception strength exceeding a predetermined detection threshold.

(4B) The mobile station apparatus according to any of (1B) to (3B), wherein the channel processing unit is configured to select a predetermined number of channels for each frequency band of the reception wave.

(5B) The mobile station apparatus according to (1B), wherein the use environment information includes country information regarding an area in which a network connected to the base station apparatus is operated, and the mobile station apparatus further includes: a number-of-channels changing unit configured to change the number of channels to be selected by the channel processing unit, on the basis of the country information.

(6B) The mobile station apparatus according to (1B), wherein the use environment information includes carrier information regarding a carrier that operates a network connected to the base station apparatus, and the mobile station apparatus further includes: a number-of-channels changing unit configured to change the number of channels to be selected by the channel processing unit, on the basis of the carrier information.

(7B) The mobile station apparatus according to (1B), wherein the use environment information includes frequency band information that represents a frequency band that is in operation in a network connected to the base station apparatus, and the mobile station apparatus further includes: a number-of-channels changing unit configured to change the number of channels to be selected by the channel processing unit, on the basis of the frequency band information.

(8B) The mobile station apparatus according to (1B), wherein the use environment information includes location information of the mobile station apparatus, and the mobile station apparatus further includes: a number-of-channels changing unit configured to change the number of channels to be selected by the channel processing unit, on the basis of the location information.

(9B) The mobile station apparatus according to (1B), further including: a voltage measuring unit configured to measure a voltage of a power supply of the mobile station apparatus, wherein the use environment information includes voltage information that represents the voltage measured by the voltage measuring unit, and the mobile station apparatus further includes: a number-of-channels changing unit configured to change the number of channels to be selected by the channel processing unit, on the basis of the voltage information.

(10B) The mobile station apparatus according to any of (1B) to (9B), including: a storage unit configured to store history information regarding a history of the use environment information, wherein the channel processing unit is configured to change the number of channels in accordance with individual use states of a plurality of pieces of the use environment information stored in the history information.

(11B) The mobile station apparatus according to any of (1B) to (10B), wherein the channel processing unit is configured to change the number of channels in accordance with the number of times the synchronization processing unit has performed the synchronization process or a duration over which the mobile station apparatus is located outside an area over which a radio wave reaches from the base station apparatus.

(12B) An integrated circuit included in a mobile station apparatus, including: a member that executes a channel processing step of selecting a predetermined number of channels from among channels that constitute a reception wave received from a base station apparatus, on the basis of use environment information that represents a use environment of the mobile station apparatus; and a member that executes a synchronization processing step of performing a synchronization process on the channels selected in the channel processing step.

(13B) A communication method for a mobile station apparatus, including: a channel processing step of selecting a predetermined number of channels from among channels that constitute a reception wave received from a base station apparatus, on the basis of use environment information that represents a use environment of the mobile station apparatus; and a synchronization processing step of performing a synchronization process on the channels selected in the channel processing step.

(14B) A communication program causing a computer of a mobile station apparatus to execute: a channel processing step of selecting a predetermined number of channels from among. channels that constitute a reception wave received from a base station apparatus, on the basis of use environment information that represents a use environment of the mobile station apparatus; and a synchronization processing step of performing a synchronization process on the channels selected in the channel processing step.

According to the aspect of (1B), (12B), (13B), or (14B), the number of channels selected as targets of the synchronization process is reduced in accordance with the use environment of the mobile station apparatus. Accordingly, a possibility that communication can be restarted can be ensured and the processing time and power consumption for the synchronization process of a cell search can be reduced.
According to the aspect of (2B), the number of channels is reduced on the basis of the reception strength in (1B). According to the aspect of (3B), a channel having a reception strength higher than the detection threshold is selected in (1B), and thus the processing time and power consumption for processing of a channel having a reception strength lower than the predetermined detection threshold can be omitted. According to the aspect of (4B), the number of channels is reduced in accordance with the frequency band of the reception wave.
According to the aspect of (5B), the number of channels is reduced in accordance with the country in which the network is operated in (1B).
According to the aspect of (6B), the number of channels is reduced in accordance with the carrier that operates the network in (1B).
According to the aspect of (7B), the number of channels is reduced in accordance with the frequency band that is in operation in the network in (1B).
According to the aspect of (8B), the number of channels is reduced in accordance with the location of the mobile station apparatus in (1B).
According to the aspect of (9B), the number of channels is reduced in accordance with the voltage of the power supply of the mobile station apparatus in (1B).
According to the aspect of (10B), the number of channels is reduced in accordance with individual use states of the plurality of use environments of the mobile station apparatus in any of (1B) to (9B).
According to the aspect of (11B), the number of channels is reduced in accordance with the number of iterations of the synchronization process or the duration over which the mobile station apparatus is located in the out-of-service area in any of (1B) to (10B).

Note that part of the mobile station apparatus 1021, 1022, 1023, 1024, 1025, 2021, 2022, 2023, 2024, 2025, or 2026, for example, the control unit 1214, 1234, 1244, 1254, 2214, 2314, 2414, 2514, or 2614, in the above-described embodiments may be realized with a computer. In this case, a program for realizing these control functions may be recorded on a computer-readable recording medium, and the mobile station apparatus may be realized by causing a computer system to read and execute the program recorded on the recording medium. Note that the "computer system" referred to here is a computer system built into the mobile station apparatus 1021, 1022, 1023, 1024, 1025, 2021, 2022, 2023, 2024, 2025, or 2026, and it is assumed to include an OS and hardware such as peripheral devices.
In addition, the "computer-readable recording medium" refers to a portable medium such as a flexible disk, a magnetooptical disc, ROM, CD-ROM, or the like, or a storage device such as a hard disk built into the computer system. Further, the "computer-readable recording medium" may also encompass media that briefly or dynamically retain the program, such as a communication line in the case where the program is transmitted via a network such as the Internet or a communication channel such as a telephone line, as well as media that retain the program for a given period of time, such as a volatile memory inside the computer system acting as a server or client in the above case. Moreover, the above-described program may be for realizing part of the functions discussed earlier, and may also realize the functions discussed earlier in combination with programs already recorded in the computer system.

Alternatively, part or all of the mobile station apparatus 1021, 1022, 1023, 1024, 1025, 2021, 2022, 2023, 2024, 2025, or 2026 in the above-described embodiments may also be realized as an integrated circuit such as an LSI. The respective function blocks of 1021, 1022, 1023, 1024, 1025, 2021, 2022, 2023, 2024, 2025, or 2026 may be realized as individual processors, or part or all thereof may be integrated into a single processor. Furthermore, the circuit integration methodology is not limited to LSI and may also be realized with dedicated circuits or general processors. In addition, if progress in semiconductor technology yields integrated circuit technology that may substitute for LSI, an integrated circuit according to that technology may also be used. At least part of the above-described user interface 1216 or 2216, that is, any of the sound reproduction unit, the sound collecting unit, the image display unit, the image capturing unit, and the operation input unit, or any given combinations of the above, or all of the above may be omitted from the integrated circuit.

While embodiments of this invention has been described in detail above with reference to the drawings, specific configurations are not limited to those described above, and various design changes and the like can be made within a scope that does not depart from the gist of the present invention.

### Industrial Applicability

One aspect of the present invention is applicable to a mobile station apparatus, an integrated circuit, a communication method, and a communication program that are required to reduce the processing time and power consumption related to a cell search.

### Reference Signs List

1001, 1002, 1003, 1004 ··· communication system, 1011, 1012 ··· base station apparatus, 1021, 1022, 1023, 1024, 1025 ··· mobile station apparatus, 1212 ··· antenna, 1213 ··· transmission/reception unit, 1214, 1234, 1244, 1254 ··· control unit, 2141a, 2341a, 2441a, 2541a ··· detection threshold changing unit, 2142a ··· channel processing unit, 2143a ··· synchronization processing unit, 1215 ··· memory unit, 1216 ··· user interface, 1232 ··· GPS antenna, 1233 ··· GPS reception unit, 1248 ··· voltage measuring unit, 1249 ··· power supply, 2001, 2002, 2003, 2004, 2005 ··· communication system, 2011, 2012 ··· base station apparatus, 2021, 2022, 2023, 2024, 2025, 2026 ··· mobile station apparatus, 2212 ··· antenna, 2213 ··· transmission/reception unit, 2214, 2314, 2414, 2514, 2614 ··· control unit, 3141, 4141, 5141, 6141 ··· number-of-channels changing unit, 2142b ··· channel processing unit, 2143b ··· synchronization processing unit, 2215 ··· memory unit, 2216 ··· user interface, 2161b ··· sound reproduction unit, 2162b ··· sound collecting unit, 2163b ··· image display unit, 2164b ··· image capturing unit, 2165b ··· operation input unit, 2417 ··· GPS antenna, 2418 ··· GPS reception unit, 2518 ··· voltage measuring unit, 2519 ··· power supply

## Claims

1. A mobile station apparatus comprising:
a use environment information receiving unit configured to receive use environment information that represents a use environment of the mobile station apparatus; and
a synchronization processing unit configured to perform a synchronization process on a reception wave from a base station apparatus, wherein
in a state where the mobile station apparatus is unable to receive a radio wave from the base station apparatus, a time taken by the synchronization processing unit when attempting the synchronization process is reduced on the basis of the use environment information previously received by the use environment information receiving unit.

2. The mobile station apparatus according to Claim 1, further comprising: a reception level measuring unit configured to measure a reception level at a predetermined frequency, wherein
a time taken by the synchronization processing unit when attempting the synchronization process is reduced on the basis of the reception level measured by the reception level measuring unit and the use environment information.

3. The mobile station apparatus according to Claim 2, wherein a time taken when attempting the synchronization process is reduced by attempting the synchronization process only in a case where the reception level measured by the reception level measuring unit is larger than a threshold set on the basis of the use environment information.

4. The mobile station apparatus according to Claim 2, wherein a time taken when attempting the synchronization process is reduced by attempting the synchronization process only on the number of channels that is set on the basis of the use environment information in descending order of the reception level measured by the reception level measuring unit.

5. An integrated circuit in a mobile station apparatus, executing:
a use environment information receiving step of receiving use environment information that represents a use environment of the mobile station apparatus; and
a synchronization processing step of performing a synchronization process on a reception wave from a base station apparatus, wherein
in a state where the mobile station apparatus is unable to receive a radio wave from the base station apparatus, a time taken when attempting the synchronization process in the synchronization processing step is reduced on the basis of the use environment information previously received in the use environment information receiving step.

6. A communication method for a mobile station apparatus, comprising:
a use environment information receiving step of receiving use environment information that represents a use environment of the mobile station apparatus; and
a synchronization processing step of performing a synchronization process on a reception wave from a base station apparatus, wherein
in a state where the mobile station apparatus is unable to receive a radio wave from the base station apparatus, a time taken when attempting the synchronization process in the synchronization processing step is reduced on the basis of the use environment information previously received in the use environment information receiving step.

7. A communication program causing a computer of a mobile station apparatus to execute:
a use environment information receiving step of receiving use environment information that represents a use environment of the mobile station apparatus; and
a synchronization processing step of performing a synchronization process on a reception wave from a base station apparatus, wherein
in a state where the mobile station apparatus is unable to receive a radio wave from the base station apparatus, a time taken when attempting the synchronization process in the synchronization processing step is reduced on the basis of the use environment information previously received in the use environment information receiving step.
